# EUROPEAN PATENT SPECIFICATION

(11) **EP 2 473 457 B1**
(45) Date of publication and mention of the grant of the patent: **08.10.2014**
(21) Application number: 10745242.7
(22) Date of filing: 20.08.2010
(51) Int. Cl.: C04B 24/30, C08G 12/40

(54) **FORMULATION AND ITS USE**
FORMULIERUNG UND IHRE VERWENDUNG
FORMULATION ET SON UTILISATION

(30) Priority: 02.09.2009 EP 09169225
(43) Date of publication of application: 11.07.2012
(73) Proprietor: BASF Construction Polymers GmbH, 83308 Trostberg (DE)
(72) Inventor: DIERSCHKE, Frank, 55276 Oppenheim (DE); KRAUS, Alexander, 83552 Evenhausen (DE)
(86) International application number: PCT/EP2010/062168
(87) International publication number: WO 2011/029711

(56) References cited:
- WO-A1-2007/071361
- WO-A1-2010/026155
- WO-A1-2010/040612
- US-A- 6 139 623
- US-A1- 2006 281 885
- US-A1- 2008 108 732

## Description

The subject of the present invention is a formulation for the dispersion of hydraulic binder and especially gypsum containing compositions.

Conventional dispersants for cementitious and gypsum compositions typically achieve good water reduction, however, they are limited in their ability to retain workability over a long period of time. An alternate method for extended workability retention is the use of retarding admixtures. In this scenario, the benefit of workability retention is often achieved at the expense of setting times and early strength. The usefulness of these dispersants is therefore limited by their inherent limitations in molecular architecture.

Usual dispersants are static in their chemical structure over time in hydraulic systems. Their performance is controlled by monomer molar ratio that is fixed within a polymer molecule. A water reducing effect or dispersing effect is observed upon dispersant adsorption onto the hydraulic particle surface. As dispersant demand increases over time due to abrasion and hydration product formation, which creates more surface area, these conventional dispersants are unable to respond and workability is lost..

Typically, the issue of extended workability is solved by either re-tempering (adding more water) to the hydraulic compositions or by adding more high range water reducer. Addition of water leads to lower strength and thus creates a need for mixes that are "over-designed" in the way of hydraulic binder content.

Various types of organic compounds have been used to advantageously after certain properties of wet hydraulic binder compositions. One class of components, which can collectively be called "superplasticizers" fluidify or plasticize wet binder compositions to obtain a more fluid mixture. A controlled fluidity is desired, such that the aggregate used in mortars and concretes does not segregate from the binder paste. Alternatively, superplasticizers may allow the cement composition to be prepared using a lower water: binder ratio in order to obtain a composition having a desired consistency which often leads to a hardened composition having a higher compressive strength development after setting.

A good superplasticizer should not only fluidify the wet hydraulic binder composition to which it is added, but also maintain the level of fluidity over a desired period of time. This time should be long enough to keep the wet composition fluid, e. g. in a ready-mix truck while it is on its way to a job site. Another important aspect relates to the period for discharging the truck at the job site and the period needed for the cement composition for being worked in the desired final form. On the other side, the hydraulic mixture cannot remain fluid for a too long time, that means the set must not greatly be retarded, because this will slow down the work on the job and show negative influences on the characteristics of the final hardened products.

Conventional examples of superplasticizers are melamine sulfonate/formaldehyde condensation products, naphthalene sulfonate/formaldehyde condensation products and lignosulfonates, polysaccharides, hydroxycarboxylic acids and their salts and carbohydrates.

In most cases, fluidizing agents are multi-component products with copolymers based on oxyalkylenglykolalkenylethers and unsaturated dicarboxylic acid-derivatives as most important species. The European Patent EP 0 736 553 B1 discloses such copolymers comprising at least three sub-units and especially one unsaturated dicarboxylic acid derivative, one oxyalkylenglykolalkenylether and additionally one hydrophobic structural unit, such as ester units. The third structural unit can also be represented by polypropylenoxid- and polypropylenoxid-polyethylenoxid-derivatives, respectively.

The German published application DE 195 43 304 A1 discloses an additive for water containing mixtures for the construction field comprising a) a water-soluble sulfonic acid-, carboxylic- or sulfate group containing cellulose derivative, b) a sulfonic acid- and/or carboxylic acid containing vinyl-(co)-polymer and/or a condensation product based on aminoplast-builders or acryl containing compounds and formaldehyde. This additive shall show sufficient water retention ability and rheology-modifying properties. Therefore, this additive shall be suitable for construction chemical compositions containing cement, lime, gypsum, anhydrite and other hydraulic binder components.

Copolymers based on unsaturated monocarboxylic or dicarboxylic acid derivatives, oxyalkylenglykolalkenylethers, vinylic polyalkylenglykol, polysiloxane or ester compounds used as additives for aqueous suspensions based on mineral or bituminous binders are described in US 6,777,517 B1. The use of such additives results in a decrease in the water/binder ratio and leads to highly fluid building materials without segregation of individual constituents from the building material mixture. The copolymers according to this U.S. patent are useful as additives for aqueous suspensions of inorganic and organic solids and especially for suspensions that are based on mineral or bituminous binders such as cement, plaster of paris, lime, anhydrite or other building materials based on calcium sulfate.

Disclosed by prior art also are copolymers of ethylenically unsaturated ethers that can be used as plasticizers for cement containing mixtures (EP 0 537 870 A1). These copolymers contain an ether co-monomer and as additional co-monomer an olefinic unsaturated mono-carboxylic acid or an ester or a salt thereof, or alternatively an olefinic unsaturated sulfuric acid. These copolymers show a very short ether side chain with 1 to 50 units. The short side chain causes a sufficient plasticizing effect of the copolymers in cement containing masses with a reduced slump loss of the construction chemicals mass itself.

US 6,139,623 B1 discloses an emulsion admixture for use in hydraulic cement compositions formed by emulsifying an antifoaming agent, a surfactant and a copolymer having a carbon-containing backbone to which are attached groups that function as cement-anchoring members by forming ionic bonds and oxyalkylene groups. This admixture comprising an ethylene oxide/propylene oxide (EO/PO) type comb polymer and an antifoaming agent allows a predictable air control in hydraulic cement compositions such as concrete. The term "cement composition" refers to pastes, mortars, grouts such as oil well cementing grouts, and concrete compositions comprising a hydraulic cement binder. Typical antifoaming agents are phosphate ester, borate ester and polyoxyalkylene copolymers with defoaming properties. The surface active component (surfactant) is said to stabilize the emulsion mixture and is chosen from the group consisting of an esterified fatty acid ester of a carbohydrate, a C₂ to C₂₀ alcohol having polyoxyalkylene groups or a mixture thereof.

US 2006/0281886 discloses a co-polymer comprising two monomer components with a component a) being an olefinic unsaturated monocarboxylic acid co-monomer or an ester or a salt thereof or an olefinic unsaturated sulfonic acid co-monomer or a salt thereof, and with component b) preferably represented by an ether compound. These two monomeric co-polymer can be preferably used as a superplasticizer in a hydraulic binder containing composition. There it is alternatively disclosed that the co-polymer can be used in combination with a defoaming component that is also an additional structural unit of the co-polymer. Consequently, the defoaming component can be chemically attached to the co-polymer or being present in free form in a blend. Under general aspects the prior art teaches the use of dispersing agents (plasticizers) such as polycarboxylate ethers (PCE) as typical additive for calcium sulfate containing binder systems. This results in a water reduction as well as in an enhancement of physical properties such as compressive strength. Additionally, the workability and preferably the rheological behavior of the construction chemicals composition are improved. On the other hand the addition of PCE based dispersants causes a distinct air entrainment to the binder component that worsens the physical properties of the composition. Another negative aspect is the foam formation during the preparation of the binder system. For overcoming these drawbacks defoamer components are used as additional additive to the dispersing agent. However, defoamers show a low solubility in aqueous formulations and cause an insufficient stability. Moreover, the defoaming properties of the formulation decrease over time due to the resulting phase separation of the defoamer and the dispersant.

US 2008/108732 A1 discloses the synthesis of polycondensates containing
(I) at least one structural unit with an aromatic or heteroaromatic sub-unit and a polyether side chain and
(II) at least one phosphated structural unit with an aromatic or heteroaromatic sub-unit and
(III) at least one structural unit with an aromatic or heteroaromatic sub-unit, that are intended as alternatives to dispersants based on sulphonated naphthalene/melamine formaldehyde units.

Based on the different characteristics and the availability of the superplasticizers mentioned above, it has been further desired to come up with new formulations suitable as admixtures which are an improvement over the current state of the art. It is thus an object of this invention to provide new formulations for calcium sulfate binder containing compositions which impart to wet binder compositions excellent fluidizing and water reduction properties. Furthermore, the properties, the performance and effects of the provided copolymer shall be arbitrary.

In the production of gypsum plasterboard, in order to decrease the drying costs it is necessary to establish as low as possible a water/gypsum value. In addition, the gypsum mixture should set as rapidly as possible, so that the necessary cutting strength of the plate is attained on the conveyor line after as short a time as possible. For these reasons, dispersants based in particular on polycarboxylate ethers were developed (DE 10 2006 027 035 A1; US 7,070,648 B1).

US 2008/017078 teaches a liquid admixture composition for a calcium sulfate based binder system and a method of use. The disclosed admixture comprises an aqueous composition of a copolymeric dispersing component, an antifoaming agent component, a surfactant component and water. The components may be a blend or physically or chemically attached and result in a stable liquid system that can be used as dispersing agent for calcium sulfate compound containing construction chemicals composition. The admixture composition disclosed in this document and especially its application as dispersing agent represent a further improvement of this state of the art because the admixture with its contained aqueous composition induces a uniform plasticizing effect all the time and an improvement of the physical properties due to reduction of both water and air content in the wet construction chemicals gypsum mass. Furthermore, the admixture shows an improved storage stability and homogeneity.

Gypsum mixtures for foaming, solid and fast drying gypsum products and a method of making a gypsum slurry by using modifiers and dispersants are disclosed by US 2009/0101045, US 2006/0281837, US 2006/0280899, US 2006/0280898, US 2006/0278135, US 2006/0278134, US 2006/0278130, US 2006/0278127, US 2005/0250888, US 2005/0239924 and US 2006/0280970. The dispersants mentioned in these documents represent polycarboxylate dispersants, the dispersant having two repeating units with an olefinic unsaturated mono-carboxylic acid repeating unit and a vinyl or allyl-group bound to a polyether by an ether linkage as second repeating unit.

The results given in any of these documents confirm that such dispersants can be used to attain advantageous physical properties known from superplasticizers such as polycarboxylate ethers.

It was therefore the object of the present invention to provide an economical and effective new formulation based on suitable and well established dispersing components for hydraulic binders, which dispersant is particularly suitable as a plasticizer/water reducing agent for concrete and other hydraulic binder based systems and that can be prepared in a simple manner and at low costs.

Provided by this invention therefore is a formulation for extending workability to a hydraulic binder and preferably a calcium sulfate containing mixture and water, comprising introducing into the mixture a combination of dispersing components. The subject formulation achieves a better workability and fluidibility of hydraulic setting compositions and establishes a low water/hydraulic binder value.

### DETAILED DESCRIPTION

The present invention relates to a formulation containing
a) at least one component having dispersing properties and selected from the group consisting of a compound at least containing a branched comb polymer having polyether side chains, a naphthalene sulphonate-formaldehyde condensate ("BNS") and a melamine sulphonate-formaldehyde condensate ("MSF"),
   and
b) a polycondensation product containing
   (I) at least one structural unit with an aromatic or heteroaromatic sub-unit and a polyether side chain, and
   (II) at least one phosphated structural unit with an aromatic or heteroaromatic sub-unit, and
   (III) at least one structural unit with an aromatic or heteroaromatic sub-unit,
with structural unit (II) and structural unit (III) differing exclusively in that the OP(OH)₂ group of the structural unit (II) is replaced by H in structural unit (III), and structural unit (III) is not the same as structural unit (I), the formulation being suitable as admixture for a hydraulic binder and preferably a calcium sulfate binder system containing composition.

The term "hydraulic binder" according to this invention means cement and preferably Portland cement represented by CEM I, CEM II, CEM III, CEM IV and CEM V, white cement, quick lime and aluminate cement.

The term "latent hydraulic binder" according to this invention means at least one representative selected from the group fly ash, blast furnace slag, metakaoline, microsilica, trass compounds, alumosilicates, tuff, phomulithe, diatomaceous earth and oil shell.

The term "calcium sulfate compound" according to this invention means calcium sulfate in its anhydrous and hydrate forms, such as gypsum, anhydrite, calcium sulfate dihydrate and calcium sulfate hemi-hydrate.

The term "gypsum" according to this invention is also known as calcium sulfate, whereby calcium sulfate can be used in its various anhydrous and hydrate forms with or without crystal water. Natural gypsum is represented by calcium sulfate dihydrate and the natural crystal water free form of calcium sulfate is represented by the term "anhydrite". Besides the natural forms, calcium sulfate is a typical by-product of technical processes characterized by the term "synthetic gypsum". One example of such technical processes is the flue gas desulphurization. Synthetic gypsum may also be a by-product of phosphorous acid and hydrogen fluoride production methods for gaining hemi-hydrate forms (CaSO₄ ½ H₂O). Gypsum (CaSO₄ · 2H₂O) may be calcinated by driving off the water of hydration. Products of the various calcinating procedures are alpha or beta hemi-hydrate. Beta calcium sulfate hemi-hydrate results from a rapid heating in open units by a rapid evaporation of water and by forming cavities. Alpha hemi-hydrate is produced by a de-watering of gypsum in closed autoclaves. The crystal form in this case is dense and therefore, this binder needs less amounts of water than beta hemi-hydrate. On the other hand, gypsum hemi-hydrate re-hydrates with water to dihydrate crystals. Usually, the hydration of gypsum needs some minutes to hours indicating a clearly shortened workability period in contrast to cements that hydrate in periods over hours or days. These characteristics make gypsum an attractive alternative to cement as hydraulic binder in various fields of application, because hardened final gypsum products show a characteristic hardness and compressive strength.

Calcium sulfate hemi-hydrate can produce at least two crystal forms, whereby α-calcined gypsum is usually de-watered (de-hydrated) in closed autoclaves. For various fields of application, β-calcined gypsum may be selected due to its availability under economical aspects. However, these advantages may be reversed because β-calcined gypsum needs higher water amounts for workability and for making slurries of a given fluidity. Hardened or dried gypsum tends to a certain weakening based on the remained water in its crystal matrix. Therefore, products thereof show less strength than gypsum products that have been made with smaller amounts of water.

In general, the workability of gypsum, but also of other hydraulic binders, can be improved under hydraulic aspects by adding dispersants. In this connection, the formulation according to this invention represents a suitable dispersant because of the dispersing properties of its component.

### 1. Component a)

Component a) of the formulation according to the invention has dispersing properties and is selected from the group consisting of a compound at least containing a branched comb polymer having polyether side chains, a naphthalene sulphonate-formaldehyde condensate ("BNS"), and a melamine sulphonate-formaldehyde condensate ("MSF"), Formulations which contain a branched comb polymer having polyether side chains as the component a) with dispersant action have been found extremely effective. It therefore can be seen as preferred embodiment that the component a) is a polycarboxylate ether a₁), a polycarboxylate ester a₂), an uncharged copolymer a₃) or a mixture thereof. In general and additionally to the dispersing properties of component a) polycarboxylate ester a₂) are preferred that show anti-foaming and surface active activities.

### 1.1 Copolymer a₁:

Such polyether-containing copolymers, which in the sense of the present invention are suitable as component a₁), have been previously described in WO 2006/133933 A2. These copolymers consist of two monomer components, the first monomer component being an olefinically unsaturated monocarboxylic acid comonomer or an ester or a salt thereof and/or an olefinically unsaturated sulphonic acid comonomer or a salt thereof, and the second monomer component a comonomer of the general formula (I) 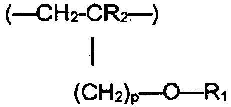 wherein R₁ represents 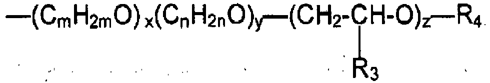 and R₂ represents H or an aliphatic hydrocarbon residue with 1 to 5 C atoms; R₃ = unsubstituted or substituted aryl residue and preferably phenyl, and R₄ = H or an aliphatic hydrocarbon residue with 1 to 20 C atoms, cycloaliphatic hydrocarbon residue with 5 to 8 C atoms, a substituted aryl residue with 6 to 14 C atoms or a member of the series 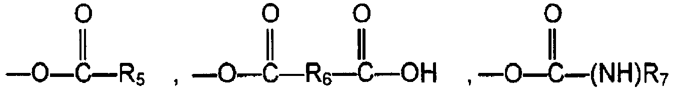
wherein R₅ and R₇ each represent an alkyl, aryl, aralkyl, or alkaryl residue and R₆ for an alkylidene, arylidene, aralkylidene or alkarylidene residue, and p=0,1,2,3or4
m, n mutually independently mean 2, 3, 4 or 5
x and y mutually independently denote an integer ≤ 350
   and
z = 0 to 200.

In this connection (I) in copolymer a₁) the comonomer units which represent the components 1) and 2) have in each case no internal molecular differences and/or (II) the copolymer a₁) represents a polymeric mixture of the components 1) and 2), in which case the comonomer units have internal molecular differences with respect to the radicals R₁ and/or R₂ and/or R₃ and/or R₄ and/or R₅ and/or R₆ and/or R₇ and/or m and/or n and/or x and/or y and/or z, and the differences discussed relate in particular to the composition and length of the side chains.

With regard to the copolymer the disclosure of WO 2006/133933 A2 is a substantial integral of the present disclosure.

In particular, the present invention comprises a formulation wherein the copolymer a₁) contains the comonomer component 1) in proportions of 30 to 99 mol.% and the comonomer component 2) in proportions of 70 to 1 mol.%. A copolymer a₁) which contains the comonomer component 1) in proportions of 40 to 90 mol.% and the comonomer component 2) in proportions of 60 to 10 mol.% has been found particularly advantageous in this connection.

The comonomer component 1) can preferably be an acrylic acid or a salt thereof and the comonomer component 2) in the case where p = 0 or 1 a modification which contains a vinyl or allyl group and as the residue R₁ a polyether.

Further, in the context of the present invention, it can be regarded as advantageous if the comonomer component 1) derives from the group acrylic acid, methacrylic acid, crotonic acid, isocrotonic acid, allylsulphonic acid, vinylsulphonic acid and suitable salts thereof and alkyl or hydroxyalkyl esters thereof.

In addition, the copolymer a₁) can have additional structural groups in copolymerized form, which is also taken into account by the present invention. In this case, the additional structural groups may be styrenes, acrylamides and/or hydrophobic compounds, ester structural units, polypropylene oxide and polypropylene oxide/polyethylene oxide units being particularly preferred. The copolymer a₁) should contain the said additional structural groups in proportions up to 5 mol.%, preferably from 0.05 to 3.0 mol.% and in particular from 0.1 to 1.0 mol.%.

In addition, it is advantageous if the formula (I) stands for a polyether containing allyl or vinyl groups.

With regard to the carboxylate ester modifications a₂) and the possible forms thereof, reference is in particular made to EP 0 753 488 B1, the content thereof with regard to the dispersants described in that document being an integral part of the present disclosure.

Concerning the polycarboxylate ester a₂) as preferred comb polymer, the present invention specifies that this ester a₂) is a polymer which can be prepared by polymerization of a monomer mixture (I) containing, as the main component, a representative of the carboxylic acid monomer type. An important aspect of component a₂) according to the present invention has to be seen in the anti-foaming and/or defoaming and/or surface active properties of such polycarboxylate ester types. This is why the formulation according to the present invention also comprises a combination of an antifoaming/surface active agent with dispersing properties as component a) and the polycondensate component b). In a more preferred embodiment the monomer mixture (I) contains an (alkoxy)polyalkylene glycol mono(meth)acrylate monomer (a) of the general formula (II) 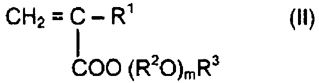 in which R¹ represents a hydrogen atom or a CH₃ group, R²O represents one representative or a mixture of at least two oxyalkylene groups having 2 to 4 carbon atoms, R³ represents a hydrogen atom or an alkyl group having 1 to 5 carbon atoms and m represents a number between 1 and 250 and represents the average number of moles of the oxyalkylene group added,
additionally, as monomer (b), a (meth)acrylic acid of the general formula (III), 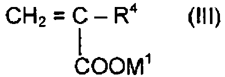 in which R⁴ represents a hydrogen atom or a CH₃ group and M¹ represents a hydrogen atom, a monovalent metal atom, a divalent metal atom, an ammonium group or an organic amine group, and optionally a monomer (c) which is copolymerized with the monomers (a) and (b). The monomer (a) can be present in an amount of from 5 to 98 wt.%, the monomer (b) in a proportion of from 2 to 95 wt.% and the monomer (c) in a proportion up to 50 wt.% in the monomer mixture (I), wherein the respective proportions of the monomers (a), (b) and (c) add up to 100 wt.%.

As typical representatives of the monomer (a), hydroxyethyl (meth)acrylate, hydroxypropyl (meth)acrylate, polyethylene glycol mono(meth)acrylate, polypropylene glycol mono(meth)acrylate, polybutylene glycol mono(meth)acrylate, polyethylene glycol polypropylene glycol mono(meth)acrylate, polyethylene glycol polybutylene glycol mono(meth)acrylate, polypropylene glycol polybutylene glycol mono(meth)acrylate, polyethylene glycol polypropylene glycol polybutylene glycol mono(meth)acrylate, methoxypolyethylene glycol mono(meth)acrylate, methoxypolypropylene glycol mono(meth)acrylate, methoxypolybutylene glycol mono(meth)acrylate, methoxypolyethylene glycol polypropylene glycol mono(meth)acrylate, methoxypolyethylene glycol polybutylene glycol mono(meth)acrylate, methoxypolypropylene glycol polybutylene glycol mono(meth)acrylate, methoxypolyethylene glycol polypropylene glycol polybutylene glycol mono(meth)acrylate, ethoxypolyethylene glycol mono(meth)acrylate, ethoxypolypropylene glycol mono(meth)acrylate, ethoxypolybutylene glycol mono(meth)acrylate, ethoxypolyethylene glycol polypropylene glycol mono(meth)acrylate, ethoxypolyethylene glycol polybutylene glycol mono(meth)acrylate, ethoxypolypropylene glycol polybutylene glycol mono(meth)acrylate, ethoxypolyethylene glycol polypropylene glycol polybutylene glycol mono(meth)acrylate or mixtures thereof are possible.

For the monomer (b), representatives of the group consisting of acrylic acid, methacrylic acid, monovalent metal salts, divalent metal salts, ammonium salts and organic amine salts thereof and mixtures of at least two of the said representatives are to be regarded as preferred.

As regards the monomer (c), the formulation according to the invention should contain at least one representative of the esters of an aliphatic alcohol with 1 to 20 carbon atoms with an unsaturated carboxylic acid. As the unsaturated carboxylic acid, in particular maleic acid, fumaric acid, citraconic acid (meth)acrylic acid or monovalent metal salts, divalent metal salts, ammonium salts or organic amine salts thereof are especially suitable. Monoesters or diesters of unsaturated dicarboxylic acids such as maleic acid, fumaric acid or citraconic acid with aliphatic C₁-C₂₀ alcohols, C₂-C₄ glycols or with (alkoxy)polyalkylene glycols are preferred representatives of monomer (c) according to the present invention.

### 1.2 Copolymer a₂:

In the context of the present invention, the component a₂) can be a copolymer which is made up of at least one of the following monomers:
A) an ethylenically unsaturated monomer, containing a hydrolysable residue
B) an ethylenically unsaturated monomer with at least one C₂-C₄ oxyalkylene side group with a chain length from 1 to 30 units;
C) an ethylenically unsaturated monomer with at least one C₂-C₄ oxyalkylene side group with a chain length from 31 to 350 units.

In a preferred embodiment of the present invention components B) and C) are simultaneously represented in the copolymer a₂) of the claimed formulation.

In this copolymer modification, built up of at least one of the monomers A), B) and C), according to the invention the ethylenically unsaturated monomer of the component A) can be at least one anhydride or imide and/or at least one maleic anhydride or maleimide. The ethylenically unsaturated monomer of the component A) can however also include an acrylate ester with an ester functionality which contains the hydrolysable residue. In this case, it should be regarded as preferred if the ester functionality is at least one hydroxypropyl or hydroxyethyl radical.

In a further embodiment the copolymer a₂) can however comprise more than one ethylenically unsaturated monomer with a hydrolysable radical. Here it is in particular recommended that the ethylenically unsaturated monomer of the component A) as a residue has at least more than one representative of the ethylenically unsaturated monomers, at least one representative of a hydrolysable radical or a mixture of both. In this connection, the hydrolysable radical should have at least one C₂-C₂₀ alcohol functionality. The present invention also includes the possibility that the hydrolysable residue is at least one C₁-C₂₀ alkyl ester, one C₁-C₂₀ aminoalkyl ester, one C₂-C₂₀ alcohol, one C₂-C₂₀ amino alcohol or one amide.

The present invention further comprises that at least one ethylenically unsaturated monomer of the component B) or C) has a C₂-C₈ alkyl ether group. In this case, the ethylenically unsaturated monomer can have a vinyl, allyl or (methyl)allyl ether residue or else be derived from an unsaturated C₂-C₈ alcohol. In the last-named case of the unsaturated C₂-C₈ alcohol, at least vinyl alcohol, (meth)allyl alcohol, isoprenol or methylbutenol are especially preferred possibilities as representatives.

The ethylenically unsaturated monomer side groups of the component B) or C) can however also contain at least one C₄ oxyalkylene unit.

Overall, in connection with the modifications just described, concerning the comb polymer a₂) it can be stated that at least one ethylenically unsaturated monomer of the components B) or C) can have a C₂-C₈ carboxylate ester, which in particular is hydrolysable. Further, the present invention includes a modification wherein the oxyalkyl side groups have at least one ethylene oxide, one propylene oxide, one polyethylene oxide, one polypropylene oxide or mixtures thereof.

Finally, the copolymer a₂) in the component C) can have at least one nonionic ("uncharged") and/or one non-hydrolysable monomer residue or mixtures thereof.

### 1.3 Copolymer a₃:

In addition to the two modifications just described in detail with regard to the component a), namely its form as polycarboxylate ethers and polycarboxylate esters, the present invention also includes a third modification of the comb polymer a), which then is a nonionic (uncharged) copolymer a₃). Here, representatives of the general formula (IV) are preferred, 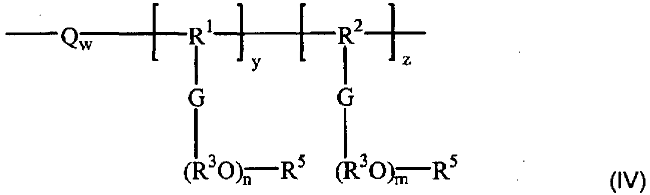 wherein Q stands for an ethylenically unsaturated monomer with at least one hydrolysable residue, G means O, C(O)-O or O-(CH₂)p-O with p = 2 to 8, wherein mixtures of the modifications of G in one polymer are possible; R¹ and R² mutually independently mean at least one C₂-C₈ alkyl; R³ comprises (CH₂)_{c}, where c is a whole number between 2 and 5 and where mixtures of the representatives of R³ in the same polymer molecule are possible; R⁵ means at least one representative selected from the series H, a linear or branched, saturated or unsaturated C₁-C₂₀ aliphatic hydrocarbon residue, a C₅-C₈ cycloaliphatic hydrocarbon residue or a substituted or unsubstituted C₆-C₁₄ aryl residue; m =1 to 30, n = 31 to 350, w = 1 to 40, y = 0 to 1 and z = 0 to 1, where the sum (y + z) > 0.

However, the nonionic copolymer a₃) can alternatively also be a representative of the general formula (V), 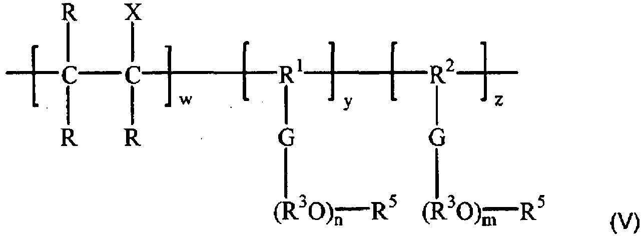 wherein X stands for a hydrolysable residue and R for H or CH₃, and G, p, R¹, R², R³, R⁵, m, n, w, y, z and (y + z) have the meanings stated under the formula (IV).

In the case where the structure of the non-ionic copolymer a₃) corresponds to the formula (V), in a preferred embodiment the hydrolysable residue can be at least one representative of the series alkyl ester, aminoalkyl ester, hydroxyalkyl ester, aminohydroxyalkyl ester or amide.

As a third alternative as regards the nonionic copolymer a₃), the present invention specifies at least one representative of the general formula (VI) 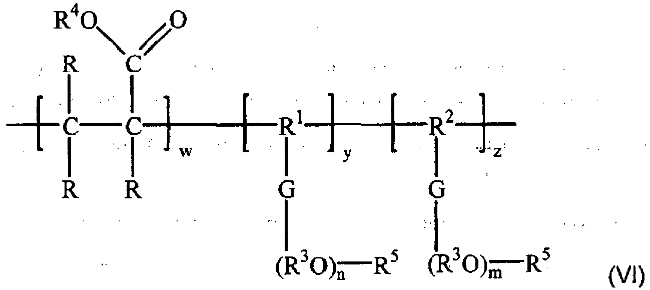 wherein R⁴ means at least one C₁-C₂₀ alkyl or C₂-C₂₀ hydroxyalkyl radical and the radicals G, p, R, R¹, R², R³, c, R⁴, R⁵ and m, n, w, y, z and (y + z) have the meanings stated under the formulae (IV) and (V).

It is to be regarded as preferred option that in this formula (VI), p = 4, R⁴ = C₂H₄OH or C₃H₆OH, each of the radicals R⁵ represents H, m = 5-30, n = 31-250, w = 1.5-30, y = 0 to 1, z = 0 to 1 and (y+z)>0.

Further it is to be regarded as preferred embodiment that in the said formulae (IV), (V) and (VI), the molar ratio of w to the sum (y + z) is 1 : 1 to 20 : 1 and preferably 2 : 1 to 12 :1.

The representatives of the third modification of the copolymer a₃) corresponding to formula (VI) should in particular be a nonionic polyether-polyester copolymer.

The terms "nonionic" and "uncharged" are to be understood as synonyms in this context.

Irrespective of the component a) and its preferred representatives a₁), a₂) and/or a₃), respectively contained in the formulation according to the invention, the present invention specifies that the formulation contain the component a) in proportions from 5 to 95% by weight, preferably of 10 to 60% by weight and particularly preferably of 15 to 40% by weight, based in each case on the total formulation.

### 1.4 Sulphonated Condensates

Sulphonic acid group containing s-triazines or naphthalene-formaldehyde condensates are broadly disclosed by prior art documents and frequently used as water reducing agents or plasticizers for cement based systems such as concrete.

β-naphthalene-sulphonate-formaldehyde condensates ("BNS"), also known as naphthalene-formaldehyde sulphonates ("NFS") disperse cement particles by an electrostatic repulsion that results from adsorption processes.

BNS or NFS is suitable for making cement particles with high dispersion, low foaming and high range water reducing and thereof it is possible to save the hydraulic binder such as cements or calcium sulphite based binders to improve the cement mobility and workability. BNS is a high range admixture for concrete, cast-in-place, prefabricating, pump and curing and BNS has a good adaptability to cements and other hydraulic binders and is not corrosive to reinforcing bar and non poisonous and pollution-free. Therefore it has been broadly applied to the construction industry such as highways, bridges, tunnels, industrial buildings, prestressing force components and high range concretes.

Usually, such condensates suitable as plasticizer or dispersants are prepared by the reaction of aromatic sulphonic acids like naphthalene sulphonic acid with formaldehyde under ambient pressure and under temperatures up to 100 °C.

The preparation and use of BNS is well known state of the art and disclosed for example in EP 0 214 412 A1 and DE-PS 2 007 603.

The effect and properties of BNS can be modified by changing the molar ratio between formaldehyde and the naphthalene component that usually is from 0.7 up to 3.5. The ratio between formaldehyde and the sulphonated naphthalene component preferably is from 0.8 to 3.5 to 1.

BNS condensates are added to the hydraulic binder containing composition in amounts from 0.01 up to 6.0 wt.%.

Melamine-sulphonate-formaldehyde-condensates ("MFS") are broadly used as flow improving agents in the processing of hydraulic binder containing compositions such as dry mortar mixtures, pourable mortars and other cement bonded construction materials.

Melamine is used in this connection as representative of the s-triazine which is why these improving agents are known as MFS resins. They cause as well as the already mentioned BNS representatives a strong liquefying effect of the construction chemicals mixture without any undesired side effects occurring in the processing or in the functional properties of the hardened building material.

It is well known that commercially available flow improving agents based on melamine-formaldehyde-sulphite such as products of the Melment series of BASF Construction Polymers GmbH, Germany, cause an excellent liquefying effect even of low dosages of about 0.3 to 1.2 wt.%, relative to the weight of the hydraulic binder such as cement.

The liquefying effect of MFS products is achieved without lowering the surface tension of the water and binder system which usually is the case for the example with BNS products or flow improving agents with a surfactant-like polymers structure. The advantage of MFS resins is presumed to be due to the fact that no air avoids are introduced in to mortar during remixing process and the mortar density and strengths are not adversely effected after hardening.

In addition MFS resins provide the fresh mortar mixture with a good cohesive strength so that even when the flow properties are extreme separation phenomena within the construction composition do not occur. This phenomenon, also called as "segregation", is feared especially in the production of self-flowing smoothing compositions which especially is the case with self-leveling screeds since its leads to a non-uniform layer structure of the screed due to floating of the fine material and sedimentation of the coarse grain.

As it is for the BNS technology also for MFS there is a broad prior art. In this connection as representative documents are mentioned DE 196 09 614 A1, DE 44 11 797 A1, EP 0 059 353 A1 and DE 195 38 821 A1:
DE 196 09 614 A1 discloses a water soluble polycondensation product based on an amino-s-triazine and its use as plasticizer in aqueous binder containing suspensions based on cement, lime and gypsum. These polycondensates are capable in two condensation steps whereby in a pre-condensation step the amino-s-triazine, the formaldehyde component and the sulphite are condensated at a molar ratio of 1 to 0.5 : 5.0 to 0.1 : 1.5. Melamine is a preferred representative of amino-s-triazines. Further suitable representatives are amino plast former selected from the group urea, thiourea, dicyandiamide or guanidine and guanidine salts.

According to DE 44 11 797 A1 sulfanilic acid containing condensation products based on amino-s-triazines that show at least two amino groups are prepared by using formaldehyde. The sulfanilic acid is used in amounts of from 1.0 to 1.6 mol per mol amino-s-triazine and neutralized in aqueous solution with an alkaline metal hydroxide or in earth alkaline metal hydroxide. In an additional step the formaldehyde is added in amounts of from 3.0 to 4.0 mol per mol amino-s-triazine at a pH value between 5.0 to 7.0 and at temperatures between 50 and 90 °C. The final viscosity of the solution shall be between 10 and 60 cSt at 80 °C.

According to EP 0 059 353 A1 highly concentrated and low viscose aqueous solutions of melamine/aldehyde resins are capable by reacting melamine and an aldehyde in an alkaline medium in a first step with a component selected from the group comprising alkali sulphate, earth alkali sulphate or (earth) alkali sulphonate or other suitable amino compounds to a pre-condensate. This mixture in an additional process step is reacted with another amino compound such as amino acids or amino carbonic acids and finally the resin solution is brought to an alkaline pH value.

DE 195 38 821 A1 discloses a condensate based on an amino-s-triazine with at least two amino groups and formaldehyde and a high content of sulphonic acid groups and a low content of formate. Such products can be prepared according to this document by reacting the amino-s-triazine, formaldehyde and a sulphite at a molar ratio of 1 : 3.0 : 6.0: 1.51 : 2.0 in an aqueous solution and at a temperature between 60 and 90 °C and a pH value between 9.0 and 13.0 until the sulphite is no longer present. In an additional step the condensation process is conducted at a pH value between 3.0 and 6.5 and at temperatures between 60 and 80 °C until the condensation product at 80 °C shows a viscosity between 5 and 50 mm²/s. Finally, the condensation product is to be brought to a pH value between 7.5 and 12.0 or treated thermally by a pH ≥ 10.0 and a temperature between 60 and 100 °C.

According to the present invention the BNS and/or MFS dispersant is used in amounts of from 0.01 to 10 wt.% and preferably 0.1 to 5 wt.%, related to the hydraulic binder component. The molar ratio of the sulphonic group and related to the melamine component is of from 1.0 to 2.0 and the molar ratio of the formaldehyde related to the melamine component is from 2.5 to 5.0. Preferably the molar ratio melamine to sulphonic acid to formaldehyde is 1 : 1.1 : 1.5 : 3.3 : 3.6.

Concerning the BNS component the molar ratio of formaldehyde to naphthalene sulphonic acid is from 1.3 to 1 : 3 to 1.

### 2. Polycondensation product b)

As already discussed as state of the art admixtures in the form of dispersants are added to aqueous slurries or pulverulent inorganic or organic substances, such as clays, silicate powder, chalk, carbon black, crushed rock and hydraulic binders, for improving their processability, i.e. kneadability, spreadability, sprayability, pumpability or flowability. Such admixtures are capable of preventing the formation of solid agglomerates and of dispersing the particles already present and those newly formed by hydration and in this way improving the processability. This effect is utilized in particular in a targeted manner in the preparation of construction material mixtures which contain hydraulic binders, such as cement, lime, gypsum, hemihydrate or anhydrite.

In order to convert these construction material mixtures based on said binders, into a ready-to-use, processable form, as a rule substantially more mixing water is required than would be necessary for the subsequent hydration or hardening process. The proportion of voids which is formed in the concrete body by the excess, subsequently evaporating water leads to significantly poorer mechanical strengths and resistances.

In order to reduce this excess proportion of water at a predetermined processing consistency and/or to improve the processability at a predetermined water/binder ratio, admixtures are used which are generally referred to as water-reducing agents or plasticizers. In practice, in particular polycondensates and copolymers are used as such agents.

WO 2006/042709 describes polycondensates based on an aromatic or heteroaromatic compound (A) having 5 to 10 C atoms or heteroatoms, having at least one oxyethylene or oxypropylene radical, and an aldehyde (C) selected from the group consisting of formaldehyde, glyoxylic acid and benzaldehyde or mixtures thereof, which result in an improved plasticizing effect of inorganic binder suspensions compared with the conventionally used polycondensates and maintain this effect over a longer period ("slump retention"). In a particular embodiment, these may also be phosphated polycondensates. The phosphated monomers used are, however, relatively expensive since they have to be separately prepared and purified.

Alternatively, there has been developed an economical dispersant, based on a phosphated polycondensate, for hydraulic binders, which dispersant is particularly suitable as a plasticizer/water-reducing agent for concrete and can be prepared in a simple manner and at low costs (non-disclosed prior art filed provisional as EP 081659155.3 in August 2008).

This object is achieved by a polycondensate containing
(I) at least one structural unit having an aromatic or heteroaromatic and a polyether side chain and
(II) at least one phosphated structural unit having an aromatic or heteroaromatic and
(III) at least one structural unit having an aromatic or heteroaromatic,
structural unit (II) and structural unit (III) differing exclusively in that the OP(OH)₂ group of the structural unit (II) is replaced by H in structural unit (III), and structural unit (III) is not the same as structural unit (I).

The structural units (I), (II) and (III) of component b) of the claimed formulation can be described in more detail by the following general formulae 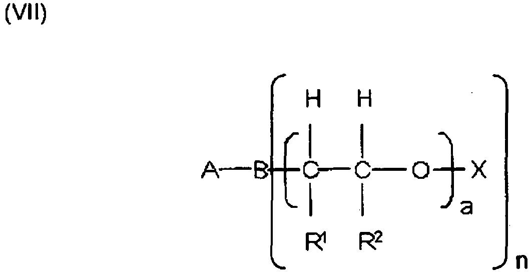
where
   A are identical or different and are represented by a substituted or unsubstituted aromatic or heteroaromatic compound having 5 to 10 C atoms
where
   B are identical or different and are represented by N, NH or O
where
   n = 2, if B = N and n = 1, if B = NH or O
where
   R¹ and R², independently of one another, are identical or different and are represented by a branched or straight-chain C₁- to C₁₀-alkyl radical, C₅- to C₈-cycloalkyl radical, aryl radical, heteroaryl radical or H
where
   a are identical or different and are represented by an integer from 1 to 300
where
   X are identical or different and are represented by a branched or straight-chain C₁- to C₁₀-alkyl radical, C₅- to C₈-cycloalkyl radical, aryl radical, heteroaryl radical or H, 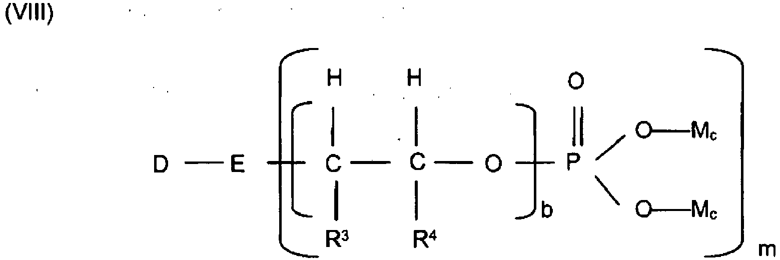 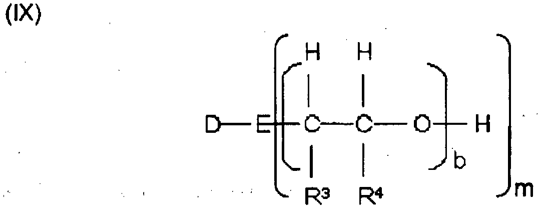
for (VIII) and (IX) in each case:
where
   D are identical or different and are represented by a substituted or unsubstituted heteroaromatic compound having 5 to 10 C atoms
where
   E are identical or different and are represented by N, NH or O
where
   m = 2 if E = N and m = 1 if E = NH or O
where
   R³ and R⁴, independently of one another, are identical or different and are represented by a branched or straight-chain C₁- to C₁₀-alkyl radical, C₅- to C₈-cycloalkyl radical, aryl radical, heteroaryl radical or H
where
   b are identical or different and are represented by an integer from 0 to 300,
where
   M is independently of one another an alkaline metal ion, alkaline earth metal ion, ammonium ion, organic ammonium ion and/or H,
   c is 1 or in the case of alkaline earth metal ions ½.

In a preferred embodiment, the polycondensate contains a further structural unit (X) which is represented by the following formula 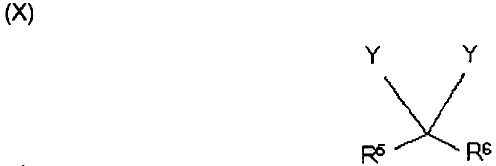
where
   Y, independently of one another, are identical or different and are represented by (VII), (VIII), (IX) or further constituents of the polycondensate
where
   R⁵ are identical or different and are represented by H, CH₃, COOM_{c} or a substituted or unsubstituted aromatic or heteroaromatic compound having 5 to 10 C atoms
where
   R⁶ are identical or different and are represented by H, CH₃, COOM_{c} or a substituted or unsubstituted aromatic or heteroaromatic compound having 5 to 10 C atoms.

Here, R⁶ and R⁶ in structural unit (X), independently of one another, are preferably represented by H, COOM_{c} and/or methyl.

The molar ratio of the structural units (VII), (VIII), (IX) and (X) of the phosphated polycondensate according to the invention can be varied within wide ranges. This has proved to be expedient if the molar ratio of the structural units [(VII) + (VIII) + (IX)]:(X) is 1:0.8 to 3, preferably 1:0.9 to 2 and particularly preferably 1:0.95 to 1.2.

The molar ratio of the structural units (VII):[(VIII) + (IX)] in component b) is usually 1:15 to 15:1, preferably 1:10 to 10:1 and more preferably 1:5 to 3:1.

In a preferred embodiment, the molar ratio of the structural units (VIII):(IX) is adjusted to 1:0.005 to 1:10, preferrably 1:0.01 to 1:1, in particular 1:0.01 to 1:0.2 and more preferably 1:0.01 to 1:0.1.

The groups A and D in the structural units (VII), (VIII) and (IX) of the polycondensate are generally represented by phenyl, 2-hydroxyphenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxynaphthyl, 4-methoxynaphthyl, preferably phenyl, it being possible for A and D to be chosen independently of one another and also in each case to consist of a mixture of said compounds. The groups B and E, independently of one another, are preferably represented by O.

The radicals R¹ R², R³ and R⁴ can be chosen independently of one another and are preferably represented by H, methyl, ethyl or phenyl, particularly preferably by H or methyl and especially preferably by H.

A in structural unit (VII) is preferably represented by an integer from 5 to 280, in particular 10 to 160 and particularly preferably 12 to 120 and b in structural units (VIII) and (IX) by an integer from 0 to 10, preferably 1 to 7 and particularly preferably 1 to 5. The respective radicals, the length of which is defined by a and b, respectively, may consist here of uniform building blocks, but a mixture of different building blocks may also be expedient. Furthermore, the radicals of the structural units (VII) or (VIII) and (IX), independently of one another, may each have the same chain length, a and b each being represented by a number. As a rule, however, it will be expedient if mixtures having different chain lengths are present in each case so that the radicals of the structural units in the polycondensate have different numerical values for a and independently for b.

Frequently, the phosphated polycondensate according to the present invention has a weight average molecular weight of 4000 g/mol to 150 000 g/mol, preferably 10 000 to 100 000 g/mol and particularly preferably 20 000 to 75 000 g/mol.

As a rule, the phosphated polycondensate according to the invention is present in the claimed formulation as aqueous solution which contains 2 to 90% by weight of water and 98 to 10% by weight of dissolved dry matter, preferably 40 to 80% by weight of water and 60 to 20% by weight of dissolved dry matter, and more preferably 45 to 75% by weight of water and 55 to 25% by weight of dissolved dry matter. The dry matter then substantially comprises the anhydrous phosphated polycondensate, where further components, such as antifoams and other auxiliaries, can advantageously also be present.

In a further embodiment the polycondensate b) is present in the formulation in proportions of 5 to 100% by weight, preferably of 10 to 60% by weight and particularly preferably of 15 to 40% by weight, based in each case on the total formulation.

In a particular embodiment, the invention furthermore envisages a sodium, potassium, ammonium and/or calcium salt and preferably a sodium and calcium salt, of the phosphated polycondensate.

The present invention also relates to a process for the preparation of a phosphated polycondensate, it being regarded as essential that the polycondensation and the phosphation be carried out in a reaction mixture. This is to be understood as meaning that the phosphated component formed in the reaction solution needs neither be purified nor isolated. The phosphation can be carried out before, during or after the polycondensation. It is to be regarded as being preferred here to carry out both the phosphation and the polycondensation in the same reaction vessel.

In a preferred embodiment, the reaction mixture with regard to the polycondensate component b) contains at least
(Ia) a monomer having a polyether side chain and an aromatic or heteroaromatic,
(IIIa) a monomer having an aromatic or heteroaromatic unit, (IIIa) being partially phosphated during the reaction and forming the monomer (IIa) and/or, in the polycondensate, the structural unit (IIa),
(IVa) a monomer having an aldehyde group and a phosphating agent,
structural unit (IIIa) not being the same as structural unit (Ia).

The monomers (Ia), (IIa), (IIIa) and (IVa) and, in the polycondensate, the structural unit (IIa) are preferably represented by the following general formulae:
- Monomer (Ia): 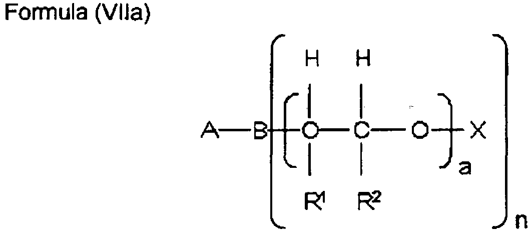
   where
      A are identical or different and are represented by a substituted or unsubstituted aromatic or heteroaromatic compound having 5 to 10 C atoms
   where
      B are identical or different and are represented by N, NH or O
   where
      n = 2 if B = N and n = 1 1 if B = NH or O
   where
      R¹ and R², independently of one another, are identical or different and are represented by a branched or straight-chain C₁- to C₁₀-alkyl radical, C₅- to C₈-cycloalkyl radical, aryl radical, heteroaryl radical or H
   where
      a are identical or different and are represented by an integer from 1 to 300
   where
      X are identical or different and are represented by a branched or straight-chain C₁- to C₁₀-alkyl radical, C₅-to C₈-cycloalkyl radical, aryl radical, heteroaryl radical or H;
- Monomer (IIa): 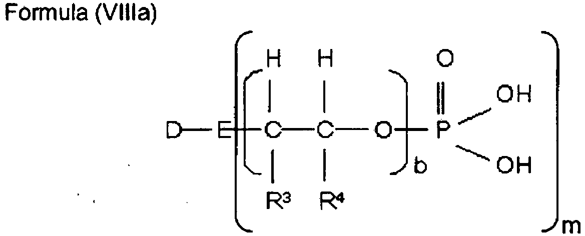
- Monomer (IIIa): 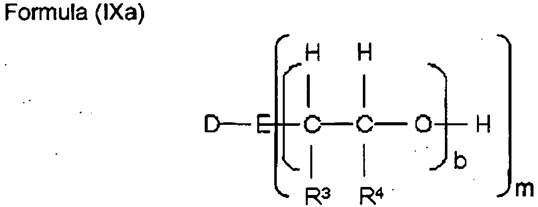 for formulae (VIIIa) and (IXa) in each case:
   where
      D are identical or different and are represented by a substituted or unsubstituted heteroaromatic compound having 5 to 10 C atoms
   where
      E are identical or different and are represented by N, NH or O
   where
      m = 2 if E = N and m = 1 if E = NH or O
   where
      R³ and R⁴, independently of one another, are identical or different and are represented by a branched or straight-chain C₁- to C₁₀-alkyl radical, C₅- to C₈-cycloalkyl radical, aryl radical, heteroaryl radical or H
   where
      b are identical or different and are represented by an integer from 0 to 300;
- Monomer (IVa): 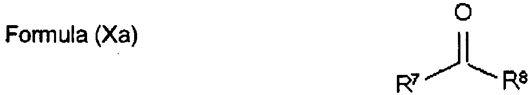
   where
      R⁷ are identical or different and are represented by H, CH₃, COOH and/or a substituted or unsubstituted aromatic or heteroaromatic compound having 5 to 10 C atoms
   where
      R⁸ are identical or different and are represented by H, CH₃, COOH and/or a substituted or unsubstituted aromatic or heteroaromatic compound having 5 to 10 C atoms.

The present invention provides different variants of the reaction procedure. One possibility consists in first reacting the monomer (IIIa) with a phosphating agent and subjecting the monomer (IIa) thus obtained to polycondensation with the monomers (Ia), (IIIa) and (IVa). The monomer (IIIa) may originate here from an incomplete reaction during the phosphation reaction or can be deliberately added to the reaction mixture after the phosphation reaction.

However, it is also possible to subject the monomers (Ia), (IIIa) and (IVa) to a polycondensation and then to react the polycondensate obtained with a phosphating agent. In a further embodiment, the monomers (Ia), (IIIa) and (IVa) and the phosphating agent are reacted simultaneously.

In particular, polyphosphoric acid and/or phosphorous pentoxide have proved suitable here as phosphating agents.

As a rule, the polycondensation is carried out in the presence of an acidic catalyst, this preferably being sulphuric acid, methanesulphonic acid, para-toluenesulphonic acid or mixtures thereof.

The polycondensation and the phosphation are advantageously carried out at a temperature between 20 and 140°C and a pressure between 1 and 10 bar. In particular, a temperature range between 80 and 110°C has proved to be expedient. The duration of the reaction may be between 0.1 and 24 hours, depending on temperature, the chemical nature of the monomers used and the desired degree of crosslinking. Once the desired degree of crosslinking has been reached, which can also be determined, for example, by measurement of the viscosity of the reaction mixture, the reaction mixture is cooled.

According to a particular embodiment, the reaction mixture is subjected to a thermal aftertreatment at a pH between 8 and 13 and a temperature between 60 and 130°C after the end of the condensation and phosphation reaction. As a result of the thermal aftertreatment, which advantageously lasts for between 5 minutes and 5 hours, it is possible substantially to reduce the aldehyde content, in particular the formaldehyde content, in the reaction solution.

In a further particular embodiment, the present invention envisages subjecting the reaction mixture to a vacuum aftertreatment at pressures between 10 and 900 mbar after the end of the condensation and phosphation reaction, for reducing the aldehyde content. Furthermore, however, other methods known to the person skilled in the art for reducing the formaldehyde content may also be used. An example is the addition of small amounts of sodium bisulphite, ethylene urea and/or polyethylenimine.

The phosphated polycondensates obtained by these processes can be used directly as component b). In order to obtain a better shelf life and better product properties, it is advantageous to treat the reaction solutions with basic compounds. It is therefore to be regarded as being preferred to react the reaction mixture after the end of the reaction with a basic sodium, potassium, ammonium or calcium compound. Sodium hydroxide, potassium hydroxide, ammonium hydroxide or calcium hydroxide has proved to be particularly expedient here, it being regarded as being preferred to neutralize the reaction mixture. However, other alkali metal and alkaline earth metal salts and salts of organic amine are suitable as salts of the phosphated polycondensates.

Furthermore, however, the present invention also provides the preparation of mixed salts of the phosphated polycondensates. These can expediently be prepared by reacting the polycondensates with at least two basic compounds.

Thus, by a targeted choice of suitable alkali metal and/or alkaline earth metal hydroxides, it is possible by neutralization to prepare salts of the polycondensates according to the invention, with which the duration of the processability of aqueous suspensions of inorganic binders and in particular of concrete can be influenced. While a reduction in the processability over time is observable in the case of the sodium salt, a complete reversal of this behavior takes place in the case of the calcium salt of the identical polymer, a smaller water reduction (smaller slump) occurring at the beginning and increasing with time. As a result of this, sodium salts of the phosphated polycondensates lead over time to a decrease in the processability of the binder-containing material, such as, for example, concrete, mortar or gypsum slurries, whereas the corresponding calcium salts lead with time to improved processability. By suitable choice of the amount of sodium and calcium salts of the phosphated polycondensates used, the development of the processability of binder-containing materials can thus be controlled as a function of time. Expediently, the corresponding phosphated polycondensates, which consist of sodium and calcium salts, are prepared by reaction with a mixture of basic calcium and sodium compounds, in particular calcium hydroxide and sodium hydroxide.

According to the present invention, the catalyst used can also be separated off. This can expediently be effected via the salt formed during the neutralization. If sulphuric acid is used as a catalyst and the reaction solution is treated with calcium hydroxide, the calcium sulphate formed can be separated off, for example, in a simple manner by filtration.

Furthermore, by adjusting the pH of the reaction solution to 1.0 to 4.0, in particular 1.5 to 2.0, the phosphated polycondensate can be separated from the aqueous salt solution by phase separation and can be isolated. The phosphated polycondensate can then be taken up in the desired amount of water.

However, other methods known to the person skilled in the art, such as dialysis, ultrafiltration or the use of an ion exchanger, are also suitable for separating off the catalyst.

Surprisingly, with a phosphated polycondensate according to the invention as component b) of the formulation an improved efficiency was found in comparison with the polycondensates known in the prior art. As additional favorable effect a significantly decreased retardation of the setting and hardening of the various construction compositions compared to other dispersants is to be observed, independently from the dosage of component b). This effect of the polycondensate component b) as well as an expedient influence on the pore structure surprisingly can be observed also with the formulation according to the present invention.

Additionally, it has proved particularly advantageous that [the phosphated polycondensates according to the invention] can be prepared by a very economical process, no further purification of intermediates being required. In particular, no wastes which have to be disposed of form in the process according to the invention. Thus, the claimed process also constitutes further progress compared with the prior art from environmental points of view. The reaction mixture obtained can be put directly to the intended formulation optionally after treatment with basic compounds.

### 3. Additional components and aspects

In a specific embodiment the claimed formulation contains additionally to the components a) and b) at least one antifoaming agent c) and/or a component d) having a surface-active effect, the components c) and d) being structurally different from one another.

The antifoaming agent c) is preferably selected from the group consisting of a mineral oil, a vegetable oil, a silicon oil, a silicon containing emulsion, a fatty acid, a fatty acid ester, an organic modified polysiloxane, a borate ester, an alkoxylate, a polyoxialkylene copolymer, ethylene oxide (EO)-propylene oxide (PO) block polymer, acetylenic diols having defoaming properties and a phosphoric ester having the formula P(O) (O-R₈)₃₋ₓ(O-R₉)ₓ wherein P represents phosphorus, O represents oxygen and R₈ and R₉ are independently a C₂-C₂₀ alkyl or an aryl group and x = 0, 1, 2, whereby an alkyl group with C₂-C₈ is preferred.

Preferably said antifoaming agent c) comprises tri-alkylphosphate and more preferably triiso-butylphosphate, a polyoxypropylen copolymer and a glycerol/alcohol acetate.

The invention additionally comprises an admixture wherein said antifoaming agent c) comprises a mixtures of a tri-alkylphosphate and a polyoxypropylene copolymer.

The second optional component of the formulation, namely the surfactant, is preferably selected from the group consisting of a ethylene oxide/propylene oxide (EO/PO) block copolymer, a styrene/maleic acid copolymer, a fatty alcohol alkoxylate, an alcohol ethoxylate R₁₀-(EO)-H with R₁₀ being an aliphatic hydrocarbon group having from 1 to 25 carbon atoms, acetylenic diols, monoalkylpolyalkylenes, ethoxylated nonylphenols, alkylsulfates, alkylethersulfats, alkylethersulfonates, alkyl ether carboxylates.

More preferably surfactant component d) comprises an alcohol having a polyalkylene group consisting of a carbon chain length of 2 to 20 carbon atoms, with a specific carbon chain length of C₃-C₁₂.

Advantageously the formulation according to the invention comprises an aqueous composition that contains the antifoaming agent component c) in free form or attached to the dispersing components a), and/or b). If the antifoaming agent is attached to the dispersing components it can be physically or chemically attached, and the chemically attached in this case in polymerized and/or grafted form being preferred. When chemically attached, the antifoaming agent c) also can be considered as a third comonomer of the copolymeric dispersing components a₁), a₂), a₃). In its free form the antifoaming agent c) is a blend component of the formulation. Thus, antifoaming agent component c) is either physically and/or chemically attached to the dispersing components a₁), a₂) and/or a₃) and/or it is a free form component and therefore constituent of a blend.

In a further embodiment the antifoaming component c) is present in amounts of 0.01 to 10% by weight and/or the surface-active component d) is present in amounts of 0.01 to 10% by weight, based in each case on the total weight of the formulation. According to a preferred embodiment the antifoaming formulation according to any of Claims 52 to 61, characterized in that the antifoam c) and/or the surface-active component d), independently of one another, are present in each case in an amount of 0.01 to 5% by weight, based in each case on the total weight of the formulation. The present invention additionally comprises an embodiment whereby the formulation in addition to the components a) and b) and optionally c) and/or d), contains at least one further compound e) selected from the group consisting of a polymer having a low charge, a neutral polymer or polyvinyl alcohol. This component e) and particularly its specific role in systems containing calcium sulfate as hydraulic binder has been teached in the unpublished provisional European Patent application EP 08171022.0. The component e) plays a major role in gypsum composition with certain clay contents.

In the use of clay-containing forms of gypsum, and particularly natural gypsum, it can be observed that considerable quantities of the dispersant (fluidizing agent) used are absorbed or adsorbed by the clay mineral, as a result of which they are no longer available for the fluidization of the gypsum hemihydrate in the gypsum mixture.

To solve this problem, attempts were made to use so-called sacrificial substances, which in competition with the dispersant bind more strongly to the surface of the clay particles and in this way either mask these so that they are no longer accessible to the dispersant, or largely flocculate the clay particles.

According to the mentioned European application there has been provided a formulation based on a branched comb polymer with ethylene oxide (EO) units in the side-chains for the dispersion of clay-containing gypsum mixtures. These formulations are capable of masking clay minerals such as are in particular contained in natural gypsum to a sufficient extent that the surfaces thereof are no longer available for the adsorption of dispersants. They have no adverse effect on the fluidization and consistency of the wet and unhardened gypsum mixture and they are stable to the temperatures used in the drying of the gypsum products, so that no odour problems arise.

In this connection and with regard to clay-containing gypsum compositions a copolymer component a₂) is to prefer that is based on a hydrolysable monomer A having an active binding site for at least one component of the clay-containing gypsum mixture.

With component e) according to the present invention, the surface of the clay particles can be more effectively coated through the bunching of flexible EO side-chains on a polymer backbone or the clay particles can themselves be better flocculated overall. Because of the lower charge density, the component e) can adsorb mainly on the clay and not on the binder such as gypsum hemihydrate.

Evidently a not insignificant role in the effects is played by the side-chains of the "sacrificial substance". These must include EO units; however, the side-chains can also in addition have polyethylene oxide (PO) units. The same applies for the main substance contained in the formulation according to the invention, the comb polymer with dispersant properties; this can contain either EO or PO units or both in its side-chains. Here the mixed modifications can also each be implemented in at least one, that is the same, side-chain.

Overall, it can be stated that from the chemical point of view the component e) optionally contained in the formulation according to the invention as a sacrificial substance to some extent differs only insignificantly from the dispersants a) commonly used in clay-containing gypsums, since it also consists inter alia of polycarboxylate ethers. The difference consists however in the charge state, since only representatives with low or neutral charge are possible as the sacrificial substance. In other words, the manufacture of gypsum products in particular can also be effected with the aid of dispersants which inter alia consist of copolymer mixtures wherein the low-charge or neutral polymer fractions predominantly mask the clay minerals and thus enable the remaining dispersant content to exert its actual fluidizing agent action.

The advantageous action of the formulation according to the present invention and mainly based on component e) is displayed in essentially all clay-containing gypsum mixtures. However, the positive action is especially pronounced in gypsum systems which contain at least one representative of the series calcium sulphate, calcium sulphate semihydrate or calcium sulphate hemihydrate, anhydrite and gypsum.

The clay fraction in the gypsum mixture should preferably be swellable and in particular water-swellable and derive from the series of the smectites, montmorillonites, bentonites, vermiculites, hectorites or from the series of the kaolins, feldspars and micas such as for example illite and mixtures thereof.

Essentially, care should be taken that the clay contents in the gypsum mixtures do not exceed certain limits. For this reason, the present invention recommends clay contents in the gypsum mixtures of ≤ 10 wt.%, preferably ≤ 6 wt.%, preferably ≤ 4 wt.% and especially preferably between 0.5 and 3 wt.%, each based on the gypsum component.

For the polymer component e), proportions from 0.01 to 0.40 wt.%, preferably from 0.02 to 0.30 wt.%, preferably from 0.03 to 0.15 wt.% and especially preferably from 0.5 to 0.10 wt.%, each again based on the gypsum component, are recommended.

In a further embodiment of the invention the formulation contains the component e) in amounts of 1 to 50% by weight, preferably of 5 to 40% by weight and particularly preferably in amounts of 10 to 30% by weight, based in each case on the total weight of the formulation.

In the context of the present invention, the polymer component e), which reacts with the clay particles in the gypsum mixture, is of particular significance. In the case of a low-charge polymer as component e) this should be branched, the side-chain preferably consisting of a polyether. Polycarboxylate ethers and/or polycarboxylate esters, preferably with EO side-chains and with a carboxylate content up to 83 mol.%, and preferably up to 75 mol.% are to be regarded as especially preferred in this connection.

As already stated, component a) of the formulation should advantageously include at least one polycarboxylate derivative (ether, ester); in particular if this has a low charge content, it cannot on account of its specific properties adsorb for example onto gypsum to the necessary extent. For this reason, the generally known dispersant action of polycarboxylate ethers and esters in particular does not occur to the necessary extent in this case. Hence the content of the charge-bearing component is important for the dispersant action of such representatives. Since the copolymer components a₁), a₂) and a₃) and, to some extent, depending on its chemical character, also component e) can compete with one another as regards the dispersant action, it is advantageous overall to select the respective contents in the formulation according to the invention such that the copolymer component a) can exhibit its dispersant action to the maximum and the component e) because of its charge properties has as little dispersant action as possible, but instead is maximally adsorbed on the clay particles.

If a low-charge polymer with a polyether side-chain is used as component e), then this should be made up of at least one monomer selected from the series polyether monoacrylate, polyether monomethacrylate, polyether monoallyl ether, polyether monomaleate, monovinylated polyether or mixtures thereof. In the case of a polyether, this can be an alkylene oxide polymer with a molecular weight from 500 to 10 000, preferably from 750 to 7500 and in particular from 1000 to 5000. As representative alkylene oxide polymers, those based on an ethylene oxide, propylene oxide, butylene oxide or mixtures thereof may be mentioned.

Low-charge polymers which are built up of at least one monomer selected from the series polypropylene glycol acrylates, polypropylene glycol methacrylates, polyethylene glycol acrylates, polyethylene glycol methacrylates, polypropylene glycol monovinyl ethers, polythylene glycol monovinyl ethers, alkoxy or aryloxypolyethylene glycol acrylates, alkoxy or aryloxypolyethylene glycol methacrylates, alkoxy or aryloxy-polyethylene glycol monovinyl ethers, acrylates, methacrylates and monovinyl ethers of an oxyethylene and oxypropylene block or randomized copolymer, polypropylene glycol allyl ether, polyethylene glycol allyl ether, polyethylene glycol monomaleate, polypropylene glycol monomaleate and any mixtures thereof have been found especially suitable.

It can be seen as preferred embodiment that the polymer e) having a low charge carries a carboxylic acid group, preferably selected from the series consisting of acrylic acid, methacryl acid, maleic acid, fumaric acid, itaconic acid or anhydrides thereof. According to the invention, the low-charge polymer can also bear a carboxylic acid and/or sulphonic acid groups. In this case, the present invention specifies that the carboxylic acid group is preferably at least one representative of the series acrylic acid, methacrylic acid, maleic acid, fumaric acid, itaconic acid or anhydrides thereof. 2-Acrylamido-2-methylpropanesulphonic acid (AMPS), vinylsulphonic acid, allyl ether sulphonic acid, 2-sulphoethylmethacrylic acid, styrenesulphonic acid, methallyl-sulphonic acid, and sodium, potassium and ammonium salts and any mixtures thereof, are preferred representatives of compounds which make sulphonic acid groups available. AMPS and vinylsulphonic acid are to be regarded as especially preferable.

In the case of neutral polymers as component e), these should be made up of neutral monomer building blocks, which are in particular selected from the series acrylic acid alkyl esters and methacrylic acid alkyl esters and hydroxyalkyl esters thereof with up to 5 carbon atoms. Particularly suitable in this case are hydroxyethyl acrylate and hydroxypropyl acrylate and hydroxyethyl methacrylate and hydroxypropyl methacrylate. Also possible are vinyl acetate, N-vinylpyrrolidone, N-vinylcaprolactam, styrene and methylstyrene.

In a further embodiment the present invention relates to a formulation that contains as additional further component f) a calcium-silicate-hydrate (C-S-H) containing composition.

It is well known to a skilled person that admixtures for building material mixtures comprising hydraulic binders typically also contain hardening accelerators which shorten the setting time of the hydraulic binder. According to WO 02/070425, calcium silicate hydrate (C-S-H), in particular present in dispersed (finely or particularly finely dispersed) form, can be used as such a hardening accelerator. However, commercially available C-S-H or corresponding C-S-H dispersions may be regarded only as hardening accelerators which have little effect.

By the non-published provisional application EP 08163468.5 of September 2008 a composition acting as a plasticizer and moreover showing a good performance as a hardening accelerator has been provided.

According to the present invention the C-S-H containing composition is prepareble by reaction of a water-soluble calcium containing compound with a water-soluble silicate containing compound, the reaction of the water-soluble calcium containing compound with the water-soluble silicate containing compound being carried out in the presence of an aqueous solution preferably containing a water-soluble copolymer that preferably is a dispersant for hydraulic binders and selected from at least a representative of component a) and/or b).

In principle, only relatively slightly water-soluble compounds are also suitable in each case as water-soluble calcium compounds and water-soluble silicate compounds, although readily water-soluble compounds (which dissolve completely or virtually completely in water) are preferred in each case. However, it must be ensured that a reactivity sufficient for the reaction is present in an aqueous environment with the corresponding reactant (either water-soluble calcium compound or water-soluble silicate compound). It is probably to be assumed that the reaction takes place in aqueous solution but a water-insoluble inorganic compound (C-S-H) is usually present as a reaction product.

In the context of the present invention, comb polymers are to be understood as meaning those polymers which have relatively long side chains (having a molecular weight of in each case at least 200 g/mol, particularly preferably at least 400 g/mol) on a linear main chain at more or less regular intervals. The lengths of these side chains are frequently approximately equal but may also differ greatly from one another (for example when polyether macromonomers having side chains of different lengths are incorporated in the form of polymerized units).

In principle, component f) acts as accelerator and in a preferred embodiment contains an inorganic and an organic component. The inorganic component may be regarded as modified, finely disperse calcium silicate hydrate (C-S-H) which may contain foreign ions, such as magnesium and aluminium. The C-S-H can be prepared in the presence of the comb polymer plasticizer (organic component). Usually, a suspension containing the C-S-H in finely disperse form is obtained, which suspension firstly acts as a plasticizer and secondly effectively accelerates the hardening process of hydraulic binders.

The inorganic component can in most cases be described with regard to its composition (not with regard to particle size, specific surface area, etc) by the following empirical formula:

a CaO, SiO₂, b Al₂O₃, c H₂O, d X, e W

X is an alkali metal
W is an alkaline earth metal

| | | |
|---|---|---|
| 0.1 ≤ a ≤ 2 | preferably | 0.66 ≤ a ≤ 1.7 |
| 0 ≤ b ≤ 1 | preferably | 0 ≤ b ≤ 0.1 |
| 1 ≤ c s 6 | preferably | 1 ≤ c ≤ 6.0 |
| 0 ≤ d ≤ 1 | preferably | 0 ≤ d ≤ 0.4 |
| 0 ≤ e ≤ 2 | preferably | 0 ≤ e ≤ 0.1 |

According to the present invention the C-S-H shows a calcium/silicium (Ca/Si)-molar ratio of 0.5 to 2.0, preferable 0.7 to 1.8, more preferable 1.6 to 1.7. The average particle size of C-S-H is smaller than 10 µm, preferable smaller than 1 µm, more preferable smaller than 0.2 µm, measured by light scattering with the equipment Master Sizer 2000 from the Malvern Company. In a further preferred embodiment the average particle size of C-S-H is greater 0.01 µm, preferable 0.1 µm to 1.0 µm, more preferable 0.2 µm to 0.5 µm.

With other words the dispersant that is used for this method of preparation can be identical to the representatives of the dispersing component a) and/or b) of the formulation. The dispersing agent in this method of preparation is necessary for achieving a small particle size distribution of the C-S-H compound.

Preferably that C-S-H containing composition is preperable by reaction of a calcium oxide, a calcium carbonate and/or a calcium hydroxide with a silicium dioxide during milling, the reaction being carried out in the presence of an aqueous solution that preferably contains a water-soluble copolymer that preferably is a dispersant for hydraulic binders and selected from at least a representative of component a) and/or b).

In a further preferred embodiment of the invention, the water-soluble calcium compound is mixed in a first step, with the aqueous solution which contains a water-soluble comb polymer suitable as a plasticizer for hydraulic binders, so that a mixture preferably present as a solution is obtained, to which the water-soluble silicate compound is added in a subsequent second step.

The aqueous solution may also contain one or more further solvents in addition to water.

In a further preferred embodiment, the aqueous solution containing the dispersant and preferably one that is selected from component a) and/or b) furthermore has the water-soluble calcium compound and the water-soluble silicate compound as components dissolved in it.

In general, the components used are used in the following ratios:
i) 0.01 to 75, preferably 0.01 to 5, % by weight of water-soluble calcium compound,
ii) 0.01 to 75, preferably 0.01 to 5 % by weight of water-soluble silicate compound,
iii) 0.001 to 60, preferably 0.1 to 15 % by weight of water-soluble comb polymer suitable as a plasticizer for hydraulic binders (preferably component a) and/or b))
iv) 24 to 99, preferably 90 to 99, % by weight of water.

Frequently, the aqueous solution also contains, in addition to silicate and calcium ions, further dissolved ions which are preferably provided in the form of dissolved aluminium chloride and/or dissolved magnesium chloride.

The water-soluble dispersant can be a comb polymer and be present as a copolymer which contains, on the back bone, side chains having ether functions and acid functions.

As a rule, the water-soluble comb polymer is present as a copolymer which is produced by free radical polymerization in the presence of acid monomer and polyether macromonomer, so that altogether at least 45 mol %, preferably at least 80 mol %, of all structural units of the copolymer are produced by incorporation of acid monomer and polyether macromonomer in the form of polymerized units. Acid monomer is to be understood as meaning monomers which are capable of free radical copolymerization, have at least one carbon double bond, contain at least one acid function and react as an acid in an aqueous medium. Furthermore, acid monomer is also to be understood as meaning monomers which are capable of free radical copolymerization, have at least one carbon double bond, form at least one acid function in an aqueous medium as a result of a hydrolysis reaction and react as an acid in an aqueous medium (example: maleic anhydride).

In the context of the present invention, polyether macromonomers are compounds which are capable of free radical copolymerization, have at least one carbon double bond, and have at least two ether oxygen atoms, with the proviso that the polyether macromonomer structural units present in the copolymer have side chains which contain at least two ether oxygen atoms.

For further details reference is made to the description of the components a) and b) of the claimed formulation hereto.
Often, the water-soluble calcium compound is present as calcium chloride, calcium nitrate, calcium formate, calcium acetate, calcium bicarbonate, calcium bromide, calcium carbonate, calcium citrate, calcium chlorate, calcium fluoride, calcium gluconate, calcium hydroxide, calcium hypochloride, calcium iodate, calcium iodide, calcium lactate, calcium nitrite, calcium oxalate, calcium phosphate, calcium propionate, calcium silicate, calcium stearate, calcium sulphate, calcium sulphate hemihydrate, calcium sulphate dihydrate, calcium sulphide, calcium tartrate and/or calcium aluminate, tricalcium silicate and/or dicalcium silicate.

The water-soluble calcium compound is preferably present as calcium chloride, calcium nitrate and/or calcium formate.

Often, the water-soluble silicate compound is present as sodium silicate, potassium silicate, waterglass, aluminium silicate, tricalcium silicate, dicalcium silicate, calcium silicate, silicic acid, sodium metasilicate and/or potassium metasilicate.

The water-soluble silicate compound is preferably present as sodium metasilicate, potassium metasilicate and/or waterglass.

In principle, a calcium silicate (provided that it is soluble) may be used both as a silicate source and as a calcium source. In many cases, however, this is not preferred. As a rule, species of different types are used as the water-soluble silicate compound and as the water-soluble calcium compound.

According to the present invention the formulation is a liquid or a powder and preferably a redispersant powder.

The powder form of the formulation can be achieved by any method known to a skilled person. Preferred is the spray drying method that is also suitable for getting the formulation of the invention as redispersant powder.

### 4. Method of Use

Beside the formulation itself a method of use of the formulation states a further embodiment of the present invention.

In this connection the use of the formulation for controlling the flowability of aqueous suspensions used in construction chemistry and in particular in aqueous suspensions containing hydraulic and/or latent hydraulic binders is of main interest. The formulation is used in particular as composition with dispersing properties. Regarding the aqueous suspensions it is a further embodiment that these compositions contain, as a hydraulic binder at least one representative selected from the group consisting of cements and calcium sulphate-based compounds, in particular calcium sulphate hemihydrate, anhydrite or gypsum. The aqueous suspension according to the present invention preferably is based on a dry mortar composition or a flooring composition. In a further embodiment the flooring composition contains calcium sulphate or cement or mixtures thereof, and preferably is a self-leveling flooring composition.

Independent from the specific use the formulation according to the present invention is to be used in amounts of 0.001 to 8.0% by weight, in particular 0.005 to 5.0% by weight, preferably 0.01 to 2.0% by weight and particularly preferably 0.05 to 1.0% by weight, based in each case on the total composition of the suspension.

Finally, the present invention comprises the option that the formulation is used together with other admixtures or compositions, preferably with flowability controlling and/or dispersing properties, and more preferably together with at least one dispersant of the type of component a) and/or the polymerisation product b) of the formulation.

This means that the combination of component a) and component b) can be used as formulation according to the present invention and additionally that this formulation can be used together with other compounds, additives, admixtures or compositions. In consequence components a) and b) can be used as substantial constituents of the formulation and additionally as single compounds together with such formulation. This kind of use can be practiced stepwise, that means that either the formulation or the additional dispersants are added to the hydraulic binder containing composition in the first step of use and that additional amounts of the formulation its components are added in up following process steps.

The following examples underline the advantages of the claimed formulation, its comprised components and its use.

### Examples

### 1. Preparation of comb branched polycondensates (component b)

### Example 1.1

A reactor equipped with a stirrer and a heating mantle is filled with 600 parts of poly(ethyleneoxide) monophenylether (average molecular weight 5000 g/mol), 47.2 parts of concentrated methane sulfonic acid, 12 parts of water, 110 parts of α-phenyl-ω-hydroxypoly(oxy-1,2-ethanediyl) phosphate (average molecular weight 368 g/mol) and 14.7 parts of paraformaldehyde. This reaction mixture is stirred at 115°C for 3h. After cooling, 830 parts of water are added the reaction mixture is neutralized with 50% sodium hydroxide solution to a pH value of 6.5 to 7. The resin is a light yellow colored, clear and aqueous polymer solution with a solid concentration of 40 % by weight. To the stirred solution (500 rpm) of the polymeric dispersant the antifoaming agent and the surfactant are added at ambient temperature (25 °C). The amounts of the materials shown in Table 2 are in percent by weight of the solution.

### Example 1.2

A reactor equipped with a stirrer and a heating mantle is filled with 26 parts of polyphosphoric acid and heated to 90°C. Within 15 min 44.2 parts of 2-phenoxyethanol are charged into the reactor. After 1h, 400 parts of poly(ethyleneoxide) monophenylether (average molecular weight 5000 g/mol), 31.4 parts of concentrated methane sulfonic acid, 20 parts of water and 12.6 parts of paraformaldehyde are added. This reaction mixture is stirred at 105 °C for 6h. After cooling, 550 parts of water are added and the reaction mixture is neutralized with 50% sodium hydroxide solution to a pH value of 6.5 to 7. The resin is a light brown colored, clear and aqueous polymer solution with a solid concentration of 40 % by weight. To the stirred solution (500 rpm) of the polymeric dispersant the antifoaming agent and the surfactant are added at ambient temperature (25 °C). The amounts of the materials shown in Table 2 are in percent by weight of the solution.

### Example 1.3

A reactor equipped with a stirrer and a heating mantle is filled with 51.6 parts of polyphosphoric acid and heated to 90°C. Within 15 min 90 parts of 2-phenoxyethanol are charged into the reactor. After 1 h, 322 parts of poly(ethyleneoxide) monophenylether (average molecular weight 5000 g/mol), 300 parts of poly(ethyleneoxide) monophenylether (average molecular weight 2000 g/mol), 42.1 parts of concentrated methane sulfonic acid, 16.8 parts of water and 28.5 parts of paraformaldehyde are added. This reaction mixture is stirred at 105 °C for 6h. After cooling, 800 parts of water are added and the reaction mixture is neutralized with 50% sodium hydroxide solution to a pH value of 6.5 to 7. The resin is a light brown colored, clear and aqueous polymer solution with a solid concentration of 40 % by weight. To the stirred solution (500 rpm) of the polymeric dispersant the antifoaming agent and the surfactant are added at ambient temperature (25 °C). The amounts of the materials shown in Table 2 are in percent by weight of the solution.

### 2. Formulation of dispersant component a) with polycondensate component b)

The examples E1 till E20 (see Table 1 and 2) were prepared by mixing the polycondensate components b) with equivalent amounts (wt. %) of the dispersants a). Melflux PCE 239 L 35% N.D., Melflux 2500 L 45% N.D., Melflux 2453 L 44% N.D., VP2661/493 L 40% N.D., Melflux 2424 L 50% N.D., Melflux AP 120 L 40%, and Sokalan DS5009 X are a polycarboxylate ether dispersant available from BASF Construction Polymers GmbH, Germany. Melcrete 500 L is a naphthalene sulfonate dispersant (BNS) available from BASF Construction Polymers GmbH. Melment L 15 G is a melamine sulphonate-formaldehyde condensate (MFS) available from BASF Construction Polymers GmbH. The non-ionic polymers N1 and N2 are able to maintain the fluidity of a cement composition and are synthesized according to the still unpublished application US Serial No. 12/477637.

**Table 1**

| Formulation (E: Invention; C: Comparison) | Polycondensate b) according to example | Dispersant a) | Molar Ratio of poly-condensate b) and dispersant a) | Solid content (wt. %) | Stability over 3 months |
|---|---|---|---|---|---|
| E1 | C7 | Melflux PCE 239 L | 2 / 1 | 35 | stable |
| E2 | C8 | Melflux PCE 239 L | 2 / 1 | 35 | stable |
| E3 | C7 | BNS | 1 / 1 | 25 | stable |
| E4 | C8 | BNS | 1 / 1 | 25 | stable |
| E5 | C9 | BNS | 1 / 1 | 25 | stable |
| E6 | C8 | Melflux 2500 L | 1 / 1 | 40 | stable |
| E7-1 | C8 | VP2661/493 L | 3 / 1 | 40 | stable |
| E7-2 | C8 | VP2661/493 L | 1 / 3 | 40 | stable |
| E8-1 | C8 | Melflux PCE 239 L | 3 / 1 | 35 | stable |
| E8-2 | C8 | Melflux PCE 239 L | 1 / 3 | 35 | stable |
| E9 | C8 | BNS | 2 / 1 | 20 | stable |
| E10 | C8 | Sokalan 5009X | 2 / 1 | 35 | stable |
| E11 | C8 | Melflux AP 120 L | 2 / 1 | 40 | stable |
| E12 | C8 | Melment L 15G | 2 / 1 | 40 | stable |
| E13 | C8 | N1 | 2 / 1 | 30 | stable |
| E14 | C8 | VP2661/493 L | 2 / 1 | 40 | stable |
| E15 | C9 | VP2661/493 L | 2 / 1 | 40 | stable |
| E16 | C7 | BNS | 3 / 1 | 25 | stable |
| E17 | C7 | Melflux 2500 L | 1 / 1 | 40 | stable |
| E18 | C7 | Melflux 2453 L | 1 / 1 | 40 | stable |
| E19 | C7 | Melflux 2424 L | 1 / 1 | 40 | stable |
| E20 | C8 | N2 | 2 / 1 | 30 | stable |
| C1 | - | Melflux 2500 L | | 40 | |
| C2 | - | Melflux PCE 239 L | | 35 | |
| C3 | - | VP2661/493 L | | 40 | |
| C4 | - | 1 : 1 mixture of Melflux 2500 L / BNS | | 25 | gel formation |

### 3. Formulations of a dispersant with surface-active properties as component a), polycondensates b), antifoaming agents as component c)

In the following admixtures (Test Solution) antifoaming agent A1 has been a polypropyleneglycol commercially available as Pluriol® P2000 and, antifoaming agent A2 an alkoxylated alcohol commercially available as Degressal® SD23 and antifoaming agent A3 a carboxylic ester commercially available as Degressal® SD30 all from BASF SE (Ludwigshafen, Germany). Surfactant S1 was an ethoxylated oxo-alcohol commercially available as Lutensol® TO6 from BASF SE (Ludwigshafen, Germany). Surfactant S2 (as component a) is a styrene/maleic acid copolymer which was synthesized according to EP 0306449 A2.

**Table2**

| Solution (E: Invention; C: Comparison) | Dispersant according to example | Antifoaming agent (wt.-%) | | | Surfactant (wt.-%) | | Stability over 3 months at RT |
|---|---|---|---|---|---|---|---|
| | | A1 | A2 | A3 | S1 | S2 | |
| E21 | E1 | | 0.4 | | 0.6 | | + |
| E22 | 1.1 | 0.2 | | | | 0.3 | + |
| E23 | 1.1 | | 0.4 | | | 0.6 | + |
| E24 | E2 | 0.2 | | | 0.3 | | + |
| E25 | 1.2 | 0.2 | | | | 0.3 | + |
| E26 | 1.2 | | 0.4 | | | 0.8 | + |
| E27 | 1.2 | | | 0.2 | | 0.3 | + |
| E28 | 1.1 | | | 0.2 | | 0.3 | + |
| E29 | 1.3 | | | 0.2 | | 0.3 | + |
| E30 | E1 | | 0.2 | | | 0.3 | + |
| E31 | E2 | | 0.2 | | | 0.3 | + |
| C5 | 1.1 | 0.4 | | | | | -)* |
| C6 | 1.2 | 0.4 | | | | | -)* |
| C7 | 1.1 | none | none | none | none | none | n.a. |
| C8 | 1.2 | none | none | none | none | none | n.a. |
| C9 | 1.3 | none | none | none | none | none | n.a. |

| | | | | | | | |
|---|---|---|---|---|---|---|---|
| )* phase separation within two days | | | | | | | |

### 4. Viscosities of formulations consisting of naphthalene sulfonate as component a) and polycondensates b)

The viscosities of the dispersants solutions were measured with a capillary viscometer at 25 °C. The solutions were prepared by mixing a 25 Wt. % BNS solution with 25 Wt. % solutions of the dispersants as indicated in Table 1 and 3.

**Table 3**

| Formulation or dispersant | Dispersant : BNS ratio | Viscosity in mPas |
|---|---|---|
| C1 | - | 59.1 |
| C4 | 1 : 1 | 529.4 |
| C7 | - | 28.0 |
| E3 | 1 : 1 | 137.1 |
| C8 | - | 32.9 |
| E4 | 1 : 1 | 188.8 |
| C9 | - | 24.5 |
| E5 | 1 : 1 | 83.2 |

As can be seen from Table 3, the viscosity of the admixture E3, E4 and E5 is only slightly higher compared to the viscosity of the pure condensates C7, C8 and C9. Whereas the admixtures E3, E4 and E5 keep their low viscosity over time, the mixture of BNS and the polycarboxylate ether starts to form a non pourable gel. Unlike C4, the admixture E3, E4 and E5 are usable as dispersant agents for hydraulic binders (see below for application tests).

### 5. Gypsum based thin layer levelling

### Guide recipe:

| | |
|---|---|
| Alpha hemi hydrate | 300 g |
| Sand (0 - 0.2 mm) | 350 g |
| Lime stone filler | 150 g |
| Citric acid | 0.10 g |
| Starvis 3003 F | 0.32 g |
| Water | 174.6 g |
| Admixture (Superplasticizer) | 0.15 %-bws (= by weight of solids) |

### Mixing Procedure and Measurement:

The required amounts of liquid admixture and water were weighted into a mixing cup. Afterwards the combined solids were added into the cup and mixed with a kitchen mixer for 60 sec at level two. The flow value was measured with a Vicat ring after 60 sec.

**Table 4**

| Admixture | Flow (cm) | | |
|---|---|---|---|
| | 5 min | 20 min | |
| E26 | 25.7 | 27.2 | No craters at the surface |
| E25 | 29.5 | 30.5 | No craters at the surface |
| C8 | 28.6 | 30.2 | Defects and crater |

As illustrated in Table 4, the admixtures according to the invention show an excellent antifoaming property. The surface of thin layer levelling was found to be free of defects and craters compared to example C8.

### 6. Gypsum flow test

### Mixing Procedure and Measurement:

The required amount of liquid admixture was weighted into the mixing cup and water was added to reach the water to stucco ratios given in Table 4. The stucco (400 g from various sources) together with the accelerator is sifted into water within 15 sec and afterwards mixed with a Hobart® mixer for 15 sec at high speed (285 rpm). After 60 sec the flow value was measured with a cylinder (height: 10 cm, diameter: 5 cm). The set time was determined by means of the so-called knife cut test.

**Table 5 Natural stucco A**

| Admixture | Dosage [wt.-%] | Water to stucco ratio | Accelerator)* [g] | Flow [cm] | Set time [min:s] |
|---|---|---|---|---|---|
| E26 | 0.050 | 0.63 | 0.400 | 20.6 | 2:20 |
| E26 | 0.120 | 0.55 | 0.300 | 20.0 | 2:15 |
| C8 | 0.055 | 0.63 | 0.400 | 20.1 | 2:10 |
| C8 | 0.140 | 0.55 | 0.450 | 20.4 | 2:15 |
| E 31 | 0.050 | 0.63 | 0.400 | 20.4 | 2:10 |
| E 31 | 0.140 | 0.55 | 0.500 | 20.5 | 2:05 |
| C2 | 0.050 | 0.63 | 0.500 | 20.6 | 2:10 |
| C2 | 0.140 | 0.55 | 0.700 | 20.5 | 2:05 |

| | | | | | |
|---|---|---|---|---|---|
| )* finely ground calcium sulfate dihydrate | | | | | |

As depicted in Table 5, the admixture E26 according to the invention show excellent dispersant abilities in comparison to the polycondensate dispersant C8. Admixture E31, which contains the polycondensate C8 and the polycarboxylate ether C2, displays a lower amount of accelerator usage as the pure polycarboxylate ether C2.

**Table 6 Stucco from flue gas desulfurization**

| Admixture | Dosage [wt.-%] | Water to stucco ratio | Accelerator)* [g] | Flow [cm] | Set time [min:s] |
|---|---|---|---|---|---|
| C8 | 0.190 | 0.53 | 0.060 | 20.0 | 2:15 |
| E7-1 | 0.190 | 0.53 | 0.080 | 19.6 | 2:15 |
| E7-2 | 0.190 | 0.53 | 0.150 | 20.1 | 2:20 |
| C3 | 0.280 | 0.53 | 3.000 | 20.8 | 2:10 |
| E8-1 | 0.190 | 0.53 | 0.080 | 22.6 | 2:20 |
| E8-2 | 0.190 | 0.53 | 0.120 | 23.4 | 2:20 |
| C2 | 0.190 | 0.53 | 0.120 | 20.2 | 2:15 |
| E9 | 0.065 | 0.63 | 0.050 | 19.3 | 2:20 |
| E10 | 0.065 | 0.63 | 0.060 | 22.9 | 2:20 |
| E11 | 0.065 | 0.63 | 0.070 | 21.1 | 2:20 |
| E12 | 0.065 | 0.63 | 0.050 | 19.8 | 2:20 |
| C8 | 0.065 | 0.63 | 0.070 | 20.6 | 2:15 |

| | | | | | |
|---|---|---|---|---|---|
| **)*** finely ground calcium sulfate dihydrate | | | | | |

As displayed in Table 6, the admixtures E7-1 and E7-2 according to the invention display excellent dispersant abilities in FGD stucco and in comparison to the polycarboxylate ether dispersant C3 a significant reduced accelerator demand. Admixtures E8-1 and E8-2 show higher flow values than the pure polycondensate C8. The admixtures E9 and E12, which contain the inexpensive dispersants BNS and MFS, exhibit at the same dosage as the polycondensate C8 good flow values.

**Table 7 Natural clay containing stucco B**

| Admixture | Dosage [wt.-%] | Water to stucco ratio | Accelerator)* [g] | Flow [cm] | Set time [min:s] |
|---|---|---|---|---|---|
| E26 | 0.280 | 0.60 | 0.230 | 20.8 | 2:00 |
| E13 | 0.240 | 0.60 | 0.200 | 21.1 | 2:10 |
| C3 | 0.280 | 0.60 | - | No flow | - |
| C2 | 0.280 | 0.755 | 0.280 | 20.7 | 2:15 |

| | | | | | |
|---|---|---|---|---|---|
| )* finely ground calcium sulfate dihydrate | | | | | |

As shown in Table 7, the admixture according to the invention E26 and E13 possesses fluidity in the natural stucco B. At the same dosage, the comparison admixture C3 is not fluid whereas C2 needs a significant higher water to stucco ratio to reach the same flow value.

**Table 8 Natural stucco C**

| Admixture | Dosage [wt.-%] | Water to stucco ratio | Accelerator)* [g] | Flow [cm] | Set time [min:s] |
|---|---|---|---|---|---|
| C8 | 0.100 | 0.60 | 0.600 | 21.0 | 2:05 |
| E26 | 0.100 | 0.60 | 0.800 | 22.3 | 2:05 |
| E14 | 0.100 | 0.60 | 1.000 | 23.2 | 2:15 |
| E15 | 0.100 | 0.60 | 0.700 | 23.5 | 2:20 |
| C3 | 0.100 | 0.60 | 1.600 | 23.2 | 2:15 |

| | | | | | |
|---|---|---|---|---|---|
| )* finely ground calcium sulfate dihydrate | | | | | |

As depicted in Table 8, the admixtures according to the invention display excellent dispersant abilities in the natural stucco C and in comparison to the polycarboxylate ether dispersant C3 reduced accelerator demands. The admixtures E26 and E15 have a similar low accelerator demand but a higher fluidity as the polycondensate C8.

### 7. Application test:

### Water reduction and change of spread values over time in a mortar test system

### Mixing Procedure and Measurement:

600 g of cement powder is homogenized in a RILEM-Mixer. The required amount of water to reach the water to cement ratios given in Table 9 is added and mixed in for 30 sec at 140 rpm (level I). The sand is added during agitation via a funnel and mixed in for 30 sec at 140 rpm (level I). The brims of the bowl will be cleaned and the required amount of liquid admixture is added after a mixing break of 1.5 min. The mixing is continued for 60 sec at 285 rpm (level II) and afterwards the flow value (spread value) is determined with a Hägermann cylinder according to DIN EN 1015-3.
The mortar is based on a Karlstadt CEM I 42.5 R and has a sand to cement ratio of 2.2. The sand consists of a mixture of 30% quartz sand and 70% standardized sand.

**Table 9**

| Example | Dosage [% solid on cement] | w/c ratio | Spread value @ 0 min [cm] | 15 min | 30 min | 60 min | 90 min |
|---|---|---|---|---|---|---|---|
| blank | - | 0.545 | 24.6 | | 23.5 | 23.5 | 23 |
| C7 | 0.19 | 0.42 | 24.7 | 24.1 | 22.2 | 21.5 | |
| E16 | 0.27 | 0.42 | 25 | 23.4 | 22.2 | 20.5 | |
| BNS | 0.50 | 0.42 | 24.9 | 23.6 | 22.5 | 21.2 | |
| E17 | 0.20 | 0.43 | 24.3 | 23.4 | 22.9 | | |
| E18 | 0.20 | 0.40 | 25.0 | 25.5 | 24.9 | 24.5 | |
| E19 | 0.20 | 0.41 | 24.4 | 24.0 | 23.4 | | |
| E13 | 0.23 | 0.43 | 23.5 | 23.8 | 25.4 | 25.2 | 24.4 |
| E20 | 0.24 | 0.43 | 24.0 | 24.1 | 24.3 | 23.7 | 23.4 |

The admixture E16, that contains the low-cost dispersant BNS, displays similar fluidity as the condensate C7 at a much lower dosage level than BNS. As Figure 9 shows, the admixtures E18 and in particular E13 and E20 keep the fluidity of the cementious binder composition for more than 90 min.

## Claims

1. Formulation containing
a) at least one component having dispersing properties and having been selected from the series consisting of a compound at least containing a branched comb polymer having polyether side chains, a naphthalene sulphonate-formaldehyde condensate ("BNS") and a melamine sulphonate-formaldehyde condensate ("MSF"),
and
b) a polycondensation product containing
(I) at least one structural unit with an aromatic or heteroaromatic sub-unit and at least one polyether side chain and
(II) at least one phosphated structural unit with an aromatic or heteroaromatic sub-unit and
(III) at least one structural unit with an aromatic or heteroaromatic sub-unit,
structural unit (II) and structural unit (III) differing exclusively in that the OP(OH)₂ group of the structural unit (II) is replaced by H in structural unit (III), and structural unit (III) is not the same as structural unit (I).

2. Formulation according to Claim 1, **characterized in that** the component a) is a polycarboxylate ether a₁), a polycarboxylate ester a₂), an uncharged copolymer a₃) or mixtures thereof.

3. Formulation according to either of Claims 1 and 2, **characterized in that** the component a) is a copolymer a₁) consisting of
1) at least one olefinically unsaturated moncarboxylic acid comonomer or an ester or a salt thereof and/or an olefinically unsaturated sulphonic acid comonomer or a salt thereof,
and
2) at least one comonomer of the general formula (I) 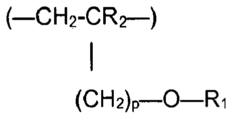
in which R₁ represents 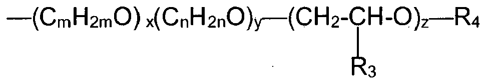
and R₂ represents H or an aliphatic hydrocarbon radical having 1 to 5 C atoms; R₃ = unsubstituted or substituted aryl radical and preferably phenyl, and R₄ = H or an aliphatic hydrocarbon radical having 1 to 20 C atoms, a cycloaliphatic hydrocarbon radical having 5 to 8 C atoms, a substituted aryl radical having 6 to 14 C atoms or a representative of the series 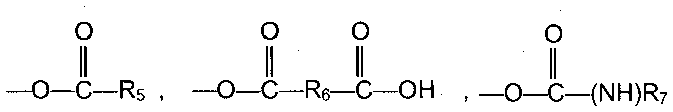
in which R₅ and R₇ each represent an alkyl, aryl, aralkyl or alkaryl radical and R₆ represents an alkylidene, arylidene, aralkylidene or alkarylidene radical, and
p = 0, 1, 2, 3 or 4,
m, n, independently of one another, denote 2, 3, 4 or 5,
x and y, independently of one another, denote an integer ≤ 350 and
z = 0 to 200,
in which (I) in copolymer a₁), the comonomer units which represent the components 1) and 2) have in each case no internal molecular differences and/or (II) the copolymer a₁) represents a polymeric mixture of the components 1) and 2), in which case the comonomer units have internal molecular differences with respect to the radicals R₁ and/or R₂ and/or R₃ and/or R₄ and/or R₅ and/or R₆ and/or R₇ and/or m and/or n and/or x and/or y and/or z, and the differences discussed relate in particular to the composition and length of the side chains.

4. Formulation according to Claim 3, **characterized in that** the copolymer a₁) contains the comonomer component 1) in proportions of 30 to 99 mol% and the comonomer component 2) in proportions of 70 to 1 mol%.

5. Formulation according to either of Claims 3 and 4, **characterized in that** the copolymer a₁) contains the comonomer component 1) in proportions of 40 to 90 mol% and the comonomer component 2) in proportions of 60 to 10 mol%.

6. Formulation according to any of Claims 3 to 5, **characterized in that** the comonomer component 1) represents an acrylic acid or a salt thereof, and the comonomer component 2) with p = 0 or 1 contains a vinyl or allyl group and, as R₁, a polyether.

7. Formulation according to any of Claims 3 to 6, **characterized in that** the comonomer component 1) originates from the group consisting of acrylic acid, methacrylic acid, crotonic acid, isocrotonic acid, allylsulphonic acid, vinylsulphonic acid and suitable salts thereof and alkyl or hydroxyalkyl esters thereof.

8. Formulation according to any of Claims 3 to 7, **characterized in that** the copolymer a₁) has additional structural groups in copolymerized form.

9. Formulation according to Claim 8, **characterized in that** the additional structural groups are styrenes, acrylamides and/or hydrophobic compounds, ester structural units, polypropylene oxide and polypropylene oxide/polyethylene oxide units being particularly preferred.

10. Formulation according to either of Claims 8 and 9, **characterized in that** the copolymer a₁) contains the additional structural group in proportions up to 5 mol%, preferably from 0.05 to 3.0 mol% and in particular from 0.1 to 1.0 mol%.

11. Formulation according to any of Claims 3 to 10, **characterized in that** the formula (1) represents a polyether containing allyl or vinyl groups.

12. Formulation according to either of Claims 1 and 2, **characterized in that** the polycarboxylate ester a₂) is a polymer which can be prepared by polymerization of a monomer mixture (I) containing, as the main component, a representative of the carboxylic acid monomer type.

13. Formulation according to Claim 12, **characterized in that** the polycarboxylate ester a₂) is an anti-foaming agent, a defoamer or a surfactant.

14. Formulation according to Claim 12, **characterized in that** the monomer mixture (I) contains an (alkoxy)polyalkylene glycol mono(meth)acrylate monomer (a) of the general formula (II) 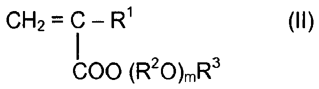
in which R¹ represents a hydrogen atom or a CH₃ group, R²O represents one representative or a mixture of at least two oxyalkylene groups having 2 to 4 carbon atoms, R³ represents a hydrogen atom or an alkyl group having 1 to 5 carbon atoms and m represents a number between 1 and 250 and represents the average number of moles of the oxyalkylene group added,
additionally, as monomer (b), a (meth)acrylic acid of the general formula (III), 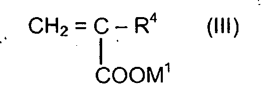
in which R⁴ represents a hydrogen atom or a CH₃ group and M¹ represents a hydrogen atom, a monovalent metal atom, a divalent metal atom, an ammonium group or an organic amine group, and optionally a monomer (c) which is copolymerized with the monomers (a) and (b).

15. Formulation according to Claim 14, **characterized in that** the monomer (a) is present in an amount of 5 to 98% by weight, the monomer (b) in an amount of 2 to 95% by weight and the monomer (c) in an amount of up to 50% by weight in the monomer mixture (I), the respective amounts of the monomers (a), (b) and (c) summing to 100% by weight.

16. Formulation according to any of Claims 12 and 14 to 15, **characterized in that** the monomer (a) is a hydroxyethyl (meth)acrylate, hydroxypropyl (meth)acrylate, polyethylene glycol mono(meth)acrylate, polypropylene glycol mono(meth)acrylate, polybutylene glycol mono(meth)acrylate, polyethylene glycol polypropylene glycol mono(meth)acrylate, polyethylene glycol polybutylene glycol mono(meth)acrylate, polypropylene glycol polybutylene glycol mono(meth)acrylate, polyethylene glycol polypropylene glycol polybutylene glycol mono(meth)acrylate, methoxypolyethylene glycol mono(meth)acrylate, methoxypolypropylene glycol mono(meth)acrylate, methoxypolybutylene glycol mono(meth)acrylate, methoxypolyethylene glycol polypropylene glycol mono(meth)acrylate, methoxypolyethylene glycol polybutylene glycol mono(meth)acrylate, methoxypolypropylene glycol polybutylene glycol mono(meth)acrylate, methoxypolyethylene glycol polypropylene glycol polybutylene glycol mono(meth)acrylate, ethoxypolyethylene glycol mono(meth)acrylate, ethoxypolypropylene glycol mono(meth)acrylate, ethoxypolybutylene glycol mono(meth)acrylate, ethoxypolyethylene glycol polypropylene glycol mono(meth)acrylate, ethoxypolyethylene glycol polybutylene glycol mono(meth)acrylate, ethoxypolypropylene glycol polybutylene glycol mono(meth)acrylate, ethoxypolyethylene glycol polypropylene glycol polybutylene glycol mono(meth)acrylate or mixtures thereof.

17. Formulation according to any of Claims 12 and 14 to 16, **characterized in that** the monomer (b) is a representative selected from the group consisting of acrylic acid, methacrylic acid, monovalent metal salts, divalent metal salts, ammonium salts and organic amine salts thereof and mixtures thereof.

18. Formulation according to any of Claims 12 and 14 to 17, **characterized in that** the monomer (c) is at least one representative of the esters of an aliphatic alcohol having 1 to 20 carbon atoms with an unsaturated carboxylic acid.

19. Formulation according to Claim 18, **characterized in that** the unsaturated carboxylic acid is maleic acid, fumaric acid, citraconic acid, (meth)acrylic acid or monovalent metal salts, divalent metal salts, ammonium salts or organic amine salts thereof.

20. Formulation according to Claim 18, **characterized in that** monoesters or diesters of unsaturated dicarboxylic acids, such as maleic acid, fumaric acid or citraconic acid, with aliphatic C₁-C₂₀-alcohols, C₂-C₄-glycols or (alkoxy)polyalkylene glycols are present.

21. Formulation according to either of Claims 1 and 2, **characterized in that** the component a₂) is a copolymer based on at least one of the following monomers:
A) an ethylenically unsaturated monomer comprising a hydrolysable radical, this hydrolysable monomer having an active bonding site for at least one component of the final composition comprising the formulation;
B) an ethylenically unsaturated monomer having at least one C₂-C₄-oxyalkylene side group with a chain length of 1 to 30 units;
C) an ethylenically unsaturated monomer having at least one C₂-C₄-oxyalkylene side group with a chain length of 31 to 350 units.

22. Formulation according to Claim 21, **characterized in that** the components B) and C) are simultaneously represented in the copolymer a₂).

23. Formulation according to either of Claims 21 and 22, **characterized in that** the ethylenically unsaturated monomer of component A) comprises at least one anhydride or imide and/or at least one maleic anhydride or maleimide.

24. Formulation according to any of Claims 21 to 23, **characterized in that** the ethylenically unsaturated monomer of component A) comprises an acrylate having an ester functionality which contains the hydrolysable radical.

25. Formulation according to Claim 24, **characterized in that** the ester functionality is at least one hydroxypropyl or hydroxyethyl radical.

26. Formulation according to any of Claims 21 to 25, **characterized in that** the copolymer a₂) in the component A) has more than one ethylenically unsaturated monomer with a hydrolysable radical.

27. Formulation according to Claim 26, **characterized in that** the ethylenically unsaturated monomer of component A) has, as a radical, at least more than one representative of the ethylenically unsaturated monomers, at least one representative of a hydrolysable radical or a mixture of the two.

28. Formulation according to either of Claims 26 and 27, **characterized in that** the hydrolysable radical has at least one C₂-C₂₀-alcohol functionality.

29. Formulation according to any of Claims 26 to 28, **characterized in that** the hydrolysable radical is at least a C₁-C₂₀-alkyl ester, a C₁-C₂₀-aminoalkyl ester or an amide.

30. Formulation according to any of Claims 21 to 29, **characterized in that** at least one ethylenically unsaturated monomer of component B) or C) has a C₂-C₈-alkyl ether group.

31. Formulation according to Claim 30, **characterized in that** the ethylenically unsaturated monomer has a vinyl, allyl, or (methyl)allyl ether radical or is derived from an unsaturated C₂-C₈-alcohol.

32. Formulation according to Claim 31, **characterized in that** the unsaturated C₂-C₈-alcohol is at least one representative of the series consisting of vinyl alcohol, (meth)allyl alcohol, isoprenol or methylbutenol.

33. Formulation according to any of Claims 21 to 32, **characterized in that** the ethylenically unsaturated monomer side groups of the component B) or C) have at least one C₄-oxyalkylene unit.

34. Formulation according to any of Claims 21 to 33, **characterized in that** at least one ethylenically unsaturated monomer of the component B) or C) has a C₂-C₈-carboxylic ester which in particular is hydrolysable.

35. Formulation according to any of Claims 21 to 34, **characterized in that** the oxyalkylene side groups have at least one ethylene oxide, one propylene oxide, one polyethylene oxide, one polypropylene oxide or mixtures thereof.

36. Formulation according to any of Claims 21 to 35, **characterized in that** the copolymer a₂) in the component C) has at least one nonionic and/or one non-hydrolysable monomer radical or mixtures thereof:

37. Formulation according to either of Claims 1 and 2, **characterized in that** the nonionic copolymer a₃) is a representative of the general formula (IV) 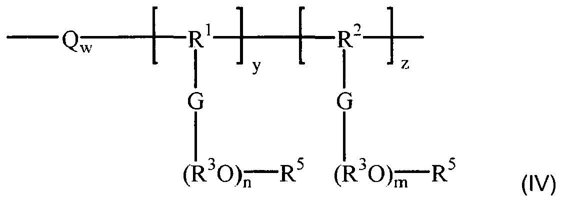 in which Q represents an ethylenically unsaturated monomer having at least one hydrolysable radical, G denotes O, C (O)-O or O-(CH₂)ₚ-O with p = 2 to 8, mixtures of the variants of G being possible in a polymer; R¹ and R², independently of one another, denote at least one C₂-C₈-alkyl; R³ comprises (CH₂)_{c}, c being an integer between 2 and 5, and mixtures of the representatives of R³ being possible in the same polymer molecule; R⁵ denotes at least one representative selected from the series consisting of H, a linear or branched saturated or unsaturated C₁-C₂₀-aliphatic hydrocarbon radical, a C₅-C₈-cycloaliphatic hydrocarbon radical or a substituted or unsubstituted C₆-C₁₄-aryl radical; m is 1 to 30, n is 31 to 350, w is 1 to 40, y is 0 to 1 and z is 0 to 1, the sum (y + z) being > 0.

38. Formulation according to either of Claims 1 and 2, **characterized in that** the nonionic copolymer a₃) is a representative of the general formula (V) 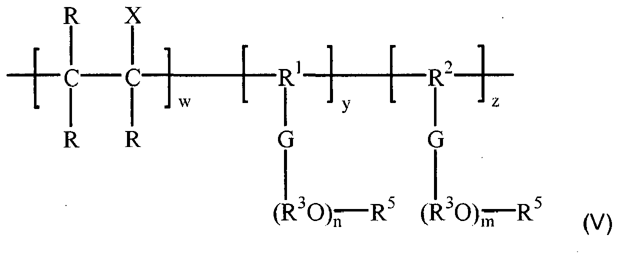 in which X represents a hydrolysable radical and R represents H or CH₃; G, p, R¹, R², R³, R⁵, m, n, w, y, z and (y + z) have the meanings stated under the formula (IV).

39. Formulation according to Claim 38, **characterized in that** the hydrolysable radical is at least one representative of the series consisting of alkyl ester, aminoalkyl ester, hydroxylalkyl ester, aminohydroxyalkyl ester or amide.

40. Formulation according to either of Claims 1 and 2, **characterized in that** the nonionic copolymer a₃) is at least one representative of the general formula (VI) 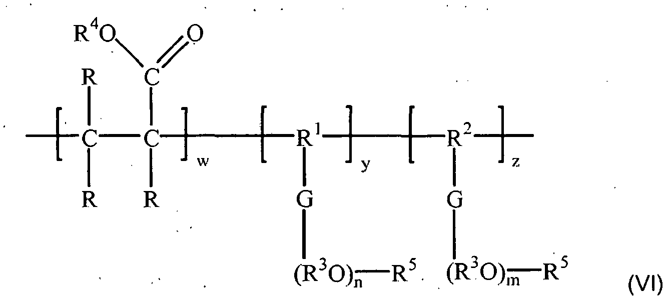 in which R⁴ denotes at least one C₁-C₂₀-alkyl or C₂-C₂₀-hydroxyalkyl radical and the radicals G, p, R, R¹, R², R³, c, R⁴, R⁵ and m, n, w, y, z and (y + z) have the meanings stated under the formulae (IV) and (V).

41. Formulation according to Claim 40, **characterized in that** p is 4, R⁴ denotes C₂ H₄OH or C₃ H₆OH, each of the radicals R⁵ represents H, m = 5-30, n = 31-250, w = 1.5-30, y = 0 to 1, z = 0 to 1 and (y + z) > 0.

42. Formulation according to any of Claims 37 to 41, **characterized in that** the molar ratio of w to the sum (y + z) is 1:1 to 20:1 and preferably 2:1 to 12:1.

43. Formulation according to either of Claims 1 and 2, **characterized in that** the copolymer a₃) is a nonionic polyether-polyester copolymer.

44. Formulation according to any of Claims 1 to 43, **characterized in that** the structural units (I), (II), (III) of component b) are represented by the following formulae (VII) 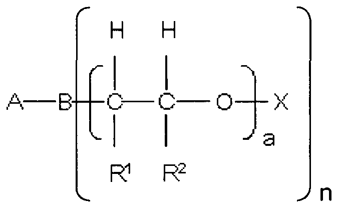
where
A are identical or different and are represented by substituted or unsubstituted aromatic or heteroaromatic compound having 5 to 10 C atoms,
where
B are identical or different and are represented by N, NH or O
where
n = 2, if B = N, and n = 1, if B = NH or O
where
R¹ and R² independently of one another, are identical or different and are represented by a branched or straight-chain C₁- to C₁₀-alkyl radical, C₅- to C₈-cycloalkyl radical, aryl radical, heteroaryl radical or H,
where
a are identical or different and are represented by an integer from 1 to 300,
where X
are identical or different and are represented by a branched or straight-chain C₁- to C₁₀-aralkyl radical, C₅- to C₈-cycloalkyl radical, aryl radical, heteroaryl radical or H, (VIII) 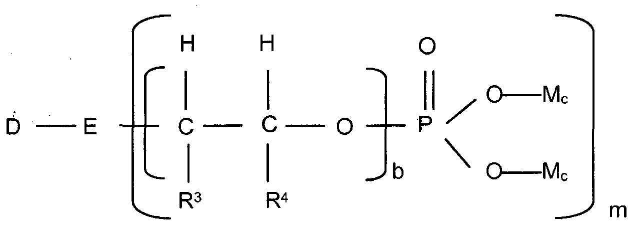 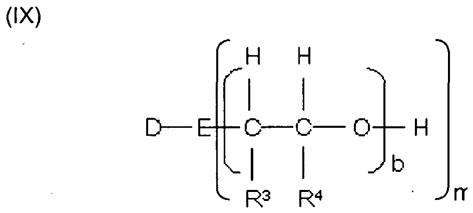 for (VIII) and (IX) in each case:
where
D are identical or different and are represented by a substituted or unsubstituted heteroaromatic compound having 5 to 10 C atoms,
where
E are identical or different and are represented by N, NH or O
where
m=2, if E = N, and m = 1, if E = NH or O
where
R³ and R⁴ independently of one another are identical or different and are represented by a branched or straight-chain C₁- to C₁₀-alkyl radical, C₅- to C₈-cycloalkyl radical, aryl radical, heteroaryl radical or H,
where b are identical or different and are represented by an integer from 0 to 300,
where
M is independently of one another an alkaline metal ion, alkaline earth metal ion, ammonium ion, organic ammonium ion and/or H,
c is 1 or in the case of alkaline earth metal ions ½.

45. Formulation according to Claim 44, **characterized in that** the component b) contains a further structural unit (X) which is represented by the following formula 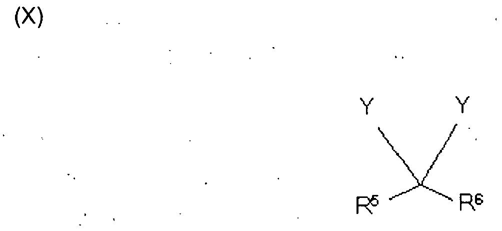
where
Y, independently of one another, are identical or different and are represented by (VII), (VIII), (IX) or further constituents of the polycondensation product b),
where
R⁵ are identical or different and are represented by H, CH₃, COOM_{c} or a substituted or unsubstituted aromatic or heteroaromatic compound having 5 to 10 C atoms,
where
R⁶ are identical or different and are represented by H, CH₃, COOM_{c} or a substituted or unsubstituted aromatic or heteroaromatic compound having 5 to 10 C atoms,
where
M is independently of one another an alkaline metal ion, alkaline earth metal ion, ammonium ion, organic ammonium ion and/or H,
c is 1 or in the case of alkaline earth metal ions ½.

46. Formulation according to Claim 45, **characterized in that** R⁵ and R⁶ in structural unit (X) of component b), independently of one another, are identical or different and are represented by H, COOM_{c} and/or methyl.

47. Formulation according to any of Claims 1 to 46, **characterized in that** the molar ratio of the structural units [(VII) + (VIII) + (IX)]:(X) in component b) is 1:0.8 to 3.

48. Formulation according to any of Claims 1 to 47, **characterized in that** the molar ratio of the structural units (VII):[(VIII) + (IX)] in component b) is 1:15 to 15:1 and preferably 1:10 to 10:1.

49. Formulation according to any of Claims 1 to 48, **characterized in that** the molar ratio of the structural units (VIII):(IX) in component b) is 1:0.005 to 1:10.

50. Formulation according to any of Claims 1 to 49, **characterized in that** the polycondensation product b) is present in aqueous solution which contains 2 to 90% by weight of water and 98 to 10% by weight of dissolved dry matter.

51. Formulation according to any of Claims 1 to 50, **characterized in that** the component a) is present in proportions of 5 to 95% by weight, preferably of 10 to 60% by weight and particularly preferably of 15 to 40% by weight, based in each case on the total formulation.

52. Formulation according to any of Claims 1 to 51, **characterized in that** the component b) is present in proportions of 5 to 100% by weight, preferably of 10 to 60% by weight and particularly preferably of 15 to 40% by weight, based in each case on the total formulation.

53. Formulation according to any of Claims 1 to 52, **characterized in that** it contains, in addition to the components a) and b), at least one antifoaming agent as component c) and/or a component d) having a surface-active effect, the components c) and d) being structurally different from one another.

54. Formulation according to Claim 53, **characterized in that** the antifoam component c) is at least one representative of the group consisting of mineral oil, vegetable oil, silicone oil, silicone-containing emulsions, fatty acid, fatty acid ester, organically modified polysiloxane, borate ester, alkoxylate, polyoxyalkylene copolymer, ethylene oxide (EO)-propylene oxide (PO) block polymers, acetylenic diol having antifoam properties, phosphoric acid ester of the formula P(O)(O-R₈)₃₋ₓ(O-R₉)ₓ in which P = phosphorus, O = oxygen and R₈ and R₉ independently of one another, denote a C₂₋₂₀-alkyl or an aryl group and x = 0, 1 or 2.

55. Formulation according to either of Claims 53 and 54, **characterized in that** the antifoaming component c) is at least one representative of the series consisting of trialkyl phosphate, polyoxypropylene copolymer and/or glycerol/alcohol acetate.

56. Formulation according to any of Claims 53 to 55, **characterized in that** the antifoaming component c) is triisobutyl phosphate.

57. Formulation according to any of Claims 53 to 56, **characterized in that** the antifoam component c) represents a mixture of a trialkylphosphate and a polyoxypropylene copolymer.

58. Formulation according to Claim 53, **characterized in that** the component d) is at least one representative of the series consisting of ethylene oxide/propylene oxide (EO/PO) block copolymer, styrene/maleic acid copolymer, fatty acid alcohol alkoxylate, alcohol ethoxylate R₁₀-(EO)-H where R₁₀ = an aliphatic hydrocarbon group having 1 to 25 carbon atoms, acetylenic diol, monoalkylpolyalkylene, ethoxylated nonylphenol, alkyl sulphate, alkyl ether sulphate, alkyl ether sulphonate or alkyl ether carboxylate.

59. Formulation according to either of Claims 53 and 58, **characterized in that** the component d) comprises an alcohol having a polyalkylene group, the polyalkylene group having a carbon chain length of 2 to 20 carbon atoms.

60. Formulation according to Claim 59, **characterized in that** the polyalkylene group has a carbon chain length of 3 to 12 carbon atoms.

61. Formulation according to any of Claims 53 and 58 to 60, **characterized in that** it contains the antifoaming component c) in free form, bound to the dispersant component a) or as a mixture of these two forms.

62. Formulation according to any of Claims 53 to 61, **characterized in that** the antifoaming component c) is present in amounts of 0.01 to 10% by weight and/or the surface-active component d) is present in amounts of 0.01 to 10% by weight, based in each case on the total weight of the formulation.

63. Formulation according to any of Claims 53 to 62, **characterized in that** the antifoaming c) and/or the surface-active component d), independently of one another, are present in each case in an amount of 0.01 to 5% by weight, based in each case on the total weight of the formulation.

64. Formulation according to any of Claims 1 to 63, **characterized in that**, in addition to the components a) and b) and optionally c) and/or d), it contains at least one compound selected from the series consisting of polymer having a low charge, neutral polymer or polyvinyl alcohol as component e).

65. Formulation according to Claim 64, **characterized in that** it contains the component e) in amounts of 1 to 50% by weight, preferably of 5 to 40% by weight and particularly preferably in amounts of 10 to 30% by weight, based in each case on the total weight of the formulation.

66. Formulation according to either of Claims 64 and 65, **characterized in that** the polymer having a low charge is branched and the side chain preferably consists of a polyether and/or a polyester.

67. Formulation according to any of Claims 64 to 66, **characterized in that** the polymer having a low charge is a polycarboxylate ether and/or a polycarboxylate ester, preferably having EO side chains and/or having a proportion of carboxylate of up to 83 mol%, preferably up to 75 mol%.

68. Formulation according to any of Claims 64 to 67, **characterized in that** the polymer e) having a low charge is composed of at least one monomer selected from the series consisting of polyether monoacrylate, polyether monomethacrylate, polyether monoallyl ether, polyether monomaleate, monovinylated polyether or mixtures thereof.

69. Formulation according to Claim 68, **characterized in that** the polyether is an alkylene oxide polymer having a molecular weight of 500 to 10 000, preferably of 750 to 7 500 and in particular of 1 000 to 5 000.

70. Formulation according to Claim 69, **characterized in that** the alkylene oxide is ethylene oxide, propylene oxide, butylene oxide or mixtures thereof.

71. Formulation according to any of Claims 64 to 70, **characterized in that** the polymer e) having a low charge is composed of at least one monomer selected from the series consisting of polypropylene glycol acrylate, polypropylene glycol methacrylates, polyethylene glycol acrylate, polyethylene glycol methacrylate, polypropylene glycol monovinyl ether, polyethylene glycol monovinyl ether, alkoxy-or aryloxypolyethylene glycol acrylate, alkoxy- or aryloxypolyethylene glycol methacrylates, alkoxy- or aryloxypolyethylene glycol monovinyl ether, acrylates, methacrylates and monovinyl ethers of an oxyalkylene or oxypropylene block or random copolymer, polypropylene glycol allyl ether, polyethylene glycol allyl ether, polyethylene glycol monomaleate polypropylene glycol monomaleate and any mixtures thereof.

72. Formulation according to any of Claims 64 to 71, **characterized in that** the polymer e) having a low charge carries a carboxylic acid group, preferably selected from the series consisting of acrylic acid, methacryl acid, maleic acid, fumaric acid, itaconic acid or anhydrides thereof.

73. Formulation according to any of Claims 64 to 72, **characterized in that** the polymer e) having a low charge carries a sulphonic acid group selected from the series consisting of 2-acrylamido-2-methylpropanesulphonic acid (AMPS), vinylsulphonic acid, allyl ether sulphonic acid, 2-sulphoethylmethacrylic acid, styrenesulphonic acid, methallylsulphonic acid, the sodium, potassium and ammonium salts thereof and any mixtures thereof, and in particular the AMPS and vinylsulphonic acid.

74. Formulation according to any of Claims 64 to 73, **characterized in that** the neutral polymer e) is composed of neutral monomer building blocks which are selected in particular from the series consisting of alkyl acrylates and alkyl methacrylates and hydroxyalkyl esters thereof having up to 5 carbon atoms, in particular hydroxyethyl acrylate and hydroxypropyl acrylate or hydroxyethyl methacrylate and hydroxypropyl methyacrylate, and vinyl acetate, N-vinylpyrrolidone, N-vinylcaprolactam, styrene and methylstyrene.

75. Formulation according to any of the Claims 1 to 74, **characterized in that** it contains as additional further component f) a calcium-silicate-hydrate (C-S-H) containing composition.

76. Formulation according to Claim 75, **characterized in that** the C-S-H shows a calcium/silicium (Ca/Si)-molar ratio of 0.5 to 2.0, preferable 0.7 to 1.8, more preferable 1.6 to 1.7.

77. Formulation according to either of the Claims 75 or 76, **characterized in that** the average particle size of C-S-H is smaller than 10 µm, preferable smaller than 1 µm, more preferable smaller than 0.2 µm, measured by light scattering with the equipment Master Sizer 2000 from the Malvern Company.

78. Formulation according to either of the Claims 75 or 76, **characterized in that** the average particle size of C-S-H is greater 0.01 µm, preferable 0.1 µm to 1.0 µm, more preferable 0.2 µm to 0.5 µm.

79. Formulation according to one of the Claims 75 to 78, **characterized in that** the C-S-H containing composition is prepareble by reaction of a water-soluble calcium containing compound with a water-soluble silicate containing compound, the reaction of the water-soluble calcium containing compound with the water-soluble silicate containing compound being carried out in the presence of an aqueous solution preferably containing a water-soluble copolymer that preferably is a dispersant for hydraulic binders and selected from at least a representative of component a) and/or b).

80. Formulation according to one of the Claims 75 to 78, **characterized in that** the C-S-H containing composition is prepareble by reaction of a calcium oxide, a calcium carbonate and/or a calcium hydroxide with a silicium dioxide during milling, the reaction being carried out in the presence of an aqueous solution that preferably contains a water-soluble copolymer that preferably is a dispersant for hydraulic binders and selected from at least a representative of component a) and/or b).

81. Formulation according to one of the Claims 1 to 80, **characterized in that** it is a liquid or a powder and preferably a redispersant powder.

82. A method of use of the formulation according to any of Claims 1 to 81, **characterized in that** the formulation for controlling the flowability of aqueous suspensions is added to construction chemicals containing systems and in particular to aqueous suspensions containing hydraulic and/or latent hydraulic binders, in particular as dispersant.

83. Method of use according to Claim 82, **characterized in that** the formulation is used as aqueous suspensions containing, as a hydraulic binder, at least one representative selected from the group consisting of cements and calcium sulphate-based compounds, in particular calcium sulphate hemihydrate, anhydrite or gypsum.

84. Method of use according to either of Claims 82 and 83, **characterized in that** the formulation is used in amounts of 0.001 to 8.0% by weight, in particular 0.005 to 5.0% by weight, preferably 0.01 to 2.0% by weight and particularly preferably 0.05 to 1.0% by weight, based in each case on the total composition of the suspension.

85. Method of use according to either of Claims 82 to 84, **characterised in that** the formulation is used together with other additives, admixtures or compositions, preferably with flowability controling and/or dispersing properties, and more preferably together with at least one dispersant of the type of component a) and/or the polymerisation product b) of the formulation.

86. Method of use according to either of Claims 82 to 85, **characterised in that** the aqueous suspension is based on a dry mortar composition or a flooring composition.

87. Method of use according to Claim 86, **characterised in that** the flooring composition contains calcium sulphate, cement or a mixture thereof, and preferably is a self-leveling flooring composition.

## Patentansprüche

1. Formulierung, enthaltend
a) wenigstens eine Komponente, die Dispergierungseigenschaften aufweist und ausgewählt wurde aus der Reihe bestehend aus einer Verbindung, die wenigstens ein verzweigtes Kammpolymer mit Polyether-Seitenketten enthält, einem NaphthalinSulfonat-Formaldehyd-Kondensat ("BNS") und einem Melamin-Sulfonat-Formaldehyd-Kondensat ("MSF"),
und
b) ein Polykondensationsprodukt, enthaltend
(I) wenigstens eine Struktureinheit mit einer aromatischen oder heteroaromatischen Untereinheit und wenigstens einer Polyether-Seitenkette und
(II) wenigstens eine phosphatierte Struktureinheit mit einer aromatischen oder heteroaromatischen Untereinheit und
(III) wenigstens eine Struktureinheit mit einer aromatischen oder heteroaromatischen Untereinheit,
wobei sich die Struktureinheit (II) und die Struktureinheit (III) ausschließlich darin unterscheiden, dass die OP(OH)₂-Gruppe der Struktureinheit (II) in Struktureinheit (III) durch H ersetzt ist, und Struktureinheit (III) nicht gleich wie Struktureinheit (I) ist.

2. Formulierung gemäß Anspruch 1, **dadurch gekennzeichnet, dass** die Komponente a) ein Polycarboxylatether a₁), ein Polycarboxylatester a₂), ein nichtgeladenes Copolymer a₃) oder ein Gemisch davon ist.

3. Formulierung gemäß einem der Ansprüche 1 und 2, **dadurch gekennzeichnet, dass** die Komponente a) ein Copolymer a₁) ist, bestehend aus
1) wenigstens einem olefinisch nichtgesättigten Monocarbonsäure-Comonomer oder einem Ester oder einem Salz davon und/oder einem olefinisch nichtgesättigten Sulfonsäure-Comonomer oder einem Salz davon
und
2) wenigstens einem Comonomer der allgemeinen 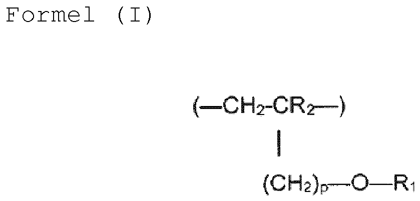
wobei R₁ 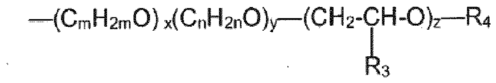
darstellt und R₂ H oder einen aliphatischen Kohlenwasserstoffrest mit 1 bis 5 C-Atomen darstellt; R₂ = nichtsubstituierter oder substituierter Arylrest, vorzugsweise Phenyl, und R₄ = H oder ein aliphatischer Kohlenwasserstoffrest mit 1 bis 20 C-Atomen, ein cycloaliphatischer Kohlenwasserstoffrest mit 5 bis 8 C-Atomen, ein substituierter Arylrest mit 6 bis 14 C-Atomen oder ein Vertreter der Reihe 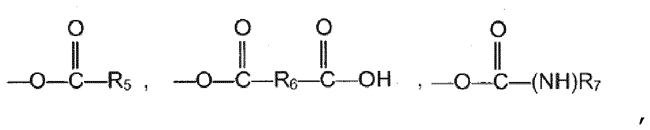
wobei R₅ und R₇ jeweils einen Alkyl-, Aryl-, Aralkyl- oder Alkarylrest darstellen und R₆ einen Alkyliden-, Aryliden-, Aralkyliden- oder Alkarylidenrest darstellt, und
p = 0, 1 , 2, 3 oder 4,
m, n unabhängig voneinander 2, 3, 4 oder 5 bedeuten,
x und y unabhängig voneinander eine ganze Zahl ≤ 350 bedeuten und
z = 0 bis 200,
wobei (I) in Copolymer a₁) die Comonomereinheiten, die die Komponenten 1) und 2) darstellen, in jedem Fall keine internen molekularen Unterschiede aufweisen und/oder (II) das Copolymer a₁) ein Polymergemisch der Komponenten 1) und 2) darstellt, in welchem Fall die Comonomereinheiten interne molekulare Unterschiede bezüglich der Reste R₁ und/oder R₂ und/oder R₃ und/oder R₄ und/oder R₅ und/oder R₆ und/oder R₇ und/oder m und/oder n und/oder x und/oder y und/oder z aufweisen und die diskutierten Unterschiede insbesondere die Zusammensetzung und die Länge der Seitenketten betreffen.

4. Formulierung gemäß Anspruch 3, **dadurch gekennzeichnet, dass** das Copolymer a₁) die Comonomerkomponente 1) in Anteilen von 30 bis 99 mol-% und die Comonomerkomponente 2) in Anteilen von 70 bis 1 mol-% enthält.

5. Formulierung gemäß einem der Ansprüche 3 und 4, **dadurch gekennzeichnet, dass** das Copolymer a₁) die Comonomerkomponente 1) in Anteilen von 40 bis 90 mol-% und die Comonomerkomponente 2) in Anteilen von 60 bis 10 mol-% enthält.

6. Formulierung gemäß einem der Ansprüche 3 bis 5, **dadurch gekennzeichnet, dass** die Comonomerkomponente 1) eine Acrylsäure oder ein Salz davon darstellt und die Comonomerkomponente 2) mit p = 0 oder 1 eine Vinyl- oder Allylgruppe und als R₁ einen Polyether enthält.

7. Formulierung gemäß einem der Ansprüche 3 bis 6, **dadurch gekennzeichnet, dass** die Comonomerkomponente 1) aus der Gruppe stammt, die aus Acrylsäure, Methacrylsäure, Crotonsäure, Isocrotonsäure, Allylsulfonsäure, Vinylsulfonsäure und geeigneten Salzen davon und Alkyl- oder Hydroxyalkylestern davon besteht.

8. Formulierung gemäß einem der Ansprüche 3 bis 7, **dadurch gekennzeichnet, dass** das Copolymer a₁) zusätzliche Strukturgruppen in copolymerisierter Form aufweist.

9. Formulierung gemäß Anspruch 8, **dadurch gekennzeichnet, dass** die zusätzlichen Strukturgruppen Styrole, Acrylamide und/oder hydrophobe Verbindungen sind, wobei Ester-Struktureinheiten, Polypropylenoxid- und Polypropylenoxid/Polyethylenoxid-Einheiten besonders bevorzugt sind.

10. Formulierung gemäß einem der Ansprüche 8 und 9, **dadurch gekennzeichnet, dass** das Copolymer a₁) die zusätzliche Strukturgruppe in Anteilen bis zu 5 mol-% enthält, vorzugsweise von 0,05 bis 3,0 mol-% und insbesondere von 0,1 bis 1,0 mol-%.

11. Formulierung gemäß einem der Ansprüche 3 bis 10, **dadurch gekennzeichnet, dass** die Formel (1) einen Polyether darstellt, der Allyl- oder Vinylgruppen enthält.

12. Formulierung gemäß einem der Ansprüche 1 und 2, **dadurch gekennzeichnet, dass** der Polycarboxylatester a₂) ein Polymer ist, das durch Polymerisation eines Monomerengemischs (I) hergestellt werden kann, das als Hauptkomponente einen Vertreter des Carbonsäure-Monomertyps enthält.

13. Formulierung gemäß Anspruch 12, **dadurch gekennzeichnet, dass** der Polycarboxylatester a₂) ein Antischaummittel, ein Entschäumer oder ein grenzflächenaktives Mittel ist.

14. Formulierung gemäß Anspruch 12, **dadurch gekennzeichnet, dass** das Monomerengemisch (I) ein (Alkoxy)polyalkylenglycolmono(meth)acrylatmonomer (a) der allgemeinen Formel (II) enthält, 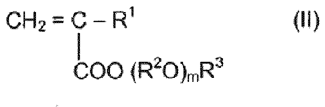
wobei R¹ ein Wasserstoffatom oder eine CH₃-Gruppe darstellt, R²O einen Vertreter oder ein Gemisch von wenigstens zwei Oxyalkylengruppen mit 2 bis 4 Kohlenstoffatomen darstellt, R³ ein Wasserstoffatom oder eine Alkylgruppe mit 1 bis 5 Kohlenstoffatomen darstellt und m eine Zahl zwischen 1 und 250 und die mittlere Molzahl der angefügten Oxyalkylengruppe darstellt,
zusätzlich als Monomer (b) eine (Meth)acrylsäure der allgemeinen Formel (III), 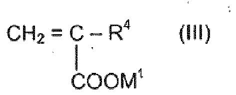
wobei R⁴ ein Wasserstoffatom oder eine CH₃-Gruppe darstellt und M¹ ein Wasserstoffatom, ein einwertiges Metallatom, ein zweiwertiges Metallatom, eine Ammoniumgruppe oder eine organische Amingruppe darstellt, und gegebenenfalls ein Monomer (c), das mit den Monomeren (a) und (b) copolymerisiert ist.

15. Formulierung gemäß Anspruch 14, **dadurch gekennzeichnet, dass** in dem Monomerengemisch (I) das Monomer (a) in einer Menge von 5 bis 98 Gew.-% vorhanden ist, das Monomer (b) in einer Menge von 2 bis 95 Gew.-% und das Monomer (c) in einer Menge bis 50 Gew.-%, wobei die Summe der entsprechenden Mengen der Monomere (a), (b) und (c) 100 Gew.-% beträgt.

16. Formulierung gemäß einem der Ansprüche 12 und 14 bis 15, **dadurch gekennzeichnet, dass** das Monomer (a) ein Hydroxyethyl(meth)acrylat, Hydroxypropyl(meth)acrylat, Polyethylenglycolmono(meth)acrylat, Polypropylenglycolmono(meth)acrylat, Polybutylenglycolmono(meth)acrylat, Polyethylenglycolpolypropylenglycolmono-(meth)acrylat, Polyethylenglycolpolybutylenglycolmono-(meth)acrylat, Polypropylenglycolpolybutylenglycolmono-(meth)acrylat, Polyethylenglycolpolypropylenglycol-polybutylenglycolmono(meth)acrylat, Methoxypolyethylenglycolmono(meth)acrylat, Methoxypolypropylenglycolmono(meth)acrylat, Methoxypolybutylenglycolmono(meth)acrylat, Methoxypolyethylenglycolpolypropylenglycolmono(meth)acrylat, Methoxypolyethylenglycolpolybutylenglycolmono(meth)acrylat, Methoxypolypropylenglycolpolybutylenglycolmono(meth)acrylat, Methoxypolyethylenglycolpolypropylenglycolpolybutylenglycolmono(meth)acrylat, Ethoxypolyethylenglycolmono(meth)acrylat, Ethoxypolypropylenglycolmono(meth)acrylat, Ethoxypolybutylenglycolmono(meth)acrylat, Ethoxypolyethylenglycolpolypropylenglycolmono(meth)acrylat, Ethoxypolyethylenglycolpolybutylenglycolmono(meth)acrylat, Ethoxypolypropylenglycolpolybutylenglycolmono(meth)acrylat, Ethoxypolyethylenglycolpolypropylenglycolpolybutylenglycolmono(meth)acrylat oder ein Gemisch davon ist.

17. Formulierung gemäß einem der Ansprüche 12 und 14 bis 16, **dadurch gekennzeichnet, dass** das Monomer (b) ein Vertreter ausgewählt aus der Gruppe bestehend aus Acrylsäure, Methacrylsäure, einwertigen Metallsalzen, zweiwertigen Metallsalzen, Ammoniumsalzen und organischen Aminsalzen davon und Gemischen davon ist.

18. Formulierung gemäß einem der Ansprüche 12 und 14 bis 17, **dadurch gekennzeichnet, dass** das Monomer (c) wenigstens ein Vertreter der Ester eines aliphatischen Alkohols mit 1 bis 20 Kohlenstoffatomen mit einer nichtgesättigten Carbonsäure ist.

19. Formulierung gemäß Anspruch 18, **dadurch gekennzeichnet, dass** die nichtgesättigte Carbonsäure Maleinsäure, Fumarsäure, Citraconsäure, (Meth)acrylsäure oder ein einwertiges Metallsalz, zweiwertiges Metallsalz, Ammoniumsalz oder organisches Aminsalz davon ist.

20. Formulierung gemäß Anspruch 18, **dadurch gekennzeichnet, dass** Monoester oder Diester von nichtgesättigten Dicarbonsäuren, wie z. B. Maleinsäure, Fumarsäure oder Citraconsäure, mit aliphatischen C₁-C₂₀-Alkoholen, C₂-C₄-Glycolen oder (Alkoxy)polyalkylenglycolen vorhanden sind.

21. Formulierung gemäß einem der Ansprüche 1 und 2, **dadurch gekennzeichnet, dass** die Komponente a₂) ein Copolymer auf der Grundlage wenigstens eines der folgenden Monomere ist:
A) einem ethylenisch nichtgesättigten Monomer, das einen hydrolysierbaren Rest umfasst, wobei dieses hydrolysierbare Monomer eine aktive Bindungsstelle für wenigstens eine Komponente der Endzusammensetzung, die die Formulierung umfasst, aufweist;
B) einem ethylenisch nichtgesättigten Monomer, das wenigstens eine C₂-C₄-Oxyalkylen-Seitengruppe mit einer Kettenlänge von 1 bis 30 Einheiten aufweist;
C) einem ethylenisch nichtgesättigten Monomer, das wenigstens eine C₂-C₄-Oxyalkylen-Seitengruppe mit einer Kettenlänge von 31 bis 350 Einheiten aufweist.

22. Formulierung gemäß Anspruch 21, **dadurch gekennzeichnet, dass** die Komponenten B) und C) gleichzeitig in dem Copolymer a₂) vorhanden sind.

23. Formulierung gemäß einem der Ansprüche 21 und 22, **dadurch gekennzeichnet, dass** das ethylenisch nichtgesättigte Monomer von Komponente A) wenigstens ein Anhydrid oder Imid und/oder wenigstens ein Maleinsäureanhydrid oder Maleimid umfasst.

24. Formulierung gemäß einem der Ansprüche 21 bis 23, **dadurch gekennzeichnet, dass** das ethylenisch nichtgesättigte Monomer von Komponente A) ein Acrylat mit einer Esterfunktionalität, die den hydrolysierbaren Rest enthält, umfasst.

25. Formulierung gemäß Anspruch 24, **dadurch gekennzeichnet, dass** die Esterfunktionalität wenigstens ein Hydroxypropyl- oder Hydroxyethylrest ist.

26. Formulierung gemäß einem der Ansprüche 21 bis 25, **dadurch gekennzeichnet, dass** das Copolymer a₂) in der Komponente A) mehr als ein ethylenisch nichtgesättigtes Monomer mit einem hydrolysierbaren Rest aufweist.

27. Formulierung gemäß Anspruch 26, **dadurch gekennzeichnet, dass** das ethylenisch nichtgesättigte Monomer von Komponente A) als Rest wenigstens mehr als einen Vertreter der ethylenisch nichtgesättigten Monomere, wenigstens einen Vertreter eines hydrolysierbaren Rests oder ein Gemisch der beiden aufweist.

28. Formulierung gemäß einem der Ansprüche 26 und 27, **dadurch gekennzeichnet, dass** der hydrolysierbare Rest wenigstens eine C₂-C₂₀-Alkoholfunktionalität aufweist.

29. Formulierung gemäß einem der Ansprüche 26 bis 28, **dadurch gekennzeichnet, dass** der hydrolysierbare Rest wenigstens ein C₁-C₂₀-Alkylester, ein C₁-C₂₀-Aminoalkylester oder ein Amid ist.

30. Formulierung gemäß einem der Ansprüche 21 bis 29, **dadurch gekennzeichnet, dass** wenigstens ein ethylenisch nichtgesättigtes Monomer der Komponente B) oder C) eine C₂-C₈-Alkylethergruppe aufweist.

31. Formulierung gemäß Anspruch 30, **dadurch gekennzeichnet, dass** das ethylenisch nichtgesättigte Monomer einen Vinyl-, Allyl- oder (Methyl)allyletherrest aufweist oder von einem nichtgesättigten C₂-C₈-Alkohol abgeleitet ist.

32. Formulierung gemäß Anspruch 31, **dadurch gekennzeichnet, dass** der nichtgesättigte C₂-C₈-Alkohol wenigstens ein Vertreter der Reihe bestehend aus Vinylalkohol, (Meth)allylalkohol, Isoprenol oder Methylbutenol ist.

33. Formulierung gemäß einem der Ansprüche 21 bis 32, **dadurch gekennzeichnet, dass** die ethylenisch nichtgesättigten Monomer-Seitengruppen der Komponente B) oder C) wenigstens eine C₄-Oxyalkyleneinheit aufweisen.

34. Formulierung gemäß einem der Ansprüche 21 bis 33, **dadurch gekennzeichnet, dass** wenigstens ein ethylenisch nichtgesättigtes Monomer der Komponente B) oder C) einen C₂-C₈-Carbonsäureester aufweist, der insbesondere hydrolysierbar ist.

35. Formulierung gemäß einem der Ansprüche 21 bis 34, **dadurch gekennzeichnet, dass** die Oxyalkylen-Seitengruppen wenigstens ein Ethylenoxid, ein Propylenoxid, ein Polyethylenoxid, ein Polypropylenoxid oder Gemische davon aufweist.

36. Formulierung gemäß einem der Ansprüche 21 bis 35, **dadurch gekennzeichnet, dass** das Copolymer a₂) in der Komponente C) wenigstens einen nichtionischen und/oder einen nichthydrolysierbaren Monomerrest oder Gemische davon aufweist.

37. Formulierung gemäß einem der Ansprüche 1 und 2, **dadurch gekennzeichnet, dass** das nichtionische Copolymer a₃) ein Vertreter der allgemeinen Formel (IV) ist, 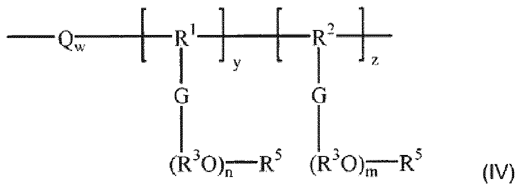 wobei Q ein ethylenisch nichtgesättigtes Monomer darstellt, das wenigstens einen hydrolysierbaren Rest aufweist, G O, C(O)-O oder O-(CH₂)ₚ-O darstellt, wobei p = 2 bis 8, wobei in einem Polymer Gemische der Varianten von G möglich sind; R¹ und R² unabhängig voneinander wenigstens ein C₂-C₈-Alkyl darstellen; R³ (CH₂)_{c} umfasst, wobei c eine ganze Zahl zwischen 2 und 5 ist und in dem gleichen Polymermolekül Gemische der Vertreter von R³ möglich sind; R⁵ wenigstens einen Vertreter ausgewählt aus der Reihe bestehend aus H, einem linearen oder verzweigten, gesättigten oder nichtgesättigten aliphatischen C₁-C₂₀-Kohlenwasserstoffrest, einem cycloaliphatischen C₅-C₈-Kohlenwasserstoffrest und einem substituierten oder nichtsubstituierten C₆-C₁₄-Arylrest darstellt; m 1 bis 30 ist, n 31 bis 350 ist, w 1 bis 40 ist, y 0 bis 1 ist und z 0 bis 1 ist, wobei die Summe (y + z) > 0 ist.

38. Formulierung gemäß einem der Ansprüche 1 und 2, **dadurch gekennzeichnet, dass** das nichtionische Copolymer a₃) ein Vertreter der allgemeinen Formel (V) ist, 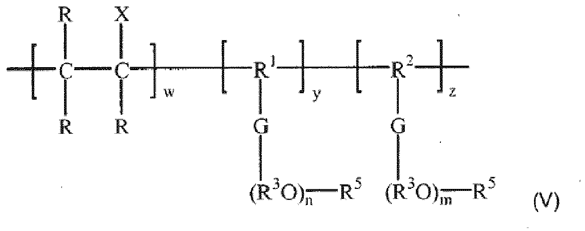 wobei X einen hydrolysierbaren Rest darstellt und R H oder CH₃ darstellt; G, p, R¹, R², R³, R⁵, m, n, w, y, z und (y + z) die für Formel (IV) genannten Bedeutungen haben.

39. Formulierung gemäß Anspruch 38, **dadurch gekennzeichnet, dass** der hydrolysierbare Rest wenigstens ein Vertreter der Reihe bestehend aus Alkylester, Aminoalkylester, Hydroxyalkylester, Aminohydroxyalkylester oder Amid ist.

40. Formulierung gemäß einem der Ansprüche 1 und 2, **dadurch gekennzeichnet, dass** das nichtionische Copolymer a₃) ein Vertreter der allgemeinen Formel (VI) ist, 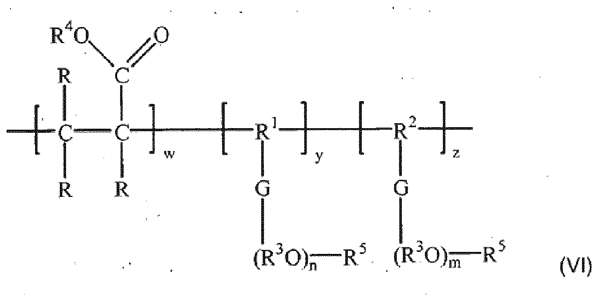 wobei R⁴ wenigstens einen C₁-C₂₀-Alkyl- oder C₂-C₂₀-Hydroxyalkylrest bezeichnet und die Reste G, p, R, R¹, R², R³, c, R⁴, R⁵ und m, n, w, y, z und (y + z) die für die Formeln (IV) und (V) genannten Bedeutungen haben.

41. Formulierung gemäß Anspruch 40, **dadurch gekennzeichnet, dass** p 4 ist, R⁴ C₂H₄OH oder C₃H₆OH bezeichnet, jeder der Reste R⁵ H darstellt, m = 5-30, n = 31-250, w = 1,5-30, y = 0 bis 1, z = 0 bis 1 und (y + z) > 0.

42. Formulierung gemäß einem der Ansprüche 37 bis 41, **dadurch gekennzeichnet, dass** das Molverhältnis von w zu der Summe (y + z) 1:1 bis 20:1 ist, vorzugsweise 2:1 bis 12:1.

43. Formulierung gemäß einem der Ansprüche 1 und 2, **dadurch gekennzeichnet, dass** das Copolymer a₃) ein nichtionisches Polyether-Polyester-Copolymer ist.

44. Formulierung gemäß einem der Ansprüche 1 bis 43, **dadurch gekennzeichnet, dass** die Struktureinheiten (I), (II), (III) der Komponente b) durch die folgende Formel (VII) dargestellt werden, 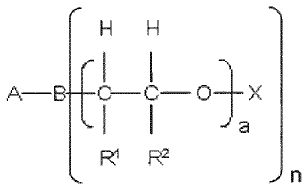
wobei
A gleich oder verschieden sind und von einer substituierten oder nichtsubstituierten, aromatischen oder heteroaromatischen Verbindung mit 5 bis 10 C-Atomen vertreten werden,
wobei
B gleich oder verschieden sind und von N, NH oder O vertreten werden,
wobei
n = 2 wenn B = N, und n = 1 wenn B = NH oder O,
wobei
R¹ und R² unabhängig voneinander gleich oder verschieden sind und von einem verzweigten oder geradkettigen C₁- bis C₁₀-Alkylrest, C₅- bis C₈-Cycloalkylrest, Arylrest, Heteroarylrest oder H vertreten werden,
wobei
a gleich oder verschieden sind und von einer ganzen Zahl von 1 bis 300 vertreten werden,
wobei X gleich oder verschieden sind und von einem verzweigten oder geradkettigen C₁- bis C₁₀-Alkylrest, C₅- bis C₈-Cycloalkylrest, Arylrest, Heteroarylrest oder H vertreten werden, 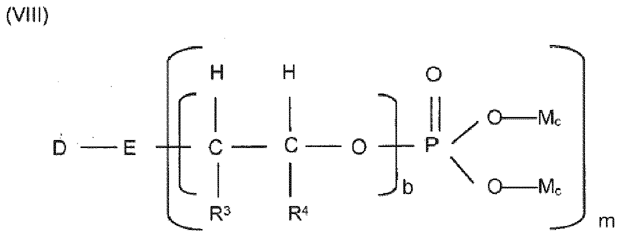 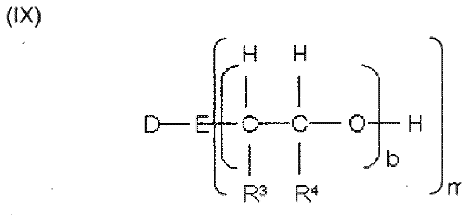 für (VIII) und (IX) in jedem Fall:
wobei
D gleich oder verschieden sind und von einer substituierten oder nichtsubstituierten heteroaromatischen Verbindung mit 5 bis 10 C-Atomen vertreten werden,
wobei
E gleich oder verschieden sind und von N, NH oder O vertreten werden,
wobei
m = 2 wenn E = N, und m = 1 wenn E = NH oder O,
wobei
R³ und R⁴ unabhängig voneinander gleich oder verschieden sind und von einem verzweigten oder geradkettigen C₁- bis C₁₀-Alkylrest, C₅- bis C₈-Cycloalkylrest, Arylrest, Heteroarylrest oder H vertreten werden,
wobei b gleich oder verschieden sind und von einer ganzen Zahl von 0 bis 300 vertreten werden,
wobei
M unabhängig voneinander ein Alkalimetall-Ion, Erdalkalimetall-Ion, Ammonium-Ion, organisches Ammonium-Ion und/oder H ist,
c 1 ist oder im Fall von Erdalkalimetall-Ionen ½.

45. Formulierung gemäß Anspruch 44, **dadurch gekennzeichnet, dass** die Komponente b) eine weitere Struktureinheit (X) enthält, die durch die folgende Formel dargestellt wird, 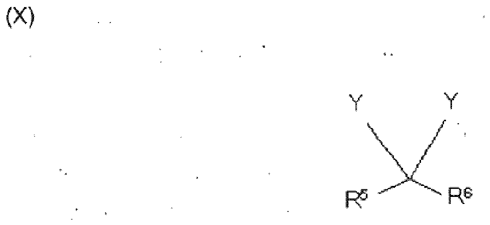
wobei
Y unabhängig voneinander gleich oder verschieden sind und von (VII), (VIII), (IX) oder weiteren Bestandteilen des Polykondensationsprodukts b) dargestellt werden,
wobei
R⁵ gleich oder verschieden sind und von H, CH₃, COOM_{c} oder einer substituierten oder nichtsubstituierten, aromatischen oder heteroaromatischen Verbindung mit 5 bis 10 C-Atomen vertreten werden,
wobei
R⁶ gleich oder verschieden sind und von H, CH₃, COOM_{c} oder einer substituierten oder nichtsubstituierten, aromatischen oder heteroaromatischen Verbindung mit 5 bis 10 C-Atomen vertreten werden,
M unabhängig voneinander ein Alkalimetall-Ion, Erdalkalimetall-Ion, Ammonium-Ion, organisches Ammonium-Ion und/oder H ist,
c 1 ist oder im Fall von Erdalkalimetall-Ionen ½.

46. Formulierung gemäß Anspruch 45, **dadurch gekennzeichnet, dass** R⁵ und R⁶ in der Struktureinheit (X) der Komponente b) unabhängig voneinander gleich oder verschieden sind und von H, COOM_{c} und/oder Methyl vertreten werden.

47. Formulierung gemäß einem der Ansprüche 1 bis 46, **dadurch gekennzeichnet, dass** das Molverhältnis der Struktureinheiten [(VII) + (VIII) + (IX)]:(X) in Komponente b) 1:0,8 bis 3 beträgt.

48. Formulierung gemäß einem der Ansprüche 1 bis 47, **dadurch gekennzeichnet, dass** das Molverhältnis der Struktureinheiten (VII):[(VIII) + (IX)] in Komponente b) 1:15 bis 15:1 beträgt, vorzugsweise 1:10 bis 10:1.

49. Formulierung gemäß einem der Ansprüche 1 bis 48, **dadurch gekennzeichnet, dass** das Molverhältnis der Struktureinheiten (VIII):(IX) in Komponente b) 1:0,005 bis 1:10 beträgt.

50. Formulierung gemäß einem der Ansprüche 1 bis 49, **dadurch gekennzeichnet, dass** das Polykondensationsprodukt b) in einer wässrigen Lösung vorhanden ist, die 2 bis 90 Gew.-% Wasser und 98 bis 10 Gew.-% an gelöstem Trockenmaterial enthält.

51. Formulierung gemäß einem der Ansprüche 1 bis 50, **dadurch gekennzeichnet, dass** die Komponente a) in Anteilen von 5 bis 95 Gew.-% vorhanden ist, vorzugsweise 10 bis 60 Gew.-% und besonders bevorzugt 15 bis 40 Gew.-%, jeweils bezogen auf die Gesamtformulierung.

52. Formulierung gemäß einem der Ansprüche 1 bis 51, **dadurch gekennzeichnet, dass** die Komponente b) in Anteilen von 5 bis 100 Gew.-% vorhanden ist, vorzugsweise 10 bis 60 Gew.-% und besonders bevorzugt 15 bis 40 Gew.-%, jeweils bezogen auf die Gesamtformulierung.

53. Formulierung gemäß einem der Ansprüche 1 bis 52, **dadurch gekennzeichnet, dass** sie zusätzlich zu den Komponenten a) und b) wenigstens ein Antischaummittel als Komponente c) und/oder eine Komponente d) mit einer oberflächenaktiven Wirkung enthält, wobei die Komponenten c) und d) voneinander strukturell verschieden sind.

54. Formulierung gemäß Anspruch 53, **dadurch gekennzeichnet, dass** die Antischaumkomponente c) wenigstens ein Vertreter der Gruppe bestehend aus Mineralöl, Pflanzenöl, Siliconöl, siliconhaltigen Emulsionen, Fettsäure, Fettsäureester, organisch modifiziertem Polysiloxan, Boratester, Alkoxylat, Polyoxyalkylen-Copolymer, Ethylenoxid(EO)-Propylenoxid(PO)-Blockpolymer, acetylenischem Diol mit Antischaumeigenschaften, Phosphorsäureester der Formel P(O)(O-R₈)₃₋ₓ(O-R₉)ₓ, wobei P = Phosphor, O = Sauerstoff und R₈ und R₉ unabhängig voneinander ein C₂₋₂₀-Alkyl oder eine Arylgruppe bezeichnen und X = 0, 1 oder 2, ist.

55. Formulierung gemäß einem der Ansprüche 53 und 54, **dadurch gekennzeichnet, dass** die Antischaumkomponente c) wenigstens ein Vertreter der Reihe bestehend aus Trialkylphosphat, Polyoxypropylen-Copolymer und/oder Glycerol/Alkohol-Acetat ist.

56. Formulierung gemäß einem der Ansprüche 53 bis 55, **dadurch gekennzeichnet, dass** die Antischaumkomponente c) Triisobutylphosphat ist.

57. Formulierung gemäß einem der Ansprüche 53 bis 56, **dadurch gekennzeichnet, dass** die Antischaumkomponente c) ein Gemisch eines Trialkylphosphats und eines Polyoxypropylen-Copolymers ist.

58. Formulierung gemäß Anspruch 53, **dadurch gekennzeichnet, dass** die Komponente d) wenigstens ein Vertreter der Reihe bestehend aus Ethylenoxid/Propylenoxid(EO/PO)-Blockcopolymer, Styrol/Maleinsäure-Copolymer, Fettsäure-Alkoholalkoxylat, Alkoholethoxylat R₁₀-(EO)-H, wobei R₁₀ = eine aliphatische Kohlenwasserstoffgruppe mit 1 bis 25 Kohlenstoffatomen, Acetylendiol, Monoalkylpolyalkylen, ethoxyliertem Nonylphenol, Alkylsulfat, Alkylethersulfat, Alkylethersulfonat oder Alkylethercarboxylat ist.

59. Formulierung gemäß einem der Ansprüche 53 und 58, **dadurch gekennzeichnet, dass** die Komponente d) einen Alkohol umfasst, der eine Polyalkylengruppe aufweist, wobei die Polyalkylengruppe eine Kohlenstoffkettenlänge von 2 bis 20 Kohlenstoffatomen aufweist.

60. Formulierung gemäß Anspruch 59, **dadurch gekennzeichnet, dass** die Polyalkylengruppe eine Kohlenstoffkettenlänge von 3 bis 12 Kohlenstoffatomen aufweist.

61. Formulierung gemäß einem der Ansprüche 53 und 58 bis 60, **dadurch gekennzeichnet, dass** sie die Antischaumkomponente c) in freier Form, gebunden an die Dispersionsmittelkomponente a) oder als Gemisch dieser beiden Formen enthält.

62. Formulierung gemäß einem der Ansprüche 53 bis 61, **dadurch gekennzeichnet, dass** die Antischaumkomponente c) in Mengen von 0,01 bis 10 Gew.-% und/oder die oberflächenaktive Komponente d) in Mengen von 0,01 bis 10 Gew.-%, jeweils bezogen auf das Gesamtgewicht der Formulierung, vorhanden ist.

63. Formulierung gemäß einem der Ansprüche 53 bis 62, **dadurch gekennzeichnet, dass** die Antischaumkomponente c) und/oder die oberflächenaktive Komponente d) unabhängig voneinander jeweils in einer Menge von 0,01 bis 5 Gew.-%, jeweils bezogen auf das Gesamtgewicht der Formulierung, vorhanden sind.

64. Formulierung gemäß einem der Ansprüche 1 bis 63, **dadurch gekennzeichnet, dass** sie zusätzlich zu den Komponenten a) und b) und gegebenenfalls c) und/oder d) wenigstens eine Verbindung ausgewählt aus der Reihe bestehend aus Polymer mit einer niedrigen Ladung, neutralem Polymer oder Polyvinylalkohol als Komponente e) enthält.

65. Formulierung gemäß Anspruch 64, **dadurch gekennzeichnet, dass** sie die Komponente e) in Mengen von 1 bis 50 Gew.-% enthält, vorzugsweise 5 bis 40 Gew.-% und besonders bevorzugt in Mengen von 10 bis 30 Gew.-%, jeweils bezogen auf das Gesamtgewicht der Formulierung.

66. Formulierung gemäß einem der Ansprüche 64 und 65, **dadurch gekennzeichnet, dass** das Polymer mit einer niedrigen Ladung verzweigt ist und die Seitenkette vorzugsweise aus einem Polyether und/oder einem Polyester besteht.

67. Formulierung gemäß einem der Ansprüche 64 bis 66, **dadurch gekennzeichnet, dass** das Polymer mit einer niedrigen Ladung ein Polycarboxylatether und/oder ein Polycarboxylatester ist, vorzugsweise mit EO-Seitenketten und/oder mit einem Anteil an Carboxylat bis zu 83 mol-%, vorzugsweise bis zu 75 mol-%.

68. Formulierung gemäß einem der Ansprüche 64 bis 67, **dadurch gekennzeichnet, dass** das Polymer e) mit einer niedrigen Ladung aus wenigstens einem Monomer besteht, ausgewählt aus der Reihe bestehend aus Polyethermonoacrylat, Polyethermonomethacrylat, Polyethermonoallylether, Polyethermonomaleat, Monovinylpolyether und Gemischen davon.

69. Formulierung gemäß Anspruch 68, **dadurch gekennzeichnet, dass** der Polyether ein Alkylenoxidpolymer mit einem Molekulargewicht von 500 bis 10.000 ist, vorzugsweise 750 bis 7.500 und insbesondere 1.000 bis 5.000.

70. Formulierung gemäß Anspruch 69, **dadurch gekennzeichnet, dass** das Alkylenoxid Ethylenoxid, Propylenoxid, Butylenoxid oder ein Gemisch davon ist.

71. Formulierung gemäß einem der Ansprüche 64 bis 70, **dadurch gekennzeichnet, dass** das Polymer e) mit einer niedrigen Ladung aus wenigstens einem Monomer besteht, ausgewählt aus der Reihe bestehend aus Polypropylenglycolacrylat, Polypropylenglycolmethacrylaten, Polyethylenglycolacrylat, Polyethylenglycolmethacrylat, Polypropylenglycolmonovinylether, Polyethylenglycolmonovinylether, Alkoxy- oder Aryloxypolyethylenglycolacrylat, Alkoxy- oder Aryloxypolyethylenglycolmethacrylaten, Alkoxy-oder Aryloxypolyethylenglycolmonovinylether, Acrylaten, Methacrylaten und Monovinylethern eines Oxyalkylen- oder Oxypropylen-Block- oder Zufalls-Copolymers, Polypropylenglycolallylether, Polyethylenglycolallylether, Polyethylenglycolmonomaleat, Polypropylenglycolmonomaleat und beliebigen Gemischen davon.

72. Formulierung gemäß einem der Ansprüche 64 bis 71, **dadurch gekennzeichnet, dass** das Polymer e) mit einer niedrigen Ladung eine Carbonsäuregruppe trägt, vorzugsweise ausgewählt aus der Reihe bestehend aus Acrylsäure, Methacrylsäure, Maleinsäure, Fumarsäure, Itaconsäure und Anhydriden davon.

73. Formulierung gemäß einem der Ansprüche 64 bis 72, **dadurch gekennzeichnet, dass** das Polymer e) mit einer niedrigen Ladung eine Sulfonsäuregruppe trägt, vorzugsweise ausgewählt aus der Reihe bestehend aus 2-Acrylamido-2-methylpropansulfonsäure (AMPS), Vinylsulfonsäure, Allylethersulfonsäure, 2-Sulfoethylmethacrylsäure, Styrolsulfonsäure, Methallylsulfonsäure, den Natrium-, Kalium- und Ammoniumsalzen davon und beliebigen Gemischen davon, insbesondere AMPS und Vinylsulfonsäure.

74. Formulierung gemäß einem der Ansprüche 64 bis 73, **dadurch gekennzeichnet, dass** das neutrale Polymer e) aus neutralen Monomer-Baueinheiten besteht, die insbesondere ausgewählt sind aus der Reihe bestehend aus Alkylacrylaten und Alkylmethacrylaten und Hydroxyalkylestern davon mit bis zu 5 Kohlenstoffatomen, insbesondere Hydroxyethylacrylat und Hydroxypropylacrylat oder Hydroxyethylmethacrylat und Hydroxypropylmethyacrylat und Vinylacetat, N-Vinylpyrrolidon, N-Vinylcaprolactam, Styrol und Methylstyrol.

75. Formulierung gemäß einem der Ansprüche 1 bis 74, **dadurch gekennzeichnet, dass** sie als weitere zusätzliche Komponente f) eine Calciumsilicathydrat(C-S-H)-enthaltende Zusammensetzung enthält.

76. Formulierung gemäß Anspruch 75, **dadurch gekennzeichnet, dass** das C-S-H ein Calcium/Silicium(Ca/Si)-Molverhältnis von 0,5 bis 2,0 aufweist, vorzugsweise 0,7 bis 1,8, bevorzugter 1,6 bis 1,7.

77. Formulierung gemäß einem der Ansprüche 75 oder 76, **dadurch gekennzeichnet, dass** die mittlere Partikelgröße von C-S-H kleiner als 10 µm ist, vorzugsweise kleiner als 1 µm, bevorzugter kleiner als 0,2 µm, gemessen durch Lichtstreuung mit der Vorrichtung Master Sizer 2000 der Malvern Company.

78. Formulierung gemäß einem der Ansprüche 75 oder 76, **dadurch gekennzeichnet, dass** die mittlere Partikelgröße von C-S-H größer als 0,01 µm ist, vorzugsweise 0,1 µm bis 1,0 µm, bevorzugter 0,2 µm bis 0,5 µm.

79. Formulierung gemäß einem der Ansprüche 75 bis 78, **dadurch gekennzeichnet, dass** die C-S-H-enthaltende Zusammensetzung durch Umsetzung einer wasserlöslichen Calcium-enthaltenden Verbindung mit einer wasserlöslichen Silicat-enthaltenden Verbindung herstellbar ist, wobei die Umsetzung der wasserlöslichen Calcium-enthaltenden Verbindung mit der wasserlöslichen Silicat-enthaltenden Verbindung in Gegenwart einer wässrigen Lösung durchgeführt wird, die vorzugsweise ein wasserlösliches Copolymer enthält, das vorzugsweise ein Dispersionsmittel für hydraulische Bindemittel ist und ausgewählt ist aus wenigstens einem Vertreter von Komponente a) und/oder b).

80. Formulierung gemäß einem der Ansprüche 75 bis 78, **dadurch gekennzeichnet, dass** die C-S-H-enthaltende Zusammensetzung durch Umsetzung eines Calciumoxids, eines Calciumcarbonats und/oder eines Calciumhydroxids mit einem Siliciumdioxid unter Mahlen herstellbar ist, wobei die Umsetzung in Gegenwart einer wässrigen Lösung durchgeführt wird, die vorzugsweise ein wasserlösliches Copolymer enthält, das vorzugsweise ein Dispersionsmittel für hydraulische Bindemittel ist und ausgewählt ist aus wenigstens einem Vertreter von Komponente a) und/oder b).

81. Formulierung gemäß einem der Ansprüche 1 bis 80, **dadurch gekennzeichnet, dass** sie eine Flüssigkeit oder ein Pulver ist, vorzugsweise ein Redispersionspulver.

82. Verfahren zur Verwendung der Formulierung gemäß einem der Ansprüche 1 bis 81, **dadurch gekennzeichnet, dass** die Formulierung zum Regulieren der Fließfähigkeit von wässrigen Suspensionen zu Systemen zugesetzt wird, die Bauchemikalien enthalten, insbesondere zu wässrigen Suspensionen, die hydraulische und/oder latent hydraulische Bindemittel enthalten, insbesondere als Dispersionsmittel.

83. Verfahren zur Verwendung gemäß Anspruch 82, **dadurch gekennzeichnet, dass** die Formulierung als wässrige Suspensionen verwendet wird, die als hydraulisches Bindemittel wenigstens einen Vertreter ausgewählt aus der Gruppe bestehend aus Zementen und Verbindungen auf Calciumsulfat-Grundlage, insbesondere Calciumsulfathemihydrat, Anhydrit oder Gips, enthalten.

84. Verfahren zur Verwendung gemäß einem der Ansprüche 82 und 83, **dadurch gekennzeichnet, dass** die Formulierung in Mengen von 0,001 bis 8,0 Gew.-% verwendet wird, insbesondere 0,005 bis 5,0 Gew.-%, vorzugsweise 0,01 bis 2,0 Gew.-% und besonders bevorzugt 0,05 bis 1,0 Gew.-%, jeweils bezogen auf die Gesamtzusammensetzung der Suspension.

85. Verfahren zur Verwendung gemäß einem der Ansprüche 82 bis 84, **dadurch gekennzeichnet, dass** die Formulierung zusammen mit anderen Zusatzstoffen, Beimischungen oder Zusammensetzungen verwendet wird, vorzugsweise mit fließregulierenden und/oder dispergierenden Eigenschaften, insbesondere zusammen mit wenigstens einem Dispersionsmittel von dem Typ der Komponente a) und/oder des Polymerisationsprodukts b) der Formulierung.

86. Verfahren zur Verwendung gemäß einem der Ansprüche 82 bis 85, **dadurch gekennzeichnet, dass** die wässrige Suspension auf der Grundlage einer Trockenmörtelzusammensetzung oder einer Fußbodenzusammensetzung steht.

87. Verfahren zur Verwendung gemäß Anspruch 86, **dadurch gekennzeichnet, dass** die Fußbodenzusammensetzung Calciumsulfat, Zement oder ein Gemisch davon enthält und vorzugsweise eine selbsteinebnende Fußbodenzusammensetzung ist.

## Revendications

1. Formulation contenant
a) au moins un composant ayant des propriétés de dispersion et ayant été choisi dans la série constituée par un composé au moins contenant un polymère en peigne ramifié ayant des chaînes latérales de polyéther, un condensat de sulfonate de naphtalène-formaldéhyde (« BNS ») et un condensat de sulfonate de mélamine-formaldéhyde (« MSF »), et
b) un produit de polycondensation contenant
(I) au moins une unité structurelle ayant une sous-unité aromatique ou hétéroaromatique et au moins une chaîne latérale de polyéther, et
(II) au moins une unité structurelle phosphatée ayant une sous-unité aromatique ou hétéroaromatique et
(III) au moins une unité structurelle ayant une sous-unité aromatique ou hétéroaromatique,
l'unité structurelle (II) et l'unité structurelle (III) n'étant différentes qu'en ce que le groupement OP(OH)₂ de l'unité structurelle (II) est remplacé par H dans l'unité structurelle (III), et l'unité structurelle (III) n'est pas la même que l'unité structurelle (I).

2. Formulation selon la revendication 1, **caractérisée en ce que** le composant a) est un éther de polycarboxylate a₁), un ester de polycarboxylate a₂), un copolymère non chargé a₃) ou des mélanges de ceux-ci.

3. Formulation selon l'une ou l'autre parmi les revendications 1 et 2, **caractérisée en ce que** le composant a) est un copolymère a₁) constitué par
1) au moins un co-monomère d'acide monocarboxylique oléfiniquement insaturé ou un ester ou un sel de celui-ci et/ou un co-monomère d'acide sulfonique oléfiniquement insaturé ou un sel de celui-ci, et
2) au moins un co-monomère de formule générale (I) 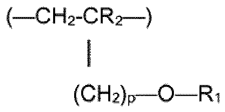
dans laquelle R₁ représente 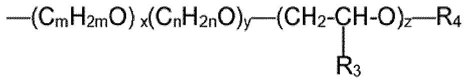
et R₂ représente H ou un radical hydrocarboné aliphatique ayant de 1 à 5 atomes de C ; R₃ = un radical aryle non substitué ou substitué et préférablement phényle, et R₄ = H ou un radical hydrocarboné aliphatique ayant de 1 à 20 atomes de C, un radical hydrocarboné cycloaliphatique ayant de 5 à 8 atomes de C, un radical aryle substitué ayant de 6 à 14 atomes de C ou un représentant de la série 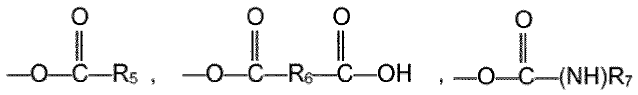
où R₅ et R₇ représentent chacun un radical alkyle, aryle, aralkyle ou alkaryle et R₆ représente un radical alkylidène, arylidène, aralkylidène ou alkarylidène, et p = 0, 1, 2, 3 ou 4,
m, n désignent, indépendamment l'un de l'autre, 2, 3, 4 ou 5,
x et y désignent, indépendamment l'un de l'autre, un nombre entier ≤ 350 et
z = 0 à 200,
où (I) dans le copolymère a₁), les unités de co-monomère qui représentent les composants 1) et 2) ne possèdent dans chaque cas aucune différence moléculaire interne et/ou (II) le copolymère a₁) représente un mélange polymère des composants 1) et 2), auquel cas les unités de co-monomère possèdent des différences moléculaires internes en ce qui concerne les radicaux R₁ et/ou R₂ et/ou R₃ et/ou R₄ et/ou R₅ et/ou R₆ et/ou R₇ et/ou m et/ou n et/ou x et/ou y et/ou z, et les différences discutées concernent en particulier la composition et la longueur des chaînes latérales.

4. Formulation selon la revendication 3, **caractérisée en ce que** le copolymère a₁) contient le composant de co-monomère 1) selon des proportions allant de 30 à 99% molaire et le composant de co-monomère 2) selon les proportions allant de 70 à 1% molaire.

5. Formulation selon l'une ou l'autre parmi les revendications 3 et 4, **caractérisée en ce que** le copolymère a₁) contient le composant de co-monomère 1) selon des proportions allant de 40 à 90% molaire et le composant de co-monomère 2) selon des proportions allant de 60 à 10% molaire.

6. Formulation selon l'une quelconque des revendications 3 à 5, **caractérisée en ce que** le composant de co-monomère 1) représente un acide acrylique ou un sel de celui-ci, et le composant de co-monomère 2) avec p = 0 ou 1 contient un groupement vinyle ou allyle et, comme R₁, un polyéther.

7. Formulation selon l'une quelconque des revendications 3 à 6, **caractérisée en ce que** le composant de co-monomère 1) est issu du groupe constitué par l'acide acrylique, l'acide méthacrylique, l'acide crotonique, l'acide isocrotonique, l'acide allylsulfonique, l'acide vinylsulfonique et des sels convenables de ceux-ci et des alkyl- ou hydroxyalkylesters de ceux-ci.

8. Formulation selon l'une quelconque des revendications 3 à 7, **caractérisée en ce que** le copolymère a₁) possède des groupements structurels supplémentaires sous forme copolymérisée.

9. Formulation selon la revendication 8, **caractérisée en ce que** les groupements structurels supplémentaires sont des styrènes, des acrylamides et/ou des composés hydrophobes, des unités structurelles d'ester, les unités d'oxyde de polypropylène et d'oxyde de polypropylène/oxyde de polyéthylène étant particulièrement préférées.

10. Formulation selon l'une ou l'autre parmi les revendications 8 et 9, **caractérisée en ce que** le copolymère a₁) contient le groupement structurel supplémentaire selon des proportions allant jusqu'à 5% molaire, préférablement de 0,05 à 3,0% molaire et en particulier de 0,1 à 1,0% molaire.

11. Formulation selon l'une quelconque des revendications 3 à 10, **caractérisée en ce que** la formule (1) représente un polyéther contenant des groupements allyle ou vinyle.

12. Formulation selon l'une ou l'autre parmi les revendications 1 et 2, **caractérisée en ce que** l'ester de polycarboxylate a₂) est un polymère pouvant être préparé par la polymérisation d'un mélange de monomères (I) contenant, comme composant principal, un représentant de type monomère d'acide carboxylique.

13. Formulation selon la revendication 12, **caractérisée en ce que** l'ester de polycarboxylate a₂) est un agent anti-moussant, un antimousse ou un agent tensioactif.

14. Formulation selon la revendication 12, **caractérisée en ce que** le mélange de monomères (I) contient un monomère de mono(méth)acrylate de (alcoxy)polyalkylène glycol (a) de formule générale (II) 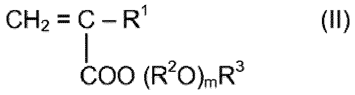
dans laquelle R¹ représente un atome d'hydrogène ou un groupement CH₃, R²O représente un représentant ou un mélange d'au moins deux groupements oxyalkylène ayant 2 à 4 atomes de carbone, R³ représente un atome d'hydrogène ou un groupement alkyle ayant de 1 à 5 atomes de carbone et m représente un nombre compris entre 1 et 250 et représente le nombre moyen de moles du groupement oxyalkylène ajouté,
de plus, comme monomère (b), un acide (méth)acrylique de formule générale (III), 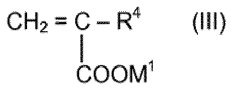
dans laquelle R⁴ représente un atome d'hydrogène ou un groupement CH₃ et M¹ représente un atome d'hydrogène, un atome de métal monovalent, un atome de métal divalent, un groupement ammonium ou un groupement d'amine organique, et éventuellement un monomère (c) qui est copolymérisé avec les monomères (a) et (b).

15. Formulation selon la revendication 14, **caractérisée en ce que** le monomère (a) est présent selon une quantité allant de 5 à 98% en poids, le monomère (b) selon une quantité allant de 2 à 95% en poids et le monomère (c) selon une quantité allant jusqu'à 50% en poids dans le mélange de monomères (I), les quantités respectives des monomères (a), (b) et (c) se montant à 100% en poids.

16. Formulation selon l'une quelconque des revendications 12 et 14 à 15, **caractérisée en ce que** le monomère (a) est un (méth)acrylate d'hydroxyéthyle, un (méth)acrylate d'hydroxypropyle, un mono(méth)acrylate de polyéthylène glycol, un mono(méth)acrylate de polypropylène glycol, un mono(méth)acrylate de polybutylène glycol, un mono(méth)acrylate de polyéthylène glycol et de polypropylène glycol, un mono(méth)acrylate de polyéthylène glycol et de polybutylène glycol, un mono(méth)acrylate de polypropylène glycol et de polybutylène glycol, un mono(méth)acrylate de polyéthylène glycol et de polypropylène glycol et de polybutylène glycol, un mono(méth)acrylate de méthoxypolyéthylène glycol, un mono(méth)acrylate de méthoxypolypropylène glycol, un mono(méth)acrylate de méthoxypolybutylène glycol, un mono(méth)acrylate de méthoxypolyéthylène glycol et de polypropylène glycol, un mono(méth)acrylate de méthoxypolyéthylène glycol et de polybutylène glycol, un mono(méth)acrylate de méthoxypolypropylène glycol et de polybutylène glycol, un mono(méth)acrylate de méthoxypolyéthylène glycol et de polypropylène glycol et de polybutylène glycol, un mono(méth)acrylate d'éthoxypolyéthylène glycol, un mono(méth)acrylate d'éthoxypolypropylène glycol, un mono(méth)acrylate d'éthoxypolybutylène glycol, un mono(méth)acrylate d'éthoxypolyéthylène glycol et de polypropylène glycol, un mono(méth)acrylate d'éthoxypolyéthylène glycol et de polybutylène glycol, un mono(méth)acrylate d'éthoxypolypropylène glycol et de polybutylène glycol, un mono(méth)acrylate d'éthoxypolyéthylène glycol et de polypropylène glycol et de polybutylène glycol, ou des mélanges de ceux-ci.

17. Formulation selon l'une quelconque des revendications 12 et 14 à 16, **caractérisée en ce que** le monomère (b) est un représentant choisi dans le groupe constitué par l'acide acrylique, l'acide méthacrylique, les sels de métaux monovalents, les sels de métaux divalents, les sels d'ammonium et les sels d'amine organique de ceux-ci, et des mélanges de ceux-ci.

18. Formulation selon l'une quelconque des revendications 12 et 14 à 17, **caractérisée en ce que** le monomère (c) est au moins un représentant des esters d'un alcool aliphatique ayant de 1 à 20 atomes de carbone avec un acide carboxylique insaturé.

19. Formulation selon la revendication 18, **caractérisée en ce que** l'acide carboxylique insaturé est l'acide maléique, l'acide fumarique, l'acide citraconique, l'acide (méth)acrylique ou les sels de métaux monovalents, les sels de métaux divalents, les sels d'ammonium ou les sels d'amine organique de ceux-ci.

20. Formulation selon la revendication 18, **caractérisée en ce que** des monoesters ou diesters d'acides dicarboxyliques insaturés, tels que l'acide maléique, l'acide fumarique ou l'acide citraconique, avec des C₁-C₂₀-alcools, C₂-C₄-glycols ou (alcoxy)-polyalkylène glycols aliphatiques sont présents.

21. Formulation selon l'une ou l'autre parmi les revendications 1 et 2, **caractérisée en ce que** le composant a₂) est un copolymère à base d'au moins un parmi les monomères suivantes :
A) un monomère éthyléniquement insaturé comprenant un radical hydrolysable, ce monomère hydrolysable ayant un site de liaison actif pour au moins un composant de la composition finale comprenant la formulation ;
B) un monomère éthyléniquement insaturé ayant au moins un groupement latéral C₂-C₄-oxyalkyle ayant une longueur de chaîne allant de 1 à 30 unités ;
C) un monomère éthyléniquement insaturé ayant au moins un groupement latéral C₂-C₄-oxyalkylène ayant une longueur de chaîne allant de 31 à 350 unités.

22. Formulation selon la revendication 21, **caractérisée en ce que** les composants B) et C) sont représentés simultanément dans le copolymère a₂).

23. Formulation selon l'une ou l'autre parmi les revendications 21 et 22, **caractérisée en ce que** le monomère éthyléniquement insaturé du composant A) comprend au moins un anhydride ou imide et/ou au moins un anhydride maléique ou maléimide.

24. Formulation selon l'une quelconque des revendications 21 à 23, **caractérisée en ce que** le monomère éthyléniquement insaturé du composant A) comprend un acrylate ayant une fonctionnalité ester qui contient le radical hydrolysable.

25. Formulation selon la revendication 24, **caractérisée en ce que** la fonctionnalité ester est au moins un radical hydroxypropyle ou hydroxyéthyle.

26. Formulation selon l'une quelconque des revendications 21 à 25, **caractérisée en ce que** le copolymère a₂) dans le composant A) possède plus d'un monomère éthyléniquement insaturé ayant un radical hydrolysable.

27. Formulation selon la revendication 26, **caractérisée en ce que** le monomère éthyléniquement insaturé du composant A) possède, comme radical, au moins plus d'un représentant des monomères éthyléniquement insaturés, au moins un représentant d'un radical hydrolysable ou un mélange des deux.

28. Formulation selon l'une ou l'autre parmi les revendications 26 et 27, **caractérisée en ce que** le radical hydrolysable possède au moins une fonctionnalité C₂-C₂₀-alcool.

29. Formulation selon l'une quelconque des revendications 26 à 28, **caractérisée en ce que** le radical hydrolysable est au moins un C₁-C₂₀-alkylester, un C₁-C₂₀-aminoalkylester ou un amide.

30. Formulation selon l'une quelconque des revendications 21 à 29, **caractérisée en ce qu'**au moins un monomère éthyléniquement insaturé du composant B) ou C) possède un groupement C₂-C₈-alkyléther.

31. Formulation selon la revendication 30, **caractérisée en ce que** le monomère éthyléniquement insaturé possède un radical vinyl-, allyl-, ou (méthyl)allyléther ou est dérivé d'un C₂-C₈-alcool insaturé.

32. Formulation selon la revendication 31, **caractérisée en ce que** le C₂-C₈-alcool insaturé est au moins un représentant de la série constituée par l'alcool vinylique, l'alcool (méth)allylique, l'isoprénol ou le méthylbuténol.

33. Formulation selon l'une quelconque des revendications 21 à 32, **caractérisée en ce que** les groupements latéraux du monomère éthyléniquement insaturé du composant B) ou C) possèdent au moins une unité C₄-oxyalkylène.

34. Formulation selon l'une quelconque des revendications 21 à 33, **caractérisée en ce qu'**au moins un monomère éthyléniquement insaturé du composant B) ou C) possède un ester C₂-C₈-carboxylique qui est en particulier hydrolysable.

35. Formulation selon l'une quelconque des revendications 21 à 34, **caractérisée en ce que** les groupements latéraux oxyalkylène possèdent au moins un oxyde d'éthylène, un oxyde de propylène, un oxyde de polyéthylène, un oxyde de polypropylène, ou des mélanges de ceux-ci.

36. Formulation selon l'une quelconque des revendications 21 à 35, **caractérisée en ce que** le copolymère a₂) dans le composant C) possède au moins un radical monomère non ionique et/ou non hydrolysable, ou des mélanges de ceux-ci.

37. Formulation selon l'une ou l'autre parmi les revendications 1 et 2, **caractérisée en ce que** le copolymère non ionique a₃) est un représentant de formule générale (IV) 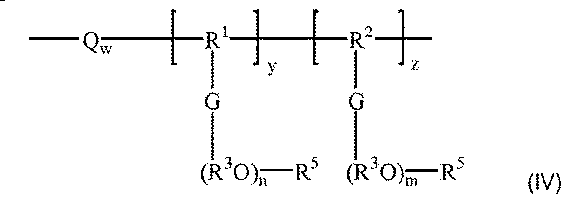 dans laquelle Q représente un monomère éthyléniquement insaturé ayant au moins un radical hydrolysable, G désigne 0, C(O)-O ou O-(CH₂)ₚ-O avec p = 2 à 8, des mélanges des variants de G étant possibles dans un polymère ; R¹ et R² désignent, indépendamment l'un de l'autre, au moins un groupement C₂-C₈-alkyle ; R³ comprend (CH₂)_{c}, c étant un nombre entier compris entre 2 et 5, et des mélanges des représentants de R³ étant possibles dans la même molécule de polymère ; R⁵ désigne au moins un représentant choisi dans la série constituée par H, un radical hydrocarboné saturé ou insaturé, linéaire ou ramifié, C₁-C₂₀-aliphatique, un radical hydrocarboné C₅-C₈-cycloaliphatique ou un radical C₆-C₁₄-aryle substitué ou non substitué ; m va de 1 à 30, n va de 31 à 350, w va de 1 à 40, y va de 0 à 1 et z va de 0 à 1, la somme (y + z) étant > 0.

38. Formulation selon l'une ou l'autre parmi les revendications 1 et 2, **caractérisée en ce que** le copolymère non ionique a₃) est un représentant de formule générale (V) 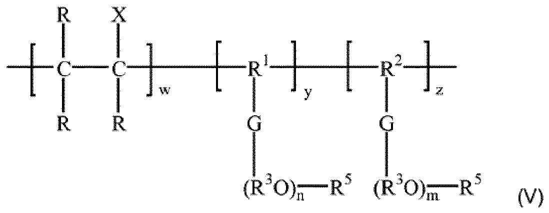 dans laquelle X représente un radical hydrolysable et R représente H ou CH₃ ; G, p, R¹, R², R³, R⁵, m, n, w, y, z et (y + z) revêtent les significations énumérées pour la formule (IV).

39. Formulation selon la revendication 38, **caractérisée en ce que** le radical hydrolysable est au moins un représentant de la série constituée par un alkylester, un aminoalkylester, un hydroxylalkylester, un aminohydroxyalkylester ou un amide.

40. Formulation selon l'une ou l'autre parmi les revendications 1 et 2, **caractérisée en ce que** le copolymère non ionique a₃) est au moins un représentant de formule générale (VI) 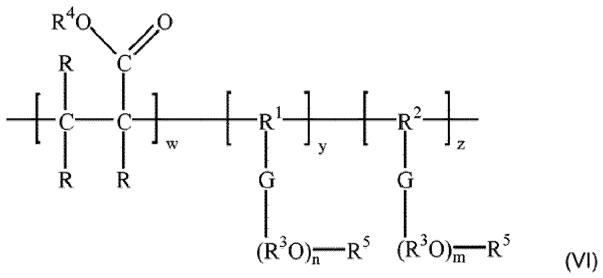 dans laquelle R⁴ désigne au moins un radical C₁-C₂₀-alkyle ou C₂-C₂₀-hydroxyalkyle et les radicaux G, p, R, R¹, R², R³, c, R⁴, R⁵ et m, n, w, y, z et (y + z) revêtent les significations énumérées pour les formules (IV) et (V).

41. Formulation selon la revendication 40, **caractérisée en ce que** p vaut 4, R⁴ désigne C₂H₄OH ou C₃H₆OH, chacun parmi les radicaux R⁵ représente H, m = 5-30, n = 31-250, w = 1, 5-30, y = 0 à 1, z = 0 à 1 et (y + z) > 0.

42. Formulation selon l'une quelconque des revendications 37 à 41, **caractérisée en ce que** le rapport molaire w à la somme (y + z) va de 1:1 à 20:1 et préférablement de 2:1 à 12:1.

43. Formulation selon l'une ou l'autre parmi les revendications 1 et 2, **caractérisée en ce que** le copolymère a₃) est un copolymère de polyéther-polyester non ionique.

44. Formulation selon l'une quelconque des revendications 1 à 43, **caractérisée en ce que** les unités structurelles (I), (II), (III) du composant b) sont représentées par les formules suivantes 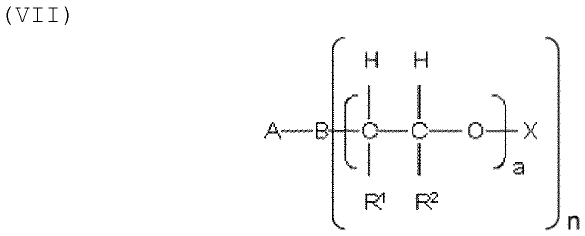
où
A sont identiques ou différents et sont représentés par un composé aromatique ou hétéroaromatique, substitué ou non substitué, ayant de 5 à 10 atomes de C,
où
B sont identiques ou différents et sont représentés par N, NH ou 0
où
n = 2, si B = N, et n = 1, si B = NH ou 0
où
R¹ et R², indépendamment l'un de l'autre, sont identiques ou différents et sont représentés par un radical C₁ à C₁₀-alkyle à chaîne linéaire ou ramifiée, un radical C₅- à C₈-cycloalkyle, un radical aryle, un radical hétéroaryle ou H,
où
a sont identiques ou différents et sont représentés par un nombre entier allant de 1 à 300, où
X sont identiques ou différents et sont représentés par un radical C₁ à C₁₀-alkyle à chaîne linéaire ou ramifiée, un radical C₅- à C₈-cycloalkyle, un radical aryle, un radical hétéroaryle ou H, 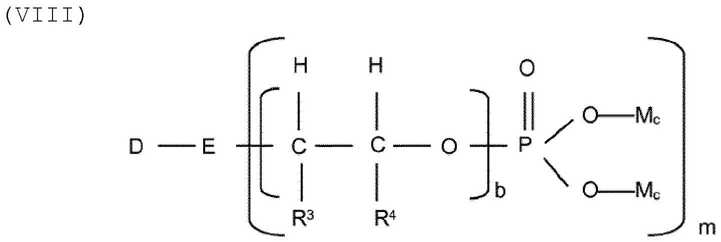 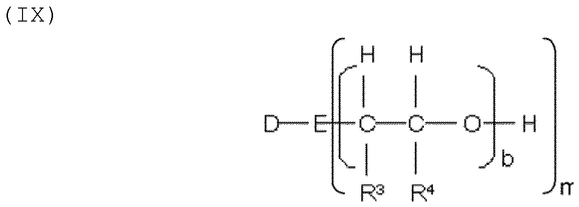 pour (VIII) et (IX) dans chaque cas :
où
D sont identiques ou différents et sont représentés par un composé hétéroaromatique substitué ou non substitué ayant de 5 à 10 atomes de C,
où
E sont identiques ou différents et sont représentés par N, NH ou 0
où
m = 2, si E = N, et m = 1, si E = NH ou 0
où
R³ et R⁴ indépendamment l'un de l'autre sont identiques ou différents et sont représentés par un radical C₁ à C₁₀-alkyle à chaîne linéaire ou ramifiée, un radical C₅-à C₈-cycloalkyle, un radical aryle, un radical hétéroaryle ou H,
où b sont identiques ou différents et sont représentés par un nombre entier allant de 0 à 300,
où M est indépendamment l'un de l'autre un ion de métal alcalin, un ion de métal alcalino-terreux, un ion ammonium, un ion ammonium organique et/ou H,
c vaut 1 ou, dans le cas d'ions de métaux alcalino-terreux, 1/2.

45. Formulation selon la revendication 44, **caractérisée en ce que** le composant b) contient une autre unité structurelle (X) qui est représentée par la formule suivante 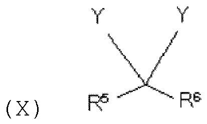
où
Y, indépendamment l'un de l'autre, sont identiques ou différents et sont représentés par (VII), (VIII), (IX) ou d'autres constituants du produit de polycondensation b),
où
R⁵ sont identiques ou différents et sont représentés par H, CH₃, COOM_{c} ou un composé aromatique ou hétéroaromatique substitué ou non substitué ayant de 5 à 10 atomes de C,
où
R⁶ sont identiques ou différents et sont représentés par H, CH₃, COOM_{c} ou un composé aromatique ou hétéroaromatique substitué ou non substitué ayant de 5 à 10 atomes de C,
où
M est indépendamment l'un de l'autre un ion de métal alcalin, un ion de métal alcalino-terreux, un ion ammonium, un ion ammonium organique et/ou H,
c vaut 1 ou, dans le cas d'ions de métaux alcalino-terreux, 1/2.

46. Formulation selon la revendication 45, **caractérisée en ce que** R⁵ et R⁶ dans l'unité structurelle (X) du composant b), indépendamment l'un de l'autre, sont identiques ou différents et sont représentés par H, COOM_{c} et/ou méthyle.

47. Formulation selon l'une quelconque des revendications 1 à 46, **caractérisée en ce que** le rapport molaire des unités structurelles [(VII) + (VIII) + (IX)]:(X) dans le composant b) va de 1:0,8 à 3.

48. Formulation selon l'une quelconque des revendications 1 à 47, **caractérisée en ce que** le rapport molaire des unités structurelles (VII):[(VIII) + (IX)] dans le composant b) va de 1:15 à 15:1 et préférablement de 1:10 à 10:1.

49. Formulation selon l'une quelconque des revendications 1 à 48, **caractérisée en ce que** le rapport molaire des unités structurelles (VIII):(IX) dans le composant b) va de 1:0,005 à 1:10.

50. Formulation selon l'une quelconque des revendications 1 à 49, **caractérisée en ce que** le produit de polycondensation b) est présent dans une solution aqueuse qui contient de 2 à 90% en poids d'eau et de 98 à 10% en poids de matière sèche solubilisée.

51. Formulation selon l'une quelconque des revendications 1 à 50, **caractérisée en ce que** le composant a) est présent selon des proportions allant de 5 à 95% en poids, préférablement de 10 à 60% en poids et particulièrement préférablement de 15 à 40% en poids, dans chaque cas sur la base de la formulation totale.

52. Formulation selon l'une quelconque des revendications 1 à 51, **caractérisée en ce que** le composant b) est présent selon des proportions allant de 5 à 100% en poids, préférablement de 10 à 60% en poids et particulièrement préférablement de 15 à 40% en poids, dans chaque cas sur la base de la formulation totale.

53. Formulation selon l'une quelconque des revendications 1 à 52, **caractérisée en ce qu'**elle contient, outre les composants a) et b), au moins un agent antimousse comme composant c) et/ou un composant d) ayant un effet tensioactif, les composants c) et d) étant structurellement différents l'un de l'autre.

54. Formulation selon la revendication 53, **caractérisée en ce que** le composant antimousse c) est au moins un représentant du groupe constitué par une huile minérale, une huile végétale, une huile de silicone, des émulsions contenant du silicone, un acide gras, un ester d'acide gras, un polysiloxane modifié par voie organique, un ester de borate, un alcoxylate, un copolymère de polyoxyalkylène, un polymère bloc d'oxyde d'éthylène (EO)-oxyde de propylène (PO), un diol acétylénique ayant des propriétés antimousse, un ester d'acide phosphorique de formule P(O) (O-R₈)₃₋ₓ(O-R₉)ₓ où P= phosphore, 0= oxygène et R₈ et R₉ désignent indépendamment l'un de l'autre un groupement C₂₋₂₀-alkyle ou aryle et x= 0, 1 ou 2.

55. Formulation selon l'une ou l'autre parmi les revendications 53 et 54, **caractérisée en ce que** le composant antimousse c) est au moins un représentant de la série constituée par un phosphate de trialkyle, un copolymère de polyoxypropylène et/ou un acétate de glycérol/alcool.

56. Formulation selon l'une quelconque des revendications 53 à 55, **caractérisée en ce que** le composant antimousse c) est le phosphate de triisobutyle.

57. Formulation selon l'une quelconque des revendications 53 à 56, **caractérisée en ce que** le composant antimousse c) représente un mélange d'un phosphate de trialkyle et d'un copolymère de polyoxypropylène.

58. Formulation selon la revendication 53, **caractérisée en ce que** le composant d) est au moins un représentant de la série constituée par un copolymère bloc d'oxyde d'éthylène/oxyde de propylène (EO/PO), un copolymère de styrène/acide maléique, un alcoxylate d'alcool et d'acide gras, un éthoxylate d'alcool R₁₀-(EO)-H où R₁₀= un groupement hydrocarboné aliphatique ayant de 1 à 25 atomes de carbone, un diol acétylénique, un monoalkylpolyalkylène, un nonylphénol éthoxylé, un sulfate d'alkyle, un sulfate d'alkyléther, un sulfonate d'alkyléther ou un carboxylate d'alkyléther.

59. Formulation selon l'une ou l'autre parmi les revendications 53 et 58, **caractérisée en ce que** le composant d) comprend un alcool ayant un groupement polyalkylène, le polyalkylène ayant une longueur de chaîne de carbone allant de 2 à 20 atomes de carbone.

60. Formulation selon la revendication 59, **caractérisée en ce que** le groupement polyalkylène possède une longueur de chaîne de carbone allant de 3 à 12 atomes de carbone.

61. Formulation selon l'une quelconque des revendications 53 et 58 à 60, **caractérisée en ce qu'**elle contient le composant antimousse c) sous forme libre, lié au composant dispersant a) ou sous forme de mélange de ces deux formes.

62. Formulation selon l'une quelconque des revendications 53 à 61, **caractérisée en ce que** le composant antimousse c) est présent selon des quantités allant de 0,01 à 10% en poids et/ou le composant tensioactif d) est présent selon des quantités allant de 0,01 à 10% en poids, dans chaque cas sur la base du poids total de la formulation.

63. Formulation selon l'une quelconque des revendications 53 à 62, **caractérisée en ce que** le composant antimousse c) et/ou tensioactif d), indépendamment l'un de l'autre, sont présents dans chaque cas selon une quantité allant de 0,01 à 5% en poids, dans chaque cas sur la base du poids total de la formulation.

64. Formulation selon l'une quelconque des revendications 1 à 63, **caractérisée en ce que**, outre les composants a) et b) et éventuellement c) et/ou d), elle contient au moins un composé choisi dans la série constituée par un polymère ayant une faible charge, un polymère neutre ou un alcool polyvinylique comme composant e).

65. Formulation selon la revendication 64, **caractérisée en ce qu'**elle contient le composant e) selon des quantités allant de 1 à 50% en poids, préférablement de 5 à 40% en poids et particulièrement préférablement selon des quantités allant de 10 à 30% en poids, dans chaque cas sur la base du poids total de la formulation.

66. Formulation selon l'une ou l'autre parmi les revendications 64 et 65, **caractérisée en ce que** le polymère ayant une faible charge est ramifié et la chaîne latérale est constituée de préférence d'un polyéther et/ou d'un polyester.

67. Formulation selon l'une quelconque des revendications 64 à 66, **caractérisée en ce que** le polymère ayant une faible charge est un éther de polycarboxylate et/ou un ester de polycarboxylate, préférablement ayant des chaînes latérales d'EO et/ou ayant une proportion de carboxylate allant jusqu'à 83% molaire, préférablement jusqu'à 75% molaire.

68. Formulation selon l'une quelconque des revendications 64 à 67, **caractérisée en ce que** le polymère e) ayant une faible charge est composé d'au moins un monomère choisi dans la série constituée par un monoacrylate de polyéther, un monométhacrylate de polyéther, un polyéther monoallyléther, un monomaléate de polyéther, un polyéther monovinylé, ou des mélanges de ceux-ci.

69. Formulation selon la revendication 68, **caractérisée en ce que** le polyéther est un polymère d'oxyde d'alkylène ayant un poids moléculaire allant de 500 à 10 000, préférablement of 750 à 7500 et en particulier de 1000 à 5000.

70. Formulation selon la revendication 69, **caractérisée en ce que** l'oxyde d'alkylène est l'oxyde d'éthylène, l'oxyde de propylène, l'oxyde de butylène, ou des mélanges de ceux-ci.

71. Formulation selon l'une quelconque des revendications 64 à 70, **caractérisée en ce que** le polymère e) ayant une faible charge est composé d'au moins un monomère choisi dans la série constituée par l'acrylate de polypropylène glycol, les méthacrylates de polypropylène glycol, l'acrylate de polyéthylène glycol, le méthacrylate de polyéthylène glycol, le monovinyl éther de polypropylène glycol, le monovinyl éther de polyéthylène glycol, l'acrylate d'alcoxy- ou aryloxy-polyéthylène glycol, les méthacrylates d'alcoxy- ou aryloxy-polyéthylène glycol, le monovinyl éther alcoxy- ou aryloxy-polyéthylène glycol, les acrylates, méthacrylates et monovinyl éthers d'un copolymère bloc ou statistique d'oxyalkylène ou d'oxypropylène, un allyl éther de polypropylène glycol, un allyl éther de polyéthylène glycol, un monomaléate de polyéthylène glycol, un monomaléate de polypropylène glycol, et un mélange quelconque de ceux-ci.

72. Formulation selon l'une quelconque des revendications 64 à 71, **caractérisée en ce que** le polymère e) ayant une faible charge porte un groupement acide carboxylique, choisi préférablement dans la série constituée par l'acide acrylique, l'acide méthacrylique, l'acide maléique, l'acide fumarique, l'acide itaconique ou des anhydrides de ceux-ci.

73. Formulation selon l'une quelconque des revendications 64 à 72, **caractérisée en ce que** le polymère e) ayant une faible charge porte un groupement acide sulfonique choisi dans la série constituée par l'acide 2-acrylamido-2-méthylpropanesulfonique (AMPS), l'acide vinylsulfonique, l'allyl éther d'acide sulfonique, l'acide 2-sulfoéthylméthacrylique, l'acide styrènesulfonique, l'acide méthallylsulfonique, les sels de sodium, potassium et ammonium de ceux-ci et un mélange quelconque de ceux-ci, et en particulier l'AMPS et l'acide vinylsulfonique.

74. Formulation selon l'une quelconque des revendications 64 à 73, **caractérisée en ce que** le polymère neutre e) est composé de synthons de monomères neutres qui sont choisis en particulier dans la série constituée par les acrylates d'alkyle et les méthacrylates d'alkyle et les hydroxyalkyl esters de ceux-ci ayant jusqu'à 5 atomes de carbone, en particulier l'acrylate d'hydroxyéthyle et l'acrylate d'hydroxypropyle ou le méthacrylate d'hydroxyéthyle et le méthacrylate d'hydroxypropyle, et l'acétate de vinyle, la N-vinylpyrrolidone, le N-vinylcaprolactame, le styrène et le méthylstyrène.

75. Formulation selon l'une quelconque des revendications 1 à 74, **caractérisée en ce qu'**elle contient comme autre composant f) supplémentaire une composition contenant du calcium-silicate-hydrate (C-S-H).

76. Formulation selon la revendication 75, **caractérisée en ce que** le C-S-H présente un rapport molaire calcium/silicium (Ca/Si) allant de 0,5 à 2,0, préférablement de 0,7 à 1,8, plus préférablement de 1,6 à 1,7.

77. Formulation selon l'une ou l'autre des revendications 75 ou 76, **caractérisée en ce que** la taille moyenne de particules de C-S-H est inférieure à 10 µm, préférablement inférieure à 1 µm, more préférablement inférieure à 0,2 µm, mesurée par diffusion de la lumière à l'aide d'un équipement Master Sizer 2000 de chez Malvern Company.

78. Formulation selon l'une ou l'autre des revendications 75 ou 76, **caractérisée en ce que** la taille moyenne de particules de C-S-H est supérieure à 0,01 µm, préférablement de 0,1 µm à 1,0 µm, plus préférablement de 0,2 µm à 0,5 µm.

79. Formulation selon l'une des revendications 75 à 78, **caractérisée en ce que** la composition contenant C-S-H peut être préparée par la réaction d'un composé de calcium hydrosoluble avec un composé de silicate hydrosoluble, la réaction du composé de calcium hydrosoluble avec le composé de silicate hydrosoluble étant effectuée en présence d'une solution aqueuse contenant de préférence un copolymère hydrosoluble qui est préférablement un dispersant pour des liants hydrauliques et choisi parmi au moins un représentant du composant a) et/ou b).

80. Formulation selon l'une des revendications 75 à 78, **caractérisée en ce que** la composition contenant C-S-H peut être préparée par la réaction d'un oxyde de calcium, d'un carbonate de calcium et/ou d'un hydroxyde de calcium avec un dioxyde de silicium pendant un broyage, la réaction étant effectuée en présence d'une solution aqueuse contenant de préférence un copolymère hydrosoluble qui est préférablement un dispersant pour des liants hydrauliques et choisi parmi au moins un représentant du composant a) et/ou b).

81. Formulation selon l'une des revendications 1 à 80, **caractérisée en ce qu'**il s'agit d'un liquide ou d'une poudre et préférablement d'une poudre redispersable.

82. Méthode d'utilisation de la formulation selon l'une quelconque des revendications 1 à 81, **caractérisée en ce que** la formulation destinée à contrôler l'aptitude à l'écoulement de suspensions aqueuses est ajoutée à des systèmes contenant des substances chimiques pour construction et en particulier à des suspensions aqueuses contenant des liants hydrauliques et/ou hydrauliques latents, en particulier comme dispersant.

83. Méthode d'utilisation selon la revendication 82, **caractérisée en ce que** la formulation est utilisée comme suspensions aqueuses contenant, comme liant hydraulique, au moins un représentant choisi dans le groupe constitué par les ciments et les composés à base de sulfate de calcium, en particulier le sulfate de calcium semi-hydraté, l'anhydrite ou le gypse.

84. Méthode d'utilisation selon l'une ou l'autre parmi les revendications 82 et 83, **caractérisée en ce que** la formulation est utilisée selon des quantités allant de 0,001 à 8,0% en poids, en particulier de 0,005 à 5,0% en poids, préférablement de 0,01 à 2,0% en poids et particulièrement préférablement de 0,05 à 1,0% en poids, dans chaque cas sur la base de la composition totale de la suspension.

85. Méthode d'utilisation selon l'une ou l'autre parmi les revendications 82 à 84, **caractérisée en ce que** la formulation est utilisée conjointement avec d'autres additifs, mélanges ou compositions, préférablement ayant des propriétés de contrôle d'écoulement et/ou de dispersion, et plus préférablement conjointement avec au moins un dispersant du type de composant a) et/ou un produit de polymérisation b) de la formulation.

86. Méthode d'utilisation selon l'une ou l'autre parmi les revendications 82 à 85, **caractérisée en ce que** la suspension aqueuse est basée sur une composition de mortier sèche ou une composition de revêtement de sol.

87. Méthode d'utilisation selon la revendication 86, **caractérisée en ce que** la composition de revêtement de sol contient du sulfate de calcium, du ciment ou un mélange de ceux-ci, et préférablement est une composition de revêtement de sol autonivelante.
